(19) Europäisches Patentamt
European Patent Office
Office européen des brevets

(11) EP 1 453 994 B1

(12) **EUROPEAN PATENT SPECIFICATION**

(45) Date of publication and mention of the grant of the patent:
**02.05.2007 Bulletin 2007/18**

(21) Application number: **02802874.4**

(22) Date of filing: **05.11.2002**

(51) Int Cl.:
***D01F 6/06*** (2006.01) ***D01F 6/30*** (2006.01)
***D01F 6/46*** (2006.01) ***D01F 8/06*** (2006.01)

(86) International application number:
**PCT/US2002/035716**

(87) International publication number:
**WO 2003/040442 (15.05.2003 Gazette 2003/20)**

(54) **ISOTACTIC PROPYLENE COPOLYMER FIBERS, THEIR PREPARATION AND USE**

FASERN AUS ISOTAKTISCHEM PROPYLENCOPOLYMERISAT, DEREN HERSTELLUNG UND VERWENDUNG

FIBRES DE COPOLYMERE DE PROPYLENE ISOTACTIQUE, PREPARATION ET UTILISATION DE CES DERNIERES

(84) Designated Contracting States:
**AT BE BG CH CY CZ DE DK EE ES FI FR GB GR IE IT LI LU MC NL PT SE SK TR**

(30) Priority: **06.11.2001 US 338881 P**
**05.05.2002 US 380148 P**
**05.05.2002 US 139786**

(43) Date of publication of application:
**08.09.2004 Bulletin 2004/37**

(60) Divisional application:
**06016783.0 / 1 724 379**

(73) Proprietor: **DOW GLOBAL TECHNOLOGIES INC.**
**Midland, Michigan 48674 (US)**

(72) Inventors:
- **STEVENS, James, C.**
  **Richmond, TX 77469-6719 (US)**
- **VANDERLENDE, Daniel, D.**
  **Sugar Land, TX 77479 (US)**
- **CHANG, Andy, C.**
  **Lake Jackson, TX 77566 (US)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
**EP-A- 0 875 609** **WO-A-00/70134**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 453 994 B1

## Description

This application claims the benefit under 35 USC §119(e) of U.S. Provisional Application Nos. 60/338,881 and 60/380,148 filed November 6, 2001 and May 5, 2002, respectively, and USSN 10/139,786 filed May 5, 2002.

This invention relates to fibers. In one aspect, the invention relates to fibers comprising isotactic copolymers of propylene one or more unsaturated comonomers. In yet another aspect, the invention relates to methods of using and articles made from these isotactic propylene copolymers.

Polypropylene in its many and varied forms is a long establish staple of the polymer industry. Depending upon its form, it exhibits a number of desirable properties including toughness (as measured by any of a number of impact tests, e.g., notched Izod, dart drop, etc.), stiffness (as measured by any of a number of modulus tests e.g., Young's), clarity, chemical resistance and heat resistance. Often a particular combination of properties is desired that requires a balancing of various properties against one another (e.g., stiffness against toughness). For applications that require good processing characteristics (e.g., fibers), preferably the polypropylene has a relatively narrow polydisperity or molecular weight distribution (MWD), e.g., less than 3.5.

Many forms of fibers and fabrics have been made from thermoplastics including, as noted above, polypropylene. The properties of the fibers and fabrics are a function, at least in part, of the polymer(s) from and the process(es) by which they are made. Representative of these various polymers, fiber and fabric types, and processes for making the fibers and fabrics are those described in USP 4,076,698, 4,644,045, 4,830,907, 4,909,975, 4,578,414, 4,842,922, 4,990,204, 5,112,686, 5,322,728, 4,425,393, 5,068,141 and 6,190,768.

Crystalline polypropylene has an isotactic structure, and it is readily produced using a Ziegler-Natta (Z-N) or a metallocene catalyst. While metallocene catalysts are effective for producing propylene homo- and copolymers with a high isotactic index and a relatively narrow MWD, to produce high $M_w$, e.g., over 300,000, propylene homo- or copolymers economically with a metallocene catalyst is relatively difficult, especially in a solution process. Moreover, the industry maintains a continuing interest in new polypropylene polymers, particularly those for use in fiber applications.

In a first embodiment, the invention is a fiber comprising an isotactic copolymer of propylene and one or more unsaturated comonomers. These copolymers are characterized in having at least 60 wt% of the units derived from propylene, and between 0.1 and 40 wt% the units derived from the unsaturated comonomer. These copolymers are also characterized as having at least one of the following properties: (i)$^{13}$CNMR peaks corresponding to a regio-error at about 14.6 and about 15.7 ppm, the peaks of about equal intensity, (ii) a B-value greater than 1.4 when the comonomer content, i.e., the units derived from the unsaturated comonomer(s), of the copolymer is at least 3 wt%, (iii) a skewness index, $S_{ix}$, greater than -1.20, (iv) a DSC curve with a $T_{me}$ that remains essentially the same and a $T_{max}$ that decreases as the amount of comonomer, i.e., the units derived from the unsaturated comonomer(s), in the copolymer is increased, and (v) an X-ray diffraction pattern that reports more gamma-form crystals than a comparable copolymer prepared with a Ziegler-Natta (Z-N) catalyst. Typically the polymers of this embodiment are characterized by at least two of these properties. Certain of the polymers of this embodiment are characterized by at least three of these properties, while other polymers of this embodiment are characterized by at least four or even all five of these properties.

With respect to the X-ray property of subparagraph (v) above, a "comparable" copolymer is one having the same monomer composition within 10 wt%, and the same Mw within 10 wt%. For example, if the propylene/ethylene/ 1-hexene copolymer is 9 wt% ethylene and 1 wt% 1-hexene and has a Mw of 250,000, then a comparable polymer would have from 8.1 - 9.9 wt% ethylene, 0.9 - 1.1 wt% 1-hexene, and a Mw between 225,000 and 275,000, prepared with a Ziegler-Natta catalyst.

In a second embodiment, the invention is a fiber comprising a blend of two or more polymers in which at least one polymer is at least one of (i) the propylene/unsaturated comomoner copolymers described in the first embodiment (occasionally referred to as "P/E* copolymer" or a similar term). The amount of each component in the blend can vary widely. The blend may contain any weight percent, based on the total weight of the blend, of either component, and the blend may be either homo- or heterophasic. If the later, the copolymer of the first or second embodiment of this invention can be either the continuous or discontinuous (i.e., dispersed) phase.

For purposes of this disclosure, "P/E copolymer" and similar terms refer to a propylene/ethylene copolymer other than a P/E* copolymer. P/E copolymers comprise 50 weight percent or more propylene while ethylene-propylene copolymers (EP copolymers) comprise 51 weight percent or more ethylene. As here used, "comprise...propylene", "comprise...ethylene" and similar terms mean units derived from propylene, ethylene or the like as opposed to the compounds themselves.

The other polymers in the blend of this second embodiment is any polymer other than a P/E* polymer. Typically and preferably, this other polymer(s) is (are) a polyolefin such as one or more of a polyethylene, ethylene/α-olefin, butylene/α-olefin, ethylene/styrene and the like. The blend may contain any weight percent, based on the total weight of the blend, of either component, and the blend may be either homo- or heterophasic. If the latter, the propylene homopolymer can be either the continuous or dispersed phase.

Other embodiments of the invention include articles made from the inventive fibers and the processes of making

these articles. Fibers of this invention have applications such as chemical separation membranes, dust masks, carpets, elastic fabrics, synthetic hair, hygiene products (e.g, diapers, feminine products, adult incontinence articles, wipes), apparel such as athletic sportswear and wrinkle-free and form-fitting apparel, shin pads, upholstery, and medical applications such as bandages and sterilizable medical apparel and instrument wraps including surgical masks, gowns, bandages and packaging products for medical instruments.

Figure 1 illustrates the unusual comonomer distribution of a propylene/ethylene (P/E*) copolymer made with a metal-centered, heteroaryl ligand catalyst.
Figures 2A and 2B show a comparison of the DSC heating traces of the propylene/ethylene (P/E) copolymer of Comparative Example 1 and the P/E* copolymer of Example 2, respectively.
Figure 3 shows a comparison of the Tg data of a P/E* copolymer and a conventional Ziegler-Natta (Z-N) catalyzed P/E copolymer at equivalent crystallinity.
Figure 4 shows a comparison of the Tg data of a P/E* copolymer and a conventional constrained geometry catalyst (CGC) P/E copolymer at the same ethylene content.
Figure 5 shows a comparison of a TREF curve for a conventional metallocene-catalyzed P/E copolymer and a P/E* copolymer.
Figure 6 shows the $^{13}$C NMR Spectrum of the P/E* copolymer product of Example 2 prepared using Catalyst G.
Figure 7 shows the $^{13}$C NMR Spectrum of the P/E copolymer product of Comparative Example 1 prepared using metallocene Catalyst E demonstrating the absence of regio-error peaks in the region around 15 ppm.
Figure 8 is a bar graph comparing the elasticity of unstretched P/E* copolymers against various conventional unstretched thermoplastic elastomers.
Figure 9 is a bar graph comparing the elasticity of pre-stretched P/E* copolymers against various conventional pre-stretched thermoplastic elastomers.
Figures 10A-10J show the chemical structures of various catalysts.
Figure 11 shows a comparison of the skewness index for a P/E* copolymer and several P/E copolymers.
Figure 12 compares the melting endotherms of Samples 8 and 22a of Example 9.
Figure 13 demonstrates the shift in peak melting temperature towards lower temperature for the P/E* copolymer of Example 9.
Figure 14 is a plot of the temperature at which approximately 1 percent crystallinity remains in DSC samples of Example 9.
Figure 15 shows the variance relative to the first moment of the melting endotherm as a function of the heat of melting of various samples of Example 9.
Figure 16 shows the maximum heat flow normalized by the heat of melting as a function of the heat of melting for various samples of Example 9.
Figure 17 illustrates that the rate at which the last portion of crystallinity disappears in P/E* polymers is significantly lower than for metallocene-catalyzed polymers.
Figure 18 illustrates that at similar percent crystallinity, a P/E* fiber has better elasticity than a metallocene-catalyzed E/O fibers
Figure 19 illustrates the tenacity for three different yarnds tested in Example 11.
Figure 20 illustrates the elongation-at-break for three different yarns tested in Example 11.
Figure 21 is an endotherm plot of the samples reported in Table 11.

Polydispersity

The polydispersity of P/E* polymers used in the fibers of this invention is typically between 2 and 6. "Narrow Polydisperity", "narrow molecular weight distribution", "narrow MWD" and similar terms mean a ratio ($M_w/M_n$) of weight average molecular weight ($M_w$) to number average molecular weight ($M_n$) of less than 3.5, preferably less than 3.0, more preferably less than 2.8, more preferably less than 2.5, and most preferably less than 2.3. Polymers for use in fiber applications typically have a narrow polydispersity.

Blends comprising the P/E* polymers may have a higher polydispersity, depending on the molecular weight of the other components of the blend. In particular, blends produced utilizing any of the multiple reactor processes disclosed in the present invention may have a broad range of polydispersities, from as low as 2 to as high as 100 or more. Preferably, the $M_w/M_n$ of such blends is between 2 and 50, more preferably between 2 and 20, most preferably between 2 and 10.

Gel Permeation Chromatography

Molecular weight distribution of the crystallizable propylene polymers is determined using gel permeation chromatography (GPC) on a Polymer Laboratories PL-GPC-220 high temperature chromatographic unit equipped with four linear mixed bed columns (Polymer Laboratories (20-micron particle size)). The oven temperature is at 160˚C with the autosampler hot zone at 160˚C and the warm zone at 145˚C. The solvent is 1,2,4-trichlorobenzene containing 200 ppm 2,6-di-t-butyl-4-methylphenol. The flow rate is 1.0 milliliter/minute and the injection size is 100 microliters. About 0.2% by weight solutions of the samples are prepared for injection by dissolving the sample in nitrogen purged 1,2,4-trichlorobenzene containing 200 ppm 2,6-di-t-butyl-4-methylphenol for 2.5 hrs at 160˚C with gentle mixing.

The molecular weight determination is deduced by using ten narrow molecular weight distribution polystyrene standards (from Polymer Laboratories, EasiCal PS1 ranging from 580 - 7,500,000 g/mole) in conjunction with their elution volumes. The equivalent polypropylene molecular weights are determined by using appropriate Mark-Houwink coefficients for polypropylene (as described by Th.G. Scholte, N.L.J. Meijerink, H.M. Schoffeleers, and A.M.G. Brands, J. Appl. Polym. Sci., 29, 3763 - 3782 (1984)) and polystyrene (as described by E. P. Otocka, R. J. Roe, N. Y. Hellman, P. M. Muglia, Macromolecules, 4, 507 (1971)) in the Mark-Houwink equation:

$$\{N\} = KM^a$$

where $K_{pp=}$1.90E-04, $a_{pp=}$0.725 and $K_{ps=}$1.26E-04, $a_{ps=}$0.702.

Differential Scanning Calorimetry

Differential scanning calorimetry (DSC) is a common technique that can be used to examine the melting and crystallization of semi-crystalline polymers. General principles of DSC measurements and applications of DSC to studying semi-crystalline polymers are described in standard texts (e.g., E. A. Turi, ed., *Thermal Characterization of Polymeric Materials,* Academic Press, 1981). Certain of the copolymers used in the practice of this invention are characterized by a DSC curve with a $T_{me}$ that remains essentially the same and a $T_{max}$ that decreases as the amount of unsaturated comonomer in the copolymer is increased. $T_{me}$ means the temperature at which the melting ends. $T_{max}$ means the peak melting temperature.

Differential Scanning Calorimetry (DSC) analysis is determined using a model Q1000 DSC from TA Instruments, Inc. Calibration of the DSC is done as follows. First, a baseline is obtained by running the DSC from -90˚C to 290˚C without any sample in the aluminum DSC pan. Then 7 milligrams of a fresh indium sample is analyzed by heating the sample to 180˚C, cooling the sample to 140˚C at a cooling rate of 10˚C/min followed by keeping the sample isothermally at 140˚C for 1 minute, followed by heating the sample from 140˚C to 180˚C at a heating rate of 10˚C/min. The heat of fusion and the onset of melting of the indium sample are determined and checked to be within 0.5˚C from 156.6˚C for the onset of melting and within 0.5 J/g from 28.71 J/g for the heat of fusion. Then deionized water is analyzed by cooling a small drop of fresh sample in the DSC pan from 25˚C to -30˚C at a cooling rate of 10˚C/min. The sample is kept isothermally at -30˚C for 2 minutes and heated to 30˚C at a heating rate of 10˚C/min. The onset of melting is determined and checked to be within 0.5˚C from 0˚C.

The polypropylene samples are pressed into a thin film at a temperature of 190˚C. 5 to 8 mg of sample is weighed out and placed in the DSC pan. The lid is crimped on the pan to ensure a closed atmosphere. The sample pan is placed in the DSC cell and the heated at a high rate of about 100˚C/min to a temperature of about 30˚C above the melt temperature. The sample is kept at this temperature for about 3 minutes. Then the sample is cooled at a rate of 10˚C/min to -40˚C, and kept isothermally at that temperature for 3 minutes. Consequently the sample is heated at a rate of 10˚C/min until complete melting. The resulting enthalpy curves are analyzed for peak melt temperature, onset and peak crystallization temperatures, heat of fusion and heat of crystallization, $T_{me}$, and any other DSC analyses of interest.

B-Value

"High B-value" and similar terms mean the ethylene units of a copolymer of propylene and ethylene, or a copolymer of propylene, ethylene and at least one unsaturated comononomer, is distributed across the polymer chain in a nonrandom manner. B-values range from 0 to 2 with 1 designating a perfectly random distribution of comonomer units. The higher the B-value, the more alternating the comonomer distribution in the copolymer. The lower the B-value, the more blocky or clustered the comonomer distribution in the copolymer. The high B-values of the polymers of this invention are typically at least 1.3, preferably at least 1.4, more preferably at least 1.5 and most preferably at least 1.7. The B-value is calculated as follows.

B is defined for a propylene/ethylene copolymer as:

$$B = \frac{f(EP + PE)}{2 \bullet F_E \bullet F_P}$$

where f(EP + PE) = the sum of the EP and PE diad fractions; and Fe and Fp = the mole fraction of ethylene and propylene in the copolymer, respectively. B-values can be calculated for other copolymers in an analogous manner by assignment of the respective copolymer diads. For example, calculation of the B-value for a propylene/1-octene copolymer uses the following equation:

$$B = \frac{f(OP + PO)}{2 \bullet F_O \bullet F_P}$$

For propylene polymers made with a metallocene catalyst, the B-values are typically between 1.1 and 1.3. For propylene polymers made with a constrained geometry catalyst, the B-values are typically between 0.9 and 1.0. In contrast, the B-values of the propylene polymers of this invention, typically made with an activated nonmetallocene, metal-centered, heteroaryl ligand catalyst, are above 1.4, typcially between 1.5 and 1.85. In turn, this means that for any P/E* copolymer, not only is the propylene block length relatively short for a given percentage of ethylene but very little, if any, long sequences of 3 or more sequential ethylene insertions are present in the copolymer, unless the ethylene content of the polymer is very high. Figure 1 and the data of the following tables are illustrative. The catalysts are activated nonmetallocene, metal-centered, heteroaryl ligand catalysts, and these made P/E* polymers. The Catalyst E is a metallocene catalyst, and it did not make the P/E* polymers. Interestingly, the B-values of the P/E* polymers remained high even for polymers with relatively large amounts, e.g., >30 mole %, ethylene.

Table A: B-Values of Selected Propylene Polymers

| Number | Description | MFR (g/10min) | Density (kg/dm 3#) | Ethylene (mol%) | Regio-errors 14-16 ppm (mole %) (average of two) | B | Tmax (˚C) | Cryst (%) (from Hf) | Tg (˚C) |
|---|---|---|---|---|---|---|---|---|---|
| A-1 | P/E* via Catalyst I | 25.8 | 0.8864 | 10.6 | 0.00 | 1.40 | 104.7 | 37.3 | -20.9 |
| A-2 | P/E* via Catalyst G | 1.7 | 0.8740 | 11.8 | 0.24 | 1.67 | 63.3 | 24.4 | -23.6 |
| A-3 | P/E* via Catalyst G | 1.5 | 0.8703 | 12.9 | 0.32 | 1.66 | 57.7 | 21.9 | -24.5 |
| A-4 | P/E* via Catalyst H | 1.9 | 0.8928 | 4.3 | 0.57 | 1.77 | 120.6 | 48.3 | -13.8 |
| A-5 | P/E* via Catalyst H | 2.2 | 0.8850 | 8.2 | 0.47 | 1.71 | 96.0 | 40.5 | -19.3 |
| A-6 | P/E* via Catalyst H | 2.3 | 0.8741 | 11.8 | 0.34 | 1.79 | 67.9 | 27.4 | -23.7 |
| A-7 | P/E* via Catalyst H | 2 | 0.8648 | 15.8 | 0.24 | 1.67 | 53.7 | 10.5 | -27.6 |
| A-8 | P/E* via Catalyst H | 2.0 | 0.8581 | 18.6 | 0.18 | 1.70 | None | 2.6 | -29.9 |
| Catalyst I is dimethyleamidoborane-bis-$\eta^5$-(2-methyl-4-napthylinden-1-yl)zirconium $\eta^4$-1,4,-dipheny-1,3-butadiene. | | | | | | | | | |

Table B: B-Values of Selected Propylene/Ethylene Copolymers

| Number | Description | Ethylene (mol%) | Regio-errors 14-16 ppm (mole %) (average of two) | B | Tmax (˚C) | Cryst. (%) (from Hf) | Tg (˚C) |
|---|---|---|---|---|---|---|---|
| B-1 | P/E* via Catalyst H | 1.6 | 0.37 | 1.78 | 138.2 | 53.9 | -8.1 |
| B-2 | P/E* via Catalyst H | 7.7 | 0.38 | 1.66 | 105.6 | 38.9 | -18.5 |
| B-3 | P/E* via Catalyst H | 7.8 | 0.41 | 1.61 | 107.7 | 39.6 | -18.2 |
| B-4 | P/E* via Catalyst H | 12.3 | 0.31 | 1.58 | 74.7 | 30.7 | -22.5 |
| B-5 | P/E‡ via Catalyst H | 14.8 | 0.21 | 1.67 | 90.6 | 31.2 | -22.9 |
| B-6 | P/E‡ via Catalyst H | 12.4 | 0.31 | 1.61 | 67.4 | 20.8 | -26.8 |
| B-7 | P/E‡ via Catalyst H | 14.7 | 0.30 | 1.60 | 78.1 | 19.9 | -25.9 |
| B-8 | P/E‡ via Catalyst H | 33.7 | 0.00 | 1.67 | none | 0.0 | -39.2 |
| B-9 | P/E‡ via Catalyst H | 31.3 | 0.00 | 1.67 | none | 0.0 | -39.2 |
| B-10 | P/E‡ via Catalyst J | 12.0 | 0.25 | 1.61 | 72.4 | 33.2 | -22.8 |
| B-11 | P/E‡ via Catalyst J | 8.9 | 0.37 | 1.63 | 91.4 | 40.1 | -19.8 |
| B-12 | P/E‡ via Catalyst J | 8.5 | 0.44 | 1.68 | 101.7 | 38.7 | -20.0 |
| B-13 | P/E‡ via Catalyst J | 7.6 | 0.47 | 1.68 | 107.6 | 43.2 | -18.8 |
| B-14 | P/E‡ via Catalyst J | 7.6 | 0.35 | 1.64 | 106.2 | 42.4 | -1S.5 |
| B-15 | P/E‡ via Catalyst J | 8.6 | 0.33 | 1.64 | 104.4 | 41.0 | -19.5 |
| B-16 | P/E‡ via Catalyst J | 9.6 | 0.35 | 1.65 | 85.5 | 38.1 | -20.6 |
| B-17 | P/E‡ via Catalyst J | 8.6 | 0.37 | 1.63 | 104.1 | 41.8 | -19.6 |
| B-18 | P/E‡ via Catalyst J | 8.6 | 0.34 | 1.62 | 90.8 | 40.8 | -19.6 |
| B-19 | P/E‡ via Catalyst J | 8.6 | 0.40 | 1.58 | 93.3 | 41.9 | -19.2 |

The processes described below can be used to produce propylene interpolymers of ethylene and optionally $C_4$-$C_{20}$ alpha-olefins having a relatively broad melting point in a DSC heating curve. While not wishing to be held to any

particular theory of operation, it is believed that the high B values for the novel propylene/ethylene interpolymers and the process for their manufacture lead to an ethylene distribution within the polymer chains that leads to a broad melting behavior. In Figures 2A and 2B, for example, a relatively narrow melting peak is observed for a propylene/ethylene copolymer prepared using a metallocene as a comparative example (Comparative Example 1), while the melting peak for a similar copolymer of propylene and ethylene prepared according to the teachings herein exhibits a broad melting point. Such broad melting behavior is useful in applications requiring, for example, a relatively low heat seal initiation temperature, or a broad hot tack and/or heat seal window.

Thermal Properties

Figures 3 and 4 further illustrate the thermal properties of the P/E* polymers used in the practice of this invention. Figure 3 illustrates that the P/E* polymers have a higher glass transition temperaure (Tg) than do comparable metallocene-catalysed propylene polymers at a equivalent crystallinity. This means that the P/E* copolymers are likely to exhibit better creep resistance than conventional metallocene-catalyzed propylene copolymers. Moreover, the $T_{max}$ data of Table A shows that the P/E* copolymers have a lower melting point at the same crystallinity as a metallocene-catalyzed propylene copolymer. This, in turn, means that the P/E* polymers are likely to process better (e.g., require less heating) than conventional metallocene-catalyzed propylene polymers.

Figure 4 illustrates that the P/E* polymers also have a lower Tg at an equivalent ethylene content than a propylene polymer made with a constrained geometry catalyst (CGC) and this, in turn, means that the P/E* polymers are likely to exhibit better low temperature toughness than the CGC propylene polymers making the P/E* polymers attractive candidates for food packaging applications.

Temperature-Rising Elution Fractionation

The determination of crystallizable sequence length distribution can be accomplished on a preparative scale by temperature-rising elution fractionation (TREF). The relative mass of individual fractions can be used as a basis for estimating a more continuous distribution. L. Wild, et al., *Journal of Polymer Science: Polymer. Physics Ed.,* 20, 441 (1982), scaled down the sample size and added a mass detector to produce a continuous representation of the distribution as a function of elution temperature. This scaled down version, analytical temperature-rising elution fractionation (ATREF), is not concerned with the actual isolation of fractions, but with more accuractely determining the weight distribution of fractions.

While TREF was originally applied to copolymers of ethylene and higher α-olefins, it can also be used for the analysis of copolymers of propylene with ethylene (or higher α-olefins). The analysis of copolymers of propylene requires higher temperatures for the dissolution and crystallization of pure, isotactic polypropylene, but most of the copolymerization products of interest elute at similar temperatures as observed for copolymers of ethylene. The following table is a summary of conditions used for the analysis of copolymers of propylene. Except as noted the conditions for TREF are consistent with those of Wild, et al., i*bid,* and Hazlitt, *Journal of Applied Polymer Science: Appl. Polym. Symp.,* 45, 25 (1990).

Table C: Parameters Used for TREF

| Parameter | Explanation |
|---|---|
| Column type and size | Stainless steel shot with 1.5 cc interstitial volume |
| Mass detector | Single beam infrared detector at 2920 $cm^{-1}$ |
| Injection temperature | 150˚C |
| Temperature control device | GC oven |
| Solvent | 1,2,4-trichlorobenzene |
| Concentration | 0.1 to 0.3 % (weight/weight) |
| Cooling Rate 1 | 140˚C to 120˚C @ -6.0˚C/min. |
| Cooling Rate 2 | 120˚C to 44.5˚C @ -0.1˚C/min. |
| Cooling Rate 3 | 44.5˚C to 20˚C @ -0.3˚C/min. |
| Heating Rate | 20˚C to 140˚C @ 1.8˚C/min. |
| Data acquisition rate | 12 / min. |

The data obtained from TREF are expressed as a normalized plot of weight fraction as a function of elution temperature. The separation mechanism is analogous to that of copolymers of ethylene, whereby the molar content of the crystallizable component (ethylene) is the primary factor that determines the elution temperature. In the case of copolymers of propylene, it is the molar content of isotactic propylene units that primarily determines the elution temperature. Figure 5 is a representation of the typical type of distribution one would expect for a propylene/ethylene copolymer made with a metallocene polymer and an example of a P/E* copolymer.

The shape of the metallocene curve in Figure 5 is typical for a homogeneous copolymer. The shape arises from the inherent, random incorporation of comonomer. A prominent characteristic of the shape of the curve is the tailing at lower elution temperature compared to the sharpness or steepness of the curve at the higher elution temperatures. A statistic that reflects this type of assymetry is skewness. Equation 1 mathematically represents the skewness index, $S_{ix}$, as a measure of this asymmetry.

Equation 1.

$$S_{ix} = \frac{\sqrt[3]{\sum w_i * (T_i - T_{Max})^3}}{\sqrt{\sum w_i * (T_i - T_{Max})^2}}$$

The value, $T_{Max}$, is defined as the temperature of the largest weight fraction eluting between 50 and 90°C in the TREF curve. $T_i$ and $w_i$ are the elution temperature and weight fraction respectively of an abitrary, $i^{th}$ fraction in the TREF distribution. The distributions have been normalized (the sum of the $w_i$ equals 100%) with respect to the total area of the curve eluting above 30°C. Thus, the index reflects only the shape of the crystallized polymer and any uncrystallized polymer (polymer still in solution at or below 30°C) has been omitted from the calculation shown in Equation 1.

Polymer Definitions and Descriptions

"Polymer" means a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, although it is often used interchangeably with "interpolymer" to refer to polymers made from three or more different types of monomers or comonomers), terpolymers (which usually refers to polymers prepared from three different types of monomers or comonomers), tetrapolymers (which usually refers to polymers prepared from four different types of monomers or comonomers), and the like. The terms "monomer" or "comonomer" are used interchangeably, and they refer to any compound with a polymerizable moiety which is added to a reactor in order to produce a polymer. In those instances in which a polymer is described as comprising one or more monomers, e.g., a polymer comprising propylene and ethylene, the polymer, of course, comprises units derived from the monomers, e.g., $-CH_2-CH_2-$, and not the monomer itself, e.g., $CH_2=CH_2$.

"Metallocene-catalyzed polymer" or similar term means any polymer that is made in the presence of a metallocene catalyst. "Constrained geometry catalyst catalyzed polymer", "CGC-catalyzed polymer" or similar term means any polymer that is made in the presence of a constrained geometry catalyst. "Ziegler-Natta-catalyzed polymer", Z-N-catalyzed polymer" or similar term means any polymer that is made in the presence of a Ziegler-Natta catalyst. "Metallocene" means a metal-containing compound having at least one substituted or unsubstituted cyclopentadienyl group bound to the metal. "Constrained geometry catalyst" or "CGC" as here used has the same meaning as this term is defined and described in USP 5,272,236 and 5,278,272.

"Random copolymer" means a copolymer in which the monomer is randomly distributed across the polymer chain.

"Propylene homopolymer" and similar terms mean a polymer consisting solely or essentially all of units derived from propylene. "Polypropylene copolymer" and similar terms mean a polymer comprising units derived from propylene and ethylene and/or one or more unsaturated comonomers. The term "copolymer" includes terpolymers, tetrapolymers, etc.

The unsaturated comonomers used in the practice of this invention include, $C_{4-20}$ $\alpha$-olefins, especially $C_{4-12}$ $\alpha$-olefins such as 1-butene, 1-pentene, 1-hexene, 4-methyl-1-pentene, 1-heptene, 1-oetene, 1-decene, 1-dodecene and

the like; $C_{4-20}$ diolefins, preferably 1,3-butadiene, 1,3-pentadiene, norbornadiene, 5-ethylidene-2-norbornene (ENB) and dicyclopentadiene; $C_{8-40}$ vinyl aromatic compounds including sytrene, o-, m-, and p-methylstyrene, divinylbenzene, vinylbiphenyl, vinylnapthalene; and halogen-substituted $C_{8-40}$ vinyl aromatic compounds such as chlorostyrene and fluorostyrene. For purposes of this invention, ethylene and propylene are not included in the definition of unsaturated comonomers.

The propylene copolymers used in the practice of this invention typically comprise units derived from propylene in an amount of at least 60, preferably at least 80 and more preferably at least 85, wt% of the copolymer. The typical amount of units derived from ethylene in propylene/ethylene copolymers is at least 0.1, preferably at least 1 and more preferably at least 5 wt%, and the maximum amount of units derived from ethylene present in these copolymers is typically not in excess of 35, preferably not in excess of 30 and more preferably not in excess of 20, wt% of the copolymer. The amount of units derived from the unsaturated comonomer(s), if present, is typically at least 0.01, preferably at least 1 and more preferably at least 5, wt%, and the typical maximum amount of units derived from the unsaturated comonomer (s) typically does not exceed 35, preferably it does not exceed 30 and more preferably it does not exceed 20, wt% of the copolymer. The combined total of units derived from ethylene and any unsaturated comonomer typically does not exceed 40, preferably it does not exceed 30 and more preferably it does not exceed 20, wt% of the copolymer.

The copolymers used in the practice of this invention comprising propylene and one or more unsaturated comonomers (other than ethylene) also typically comprise units derived from propylene in an amount of at least 60, preferably at least 70 and more preferably at least 80, wt% of the copolymer. The one or more unsaturated comonomers of the copolymer comprise at least 0.1, preferably at least 1 and more preferably at least 3, weight percent, and the typical maximum amount of unsaturated comonomer does not exceed 40, and preferably it does not exceed 30, wt% of the copolymer.

<u>$^{13}$C NMR</u>

The P/E* polymers used in the practice of this invention are further characterized as having substantially isotactic propylene sequences. "Substantially isotactic propylene sequences" and similar terms mean that the sequences have an isotactic triad (mm) measured by $^{13}$C NMR of greater than 0.85, preferably greater than 0.90, more preferably greater than 0.92 and most preferably greater than 0.93. Isotactic triads are well known in the art and are described in, for example, USP 5,504,172 and WO 00/01745 which refer to the isotactic sequence in terms of a triad unit in the copolymer molecular chain determined by $^{13}$C NMR spectra. The NMR spectra are determined as follows.

$^{13}$C NMR spectroscopy is one of a number of techniques known in the art of measuring comonomer incorporation into a polymer. An example of this technique is described for the determination of comonomer content for ethylene/α-olefin copolymers in Randall (Journal of Macromolecular Science, Reviews in Macromolecular Chemistry and Physics, C29 (2 & 3), 201 - 317 (1989)). The basic procedure for determining the comonomer content of an olefin interpolymer involves obtaining the $^{13}$C NMR spectrum under conditions where the intensity of the peaks corresponding to the different carbons in the sample is directly proportional to the total number of contributing nuclei in the sample. Methods for ensuring this proportionality are known in the art and involve allowance for sufficient time for relaxation after a pulse, the use of gated-decoupling techniques, relaxation agents, and the like. The relative intensity of a peak or group of peaks is obtained in practice from its computer-generated integral. After obtaining the spectrum and integrating the peaks, those peaks associated with the comonomer are assigned. This assignment can be made by reference to known spectra or literature, or by synthesis and analysis of model compounds, or by the use of isotopically labeled comonomer. The mole % comonomer can be determined by the ratio of the integrals corresponding to the number of moles of comonomer to the integrals corresponding to the number of moles of all of the monomers in the interpolymer, as described in Randall, for example.

The data is collected using a Varian UNITY Plus 400MHz NMR spectrometer, corresponding to a $^{13}$C resonance frequency of 100.4 MHz. Acquisition parameters are selected to ensure quantitative $^{13}$C data acquisition in the presence of the relaxation agent. The data is acquired using gated $^{1}$H decoupling, 4000 transients per data file, a 7sec pulse repetition delay, spectral width of 24,200Hz and a file size of 32K data points, with the probe head heated to 130˚C. The sample is prepared by adding approximately 3mL of a 50/50 mixture of tetrachloroethane-d2/orthodichlorobenzene that is 0.025M in chromium acetylacetonate (relaxation agent) to 0.4g sample in a 10mm NMR tube. The headspace of the tube is purged of oxygen by displacement with pure nitrogen. The sample is dissolved and homogenized by heating the tube and its contents to 150˚C with periodic refluxing initiated by heat gun.

Following data collection, the chemical shifts are internally referenced to the mmmm pentad at 21.90 ppm.

For propylene/ethylene copolymers, the following procedure is used to calculate the percent ethylene in the polymer. Integral regions are determined as follows:

Table D: Integral Regions for Determining % Ethylene

| Region Designation | ppm |
|---|---|
| A | 44 - 49 |
| B | 36 - 39 |
| C | 32.8 - 34 |
| P | 31.0-30.8 |
| Q | Peak at 30.4 |
| R | Peak at 30 |
| F | 28.0 - 29.7 |
| G | 26 - 28.3 |
| H | 24 - 26 |
| I | 19-23 |

Region D is calculated as D = P x (GxQ)/2. Region E = R + Q + (GxQ)/2.

Table E: Calculation of Region D

PPP = (F + A - 0.5 D) / 2
PPE = D
EPE = C
EEE=(E-0.5 G)/2
PEE = G
PEP = H

Moles P=sum P centered triads
Moles E=sum E centered triads

Moles P = (B + 2A) /2
Moles E = (E+G+0.5B+H)/2

C2 values are calculated as the average of the two methods above (triad summation and algebraic) although the two do not usually vary.

The mole fraction of propylene insertions resulting in regio-errors is calculated as one half of the sum of the two of methyls showing up at 14.6 and 15.7 ppm divided by the total methyls at 14-22 ppm attributable to propylene. The mole percent of the regio-error peaks is the mole fraction times 100.

Isotacticity at the triad level (mm) is determined from the integrals of the mm triad (22.70-21.28 ppm), the mr triad (21.28-20.67 ppm) and the rr triad (20.67-19.74). The mm isotacticity is determined by dividing the intensity of the mm triad by the sum of the mm, mr, and rr triads. For ethylene copolymers the mr region is corrected by subtracting 37.5-39 ppm integral. For copolymers with other monomers that produce peaks in the regions of the mm, mr, and rr triads, the integrals for these regions are similarly corrected by subtracting the intensity of the interfering peak using standard NMR techniques, once the peaks have been identified. This can be accomplished, for example, by analysis of a series of copolymers of various levels of monomer incorporation, by literature assignments, by isotopic labeling, or other means which are known in the art.

The $^{13}C$ NMR peaks corresponding to a regio-error at 14.6 and 15.7 ppm are believed to be the result of stereoselective 2,1-insertion errors of propylene units into the growing polymer chain. In a typical P/E* polymer, these peaks are of about equal intensity, and they represent 0.02 to 7 mole percent of the propylene insertions into the homopolymer or copolymer chain. For some embodiments, they represent 0.005 to 20 mole % or more of the propylene insertions. In general, higher levels of regio-errors lead to a lowering of the melting point and the modulus of the polymer, while lower levels lead to a higher melting point and a higher modulus of the polymer.

The nature and level of comonomers other than propylene also control the melting point and modulus of the copolymer. In any particular application, it may be desirable to have either a high or low melting point or a high or low modulus modulus. The level of regio-errors can be controlled by several means, including the polymerization temperature,

the concentration of propylene and other monomers in the process, the type of (co)monomers, and other factors. Various individual catalyst structures may inherently produce more or less regio-errors than other catalysts. For example, in Table A above, the propylene homopolymer prepared with Catalyst G has a higher level of regio-errors and a lower melting point than the propylene homopolymer prepared with Catalyst H, which has a higher melting point. If a higher melting point (or higher modulus) polymer is desired, then it is preferable to have fewer regio-errors than 3 mole % of the propylene insertions, more preferably less than 1.5 mole % of the propylene insertions, still more preferably less than 1.0 mole % of the propylene insertions, and most preferably less than 0.5 mole % of the propylene insertions. If a lower melting point (or modulus) polymer is desired, then it is preferable to have more regio-errors than 3 mole % of the propylene insertions, more preferably more than 5 mole % of the propylene insertions, still more preferably more than 6 mole % of the propylene insertions, and most preferably more than 10 mole % of the propylene insertions.

Those skilled artisan will appreciate that the mole % of regio-errors for a P/E* polymer which is a component of a blend refers to the mole % of regio-errors of the particular P/E* polymer component of the blend, and not as a mole % of the overall blend.

The comparison of several $^{13}C$ NMR sprectra further illustrates the unique regio-errors of the P/E* polymers. Figure 6 is the $^{13}C$ NMR spectrum of the propylene-ethylene copolymer of Example 2, and it reports a high degree of isotacticity and the same regio-errors of the propylene homopolymers of Figure 7. The presence of the ethylene comonomer does not preclude the occurrence of these unique regio-errors. The $^{13}C$ NMR spectrum of Figure 7 is that of the propylene-ethylene copolymer product of Comparative Example 1 which was prepared using a metallocene catalyst. This spectrum does not report the regio-error (around 15 ppm) characteristic of the P/E* polymers.

## Melt Flow Rate (MFR)

The propylene homo- and copolymers used in the practice of this invention typically have an MFR of at least 1, preferably at least 2, more preferably at least 5 and most preferably at least 10. The maximum MFR typically does not exceed 1,500, preferably it does not exceed 1,000, more preferably it does not exceed 400, more preferably it does not exceed 1000 and most preferably it does not exceed 50. The MFR for propylene homopolymers and copolymers of propylene and ethylene and/or one or more $C_4$-$C_{20}$ $\alpha$ olefins is measured according to ASTM D-1238, condition L (2.16 kg, 230 degrees C).

## Propylene Copolymers

The propylene copolymers used in the practice of this invention of particular interest include propylene/ethylene, propylene/1-butene, propylene/1-hexene, propylene/4-methyl-1-pentene, propylene/1-octene, propylene/ethylene/1-butene, propylene/ethylene/ENB, propylene/ethylene/1-hexene, propylene/ethylene/1-octene, propylene/styrene, and propylene/ethylene/styrene.

## Catalyst Definitions and Descriptions

The P/E* polymers used in the practice of this invention are made using a metal-centered, heteroaryl ligand catalyst in combination with one or more activators, e.g., an alumoxane. In certain embodiments, the metal is one or more of hafnium and zirconium.

More specifically, in certain embodiments of the catalyst, the use of a hafnium metal has been found to be preferred as compared to a zirconium metal for heteroaryl ligand catalysts. A broad range of ancillary ligand substituents may accommodate the enhanced catalytic performance. The catalysts in certain embodiments are compositions comprising the ligand and metal precursor, and, optionally, may additionally include an activator, combination of activators or activator package.

The catalysts used to make the P/E* polymers additionally include catalysts comprising ancillary ligand-hafnium complexes, ancillary ligand-zirconium complexes and optionally activators, which catalyze polymerization and copolymerization reactions, particularly with monomers that are olefins, diolefins or other unsaturated compounds. Zirconium complexes, hafnium complexes, compositions or compounds using the disclosed ligands are within the scope of the catalysts useful in the practice of this invention. The metal-ligand complexes may be in a neutral or charged state. The ligand to metal ratio may also vary, the exact ratio being dependent on the nature of the ligand and metal-ligand complex. The metal-ligand complex or complexes may take different forms, for example, they may be monomeric, dimeric or of an even higher order.

"Nonmetallocene" means that the metal of the catalyst is not attached to a substituted or unsubstituted cyclopentadienyl ring. Representative nonmetallocene, metal-centered, heteroarly ligand catalysts are described in U.S. Provisional Patent Application Nos. 60/246,781 filed November 7, 2000 and 60/301,666 filed June 28, 2001.

As here used, "nonmetallocene, metal-centered, heteroaryl ligand catalyst" means the catalyst derived from

the ligand described in formula I. As used in this phrase, "heteroaryl" includes substituted heteroaryl.

As used herein, the phrase "characterized by the formula" is not intended to be limiting and is used in the same way that "comprising" is commonly used. The term "independently selected" is used herein to indicate that the R groups, e.g., $R^1$, $R^2$, $R^3$, $R^4$, and $R^5$ can be identical or different (e.g. $R^1$, $R^2$, $R^3$, $R^4$, and $R^5$ may all be substituted alkyls or $R^1$ and $R^1$ may be a substituted alkyl and $R^3$ may be an aryl, etc.). Use of the singular includes use of the plural and vice versa (e.g., a hexane solvent, includes hexanes). A named R group will generally have the structure that is recognized in the art as corresponding to R groups having that name. The terms "compound" and "complex" are generally used interchangeably in this specification, but those of skill in the art may recognize certain compounds as complexes and vice versa. For the purposes of illustration, representative certain groups are defined herein. These definitions are intended to supplement and illustrate, not preclude, the definitions known to those of skill in the art.

"Hydrocarbyl" refers to univalent hydrocarbyl radicals containing 1 to 30 carbon atoms, preferably 1 to 24 carbon atoms, most preferably 1 to 12 carbon atoms, including branched or unbranched, saturated or unsaturated species, such as alkyl groups, alkenyl groups, aryl groups, and the like. "Substituted hydrocarbyl" refers to hydrocarbyl substituted with one or more substituent groups, and the terms "heteroatom-containing hydrocarbyl" and "heterohydrocarbyl" refer to hydrocarbyl in which at least one carbon atom is replaced with a heteroatom.

The term "alkyl" is used herein to refer to a branched or unbranched, saturated or unsaturated acyclic hydrocarbon radical. Suitable alkyl radicals include, for example, methyl, ethyl, n-propyl, i-propyl, 2-propenyl (or allyl), vinyl, n-butyl, t-butyl, i-butyl (or 2-methylpropyl), etc. In particular embodiments, alkyls have between 1 and 200 carbon atoms, between 1 and 50 carbon atoms or between 1 and 20 carbon atoms.

"Substituted alkyl" refers to an alkyl as just described in which one or more hydrogen atom bound to any carbon of the alkyl is replaced by another group such as a halogen, aryl, substituted aryl, cycloalkyl, substituted cycloalkyl, heterocycloalkyl, substituted heterocycloalkyl, halogen, alkylhalos (e.g., $CF_3$), hydroxy, amino, phosphido, alkoxy, amino, thio, nitro, and combinations thereof. Suitable substituted alkyls include, for example, benzyl, trifluoromethyl and the like.

The term "heteroalkyl" refers to an alkyl as described above in which one or more carbon atoms to any carbon of the alkyl is replaced by a heteroatom selected from the group consisting of N, O, P, B, S, Si, Sb, Al, Sn, As, Se and Ge. This same list of heteroatoms is useful throughout this specification. The bond between the carbon atom and the heteroatom may be saturated or unsaturated. Thus, an alkyl substituted with a heterocycloalkyl, substituted heterocycloalkyl, heteroaryl, substituted heteroaryl, alkoxy, aryloxy, boryl, phosphino, amino, silyl, thio, or seleno is within the scope of the term heteroalkyl. Suitable heteroalkyls include cyano, benzoyl, 2-pyridyl, 2-furyl and the like.

The term "cycloalkyl" is used herein to refer to a saturated or unsaturated cyclic non-aromatic hydrocarbon radical having a single ring or multiple condensed rings. Suitable cycloalkyl radicals include, for example, cyclopentyl, cyclohexyl, cyclooctenyl, bicyclooctyl, etc. In particular embodiments, cycloalkyls have between 3 and 200 carbon atoms, between 3 and 50 carbon atoms or between 3 and 20 carbon atoms.

"Substituted cycloalkyl" refers to cycloalkyl as just described including in which one or more hydrogen atom to any carbon of the cycloalkyl is replaced by another group such as a halogen, alkyl, substituted alkyl, aryl, substituted aryl, cycloalkyl, substituted cycloalkyl, heterocycloalkyl, substituted heterocycloalkyl, heteroaryl, substituted heteroaryl, alkoxy, aryloxy, boryl, phosphino, amino, silyl, thio, seleno and combinations thereof. Suitable substituted cycloalkyl radicals include, for example, 4-dimethylaminocyclohexyl, 4,5-dibromocyclohept-4-enyl, and the like.

The term "heterocycloalkyl" is used herein to refer to a cycloalkyl radical as described, but in which one or more or all carbon atoms of the saturated or unsaturated cyclic radical are replaced by a heteroatom such as nitrogen, phosphorous, oxygen, sulfur, silicon, germanium, selenium, or boron. Suitable heterocycloalkyls include, for example, piperazinyl, morpholinyl, tetrahydropyranyl, tetrahydrofuranyl, piperidinyl, pyrrolidinyl, oxazolinyl and the like.

"Substituted heterocycloalkyl" refers to heterocycloalkyl as just described including in which one or more hydrogen atom to any atom of the heterocycloalkyl is replaced by another group such as a halogen, alkyl, substituted alkyl, aryl, substituted aryl, heteroaryl, substituted heteroaryl, alkoxy, aryloxy, boryl, phosphino, amino, silyl, thio, seleno and combinations thereof. Suitable substituted heterocycloalkyl radicals include, for example, N-methylpiperazinyl, 3-dimethylaminomorpholinyl and the like.

The term "aryl" is used herein to refer to an aromatic substituent which may be a single aromatic ring or multiple aromatic rings which are fused together, linked covalently, or linked to a common group such as a methylene or ethylene moiety. The aromatic ring(s) may include phenyl, naphthyl, anthracenyl, and biphenyl, among others. In particular embodiments, aryls have between 1 and 200 carbon atoms, between 1 and 50 carbon atoms or between 1 and 20 carbon atoms.

"Substituted aryl" refers to aryl as just described in which one or more hydrogen atom bound to any carbon is replaced by one or more functional groups such as alkyl, substituted alkyl, cycloalkyl, substituted cycloalkyl, heterocycloalkyl, substituted heterocycloalkyl, halogen, alkylhalos (e.g., $CF_3$), hydroxy, amino, phosphido, alkoxy, amino, thio, nitro, and both saturated and unsaturated cyclic hydrocarbons which are fused to the aromatic ring(s), linked covalently or linked to a common group such as a methylene or ethylene moiety. The common linking group may also be a carbonyl as in benzophenone or oxygen as in diphenylether or nitrogen in diphenylamine.

The term "heteroaryl" as used herein refers to aromatic or unsaturated rings in which one or more carbon atoms of the aromatic ring(s) are replaced by a heteroatom(s) such as nitrogen, oxygen, boron, selenium, phosphorus, silicon or sulfur. Heteroaryl refers to structures that may be a single aromatic ring, multiple aromatic ring(s), or one or more aromatic rings coupled to one or more non-aromatic ring(s). In structures having multiple rings, the rings can be fused together, linked covalently, or linked to a common group such as a methylene or ethylene moiety. The common linking group may also be a carbonyl as in phenyl pyridyl ketone. As used herein, rings such as thiophene, pyridine, isoxazole, pyrazole, pyrrole, furan, etc. or benzo-fused analogues of these rings are defined by the term "heteroaryl."

"Substituted heteroaryl" refers to heteroaryl as just described including in which one or more hydrogen atoms bound to any atom of the heteroaryl moiety is replaced by another group such as a halogen, alkyl, substituted alkyl, aryl, substituted aryl, heteroaryl, substituted heteroaryl, alkoxy, aryloxy, boryl, phosphino, amino, silyl, thio, seleno and combinations thereof. Suitable substituted heteroaryl radicals include, for example, 4-N,N-dimethylaminopyridine.

The term "alkoxy" is used herein to refer to the $-OZ^1$ radical, where $Z^1$ is selected from the group consisting of alkyl, substituted alkyl, cycloalkyl, substituted cycloalkyl, heterocylcoalkyl, substituted heterocycloalkyl, silyl groups and combinations thereof as described herein. Suitable alkoxy radicals include, for example, methoxy, ethoxy, benzyloxy, t-butoxy, etc. A related term is "aryloxy" where $Z^1$ is selected from the group consisting of aryl, substituted aryl, heteroaryl, substituted heteroaryl, and combinations thereof. Examples of suitable aryloxy radicals include phenoxy, substituted phenoxy, 2-pyridinoxy, 8-quinalinoxy and the like.

As used herein the term "silyl" refers to the $-SiZ^1Z^2Z^3$ radical, where each of $Z^1$, $Z^2$, and $Z^3$ is independently selected from the group consisting of hydrogen, alkyl, substituted alkyl, cycloalkyl, heterocycloalkyl, heterocyclic, aryl, substituted aryl, heteroaryl, substituted heteroaryl, alkoxy, aryloxy, amino, silyl and combinations thereof.

As used herein the term "boryl" refers to the $-BZ^1Z^2$ group, where each of $Z^1$ and $Z^2$ is independently selected from the group consisting of hydrogen, alkyl, substituted alkyl, cycloalkyl, heterocycloalkyl, heterocyclic, aryl, substituted aryl, heteroaryl, substituted heteroaryl, alkoxy, aryloxy, amino, silyl and combinations thereof.

As used herein, the term "phosphino" refers to the group $-PZ^1Z^2$, where each of $Z^1$ and $Z^2$ is independently selected from the group consisting of hydrogen, substituted or unsubstituted alkyl, cycloalkyl, heterocycloalkyl, heterocyclic, aryl, substituted aryl, heteroaryl, silyl, alkoxy, aryloxy, amino and combinations thereof.

As used herein, the term "phosphine" refers to the group $:PZ^1Z^2Z^3$, where each of $Z^1$, $Z^3$ and $Z^2$ is independently selected from the group consisting of hydrogen, substituted or unsubstituted alkyl, cycloalkyl, heterocycloalkyl, heterocyclic, aryl, substituted aryl, heteroaryl, silyl, alkoxy, aryloxy, amino and combinations thereof.

The term "amino" is used herein to refer to the group $-NZ^1Z^2$, where each of $Z^1$ and $Z^2$ is independently selected from the group consisting of hydrogen, alkyl, substituted alkyl, cycloalkyl, substituted cycloalkyl, heterocycloalkyl, substituted heterocycloalkyl, aryl, substituted aryl, heteroaryl, substituted heteroaryl, alkoxy, aryloxy, silyl and combinations thereof.

The term "amine" is used herein to refer to the group $:NZ^1Z^2Z^3$, where each of $Z^1$, $Z^2$ and $Z^2$ is independently selected from the group consisting of hydrogen, alkyl, substituted alkyl, cycloalkyl, substituted cycloalkyl, heterocycloalkyl, substituted heterocycloalkyl, aryl (including pyridines), substituted aryl, heteroaryl, substituted heteroaryl, alkoxy, aryloxy, silyl and combinations thereof.

The term "thio" is used herein to refer to the group $-SZ^1$, where $Z^1$ is selected from the group consisting of hydrogen, alkyl, substituted alkyl, cycloalkyl, substituted cycloalkyl, heterocycloalkyl, substituted heterocycloalkyl, aryl, substituted aryl, heteroaryl, substituted heteroaryl, alkoxy, aryloxy, silyl and combinations thereof.

The term "seleno" is used herein to refer to the group $-SeZ^1$, where $Z^1$ is selected from the group consisting of hydrogen, alkyl, substituted alkyl, cycloalkyl, substituted cycloalkyl, heterocycloalkyl, substituted heterocycloalkyl, aryl, substituted aryl, heteroaryl, substituted heteroaryl, alkoxy, aryloxy, silyl and combinations thereof.

The term "saturated" refers to lack of double and triple bonds between atoms of a radical group such as ethyl, cyclohexyl, pyrrolidinyl, and the like.

The term "unsaturated" refers to the presence one or more double and/or triple bonds between atoms of a radical group such as vinyl, acetylide, oxazolinyl, cyclohexenyl, acetyl and the like.

Ligands

Suitable ligands useful in the catalysts used to make the P/E* polymers used in the practice of this invention can be characterized broadly as monoanionic ligands having an amine and a heteroaryl or substituted heteroaryl group. The ligands of these catalysts are referred to, for the purposes of this invention, as nonmetallocene ligands, and may be characterized by the following general formula:

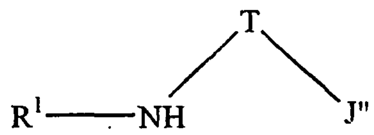

(I)

wherein $R^1$ is very generally selected from the group consisting of alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl and combinations thereof. In many embodiments, $R^1$ is a ring having from 4-8 atoms in the ring generally selected from the group consisting of substituted cycloalkyl, substituted heterocycloalkyl, substituted aryl and substituted heteroaryl, such that $R^1$ may be characterized by the general formula:

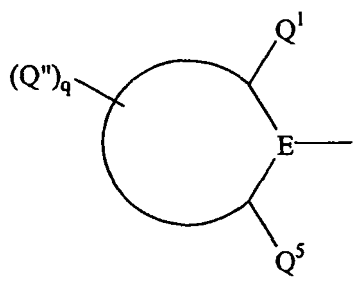

(A)

where $Q^1$ and $Q^5$ are substituents on the ring ortho to atom E, with E being selected from the group consisting of carbon and nitrogen and with at least one of $Q^1$ or $Q^5$ being bulky (defined as having at least 2 atoms). $Q^1$ and $Q^5$ are independently selected from the group consisting of alkyl, substituted alkyl, cycloalkyl, substituted cycloalkyl, aryl, substituted aryl and silyl, but provided that $Q^1$ and $Q^5$ are not both methyl. $Q''_q$ represents additional possible substituents on the ring, with q being 1, 2, 3, 4 or 5 and Q" being selected from the group consisting of hydrogen, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxyl, aryloxyl, silyl, boryl, phosphino, amino, thio, seleno, halide, nitro, and combinations thereof. T is a bridging group selected group consisting of $-CR^2R^3-$ and $-SiR^2R^3-$with $R^2$ and $R^3$ being independently selected from the group consisting of hydrogen, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxyl, aryloxyl, silyl, boryl, phosphino, amino, thio, seleno, halide, nitro, and combinations thereof. J" is generally selected from the group consisting of heteroaryl and substituted heteroaryl, with particular embodiments for particular reactions being described herein.

In a more specific embodiment, suitable nonmetallocene ligands may be characterized by the following general formula:

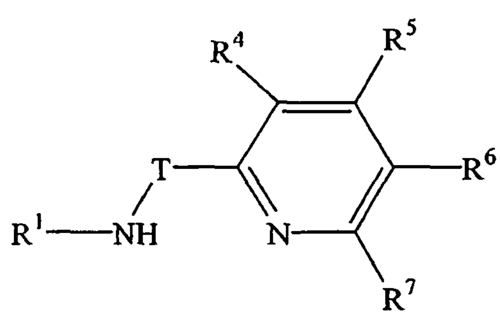

(II)

wherein $R^1$ and T are as defined above and each of $R^4$, $R^5$, $R^6$ and $R^7$ is independently selected from the group consisting of hydrogen, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxyl, aryloxyl, silyl, boryl, phosphino, amino, thio, seleno, halide, nitro, and combinations thereof. Optionally, any combination of $R^1$, $R^2$, $R^3$ and

$R^4$ may be joined together in a ring structure.

In certain more specific embodiments, the ligands may be characterized by the following general formula:

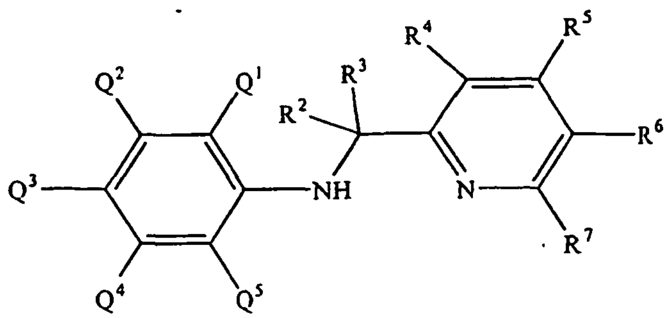

(III)

wherein $Q^1$, $Q^5$, $R^2$, $R^3$, $R^4$, $R^5$, $R^6$ and $R^7$ are as defined above. $Q^2$, $Q^3$ and $Q^4$ are independently selected from the group consisting of hydrogen, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxyl, aryloxyl, silyl, boryl, phosphino, amino, thio, seleno, nitro, and combinations thereof.

In other more specific embodiments, the suitable ligands may be characterized by the following general formula:

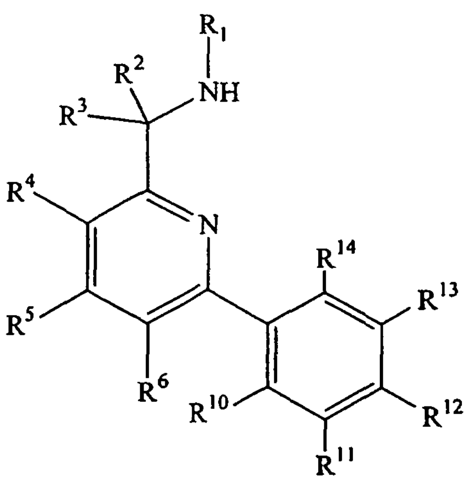

(IV)

wherein $R^1$, $R^2$, $R^3$, $R^4$, $R^5$, and $R^6$ are as defined above. In this embodiment the $R^7$ substituent has been replaced with an aryl or substituted aryl group, with $R^{10}$, $R^{11}$, $R^{12}$ and $R^{13}$ being independently selected from the group consisting of hydrogen, halo, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxy, aryloxy, silyl, boryl, phosphino, amino, thio, seleno, nitro, and combinations thereof; optionally, two or more $R^{10}$, $R^{11}$, $R^{12}$ and $R^{13}$ groups may be joined to form a fused ring system having from 3-50 non-hydrogen atoms. $R^{14}$ is selected from the group consisting of hydrogen, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxy, aryloxy, silyl, boryl, phosphino, amino, thio, seleno, halide, nitro, and combinations thereof.

In still more specific embodiments, the ligands may be characterized by the general formula:

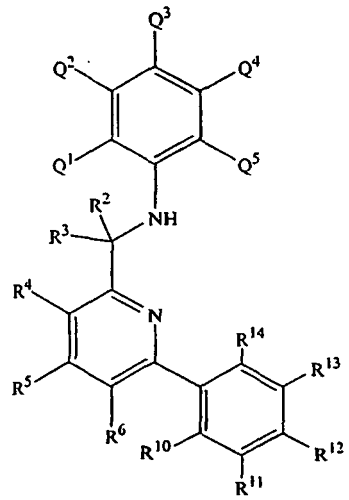

(V)

wherein $R^2$-$R^6$, $R^{10}$-$R^{14}$ and $Q^1$-$Q^5$ are all as defined above.

In certain embodiments, $R^2$ is preferably hydrogen. Also preferably, each of $R^4$ and $R^5$ is hydrogen and $R^6$ is either hydrogen or is joined to $R^7$ to form a fused ring system. Also preferred is where $R^3$ is selected from the group consisting of benzyl, phenyl, 2-biphenyl, t-butyl, 2-dimethylaminophenyl (2-($NMe_2$)-$C_6H_4$-),2-methoxyphenyl (2-MeO-$C_6H_4$-), anthracenyl, mesityl, 2-pyridyl, 3,5-dimethylphenyl, o-tolyl, 9-phenanthrenyl. Also preferred is where $R^1$ is selected from the group consisting of mesityl, 4-isopropylphenyl (4-$Pr^i$-$C_6H_4$-), napthyl, 3,5-$(CF_3)_2$-$C_6H_3$-, 2-Me-napthyl, 2,6-$(Pr^i)_2$-$C_6H_3$-, 2-biphenyl, 2-Me-4-MeO-$C_6H_3$-; 2-$Bu^t$-$C_6H_4$-, 2,5-$(Bu^t)_2$-$C_6H_3$-, 2-$Pr^i$-6-Me-$C_6H_3$-; 2-$Bu^t$-6-Me-$C_6H_3$-, 2,6-$Et_2$-$C_6H_3$-, 2-sec-butyl-6-Et-$C_6H_3$- Also preferred is where $R^7$ is selected from the group consisting of hydrogen, phenyl, napthyl, methyl, anthracenyl, 9-phenanthrenyl, mesityl, 3,5-$(CF_3)_2$-$C_6H_3$-, 2-$CF_3$-$C_6H_4$-, 4-$CF_3$-$C_6H_4$-, 3,5-$F_2$-$C_6H_3$-, 4-F-$C_6H_4$-, 2,4-$F_2$-$C_6H_3$-, 4-($NMe_2$)-$C_6H_4$-, 3-MeO- $C_6H_4$-, 4-MeO- $C_6H_4$-, 3,5-$Me_2$-$C_6H_3$-, o-tolyl, 2,6-$F_2$-$C_6H_3$- or where $R^7$ is joined together with $R^6$ to form a fused ring system, e.g., quinoline.

Also optionally, two or more $R^4$, $R^5$, $R^6$, $R^7$ groups may be joined to form a fused ring system having from 3-50 non-hydrogen atoms in addition to the pyridine ring, e.g. generating a quinoline group. In these embodiments, $R^3$ is selected from the group consisting of aryl, substituted aryl, heteroaryl, substituted heteroaryl, primary and secondary alkyl groups, and -$PY_2$ where Y is selected from the group consisting of aryl, substituted aryl, heteroaryl, and substituted heteroaryl.

Optionally within above formulas IV and V, $R^6$ and $R^{10}$ may be joined to form a ring system having from 5-50 non-hydrogen atoms. For example, if $R^6$ and $R^{10}$ together form a methylene, the ring will have 5 atoms in the backbone of the ring, which may or may not be substituted with other atoms. Also for example, if $R^6$ and $R^{10}$ together form an ethylene, the ring will have 6 atoms in the backbone of the ring, which may or may not be substituted with other atoms. Substituents from the ring can be selected from the group consisting of halo, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxy, aryloxy, silyl, boryl, phosphino, amino, thio, seleno, nitro, and combinations thereof.

In certain embodiments, the ligands are novel compounds. One example of the novel ligand compounds, includes those compounds generally characterized by formula (III), above where $R^2$ is selected from the group consisting of hydrogen, alkyl, substituted alkyl, cycloalkyl, substituted cycloalkyl, aryl, and substituted aryl; and $R^3$ is a phosphino characterized by the formula -$PZ^1Z^2$, where each of $Z^1$ and $Z^2$ is independently selected from the group consisting of hydrogen, substituted or unsubstituted alkyl, cycloalkyl, heterocycloalkyl, heterocyclic, aryl, substituted aryl, heteroaryl, silyl, alkoxy, aryloxy, amino and combinations thereof. Particularly preferred embodiments of these compounds include those where $Z^1$ and $Z^2$ are each independently selected from the group consisting of alkyl, substituted alkyl, cycloalkyl, heterocycloalkyl, aryl, and substituted aryl; and more specifically phenyl; where $Q^1$, $Q^3$, and $Q^5$ are each selected from the group consisting of alkyl and substituted alkyl and each of $Q^2$ and $Q^4$ is hydrogen; and where $R^4$, $R^5$, $R^6$ and $R^7$ are each hydrogen.

The ligands may be prepared using known procedures. See, for example, Advanced Organic Chemistry, March, Wiley, New York 1992 (4th Ed.). Specifically, the ligands of the invention may be prepared using the two step procedure outlined in Scheme 1.

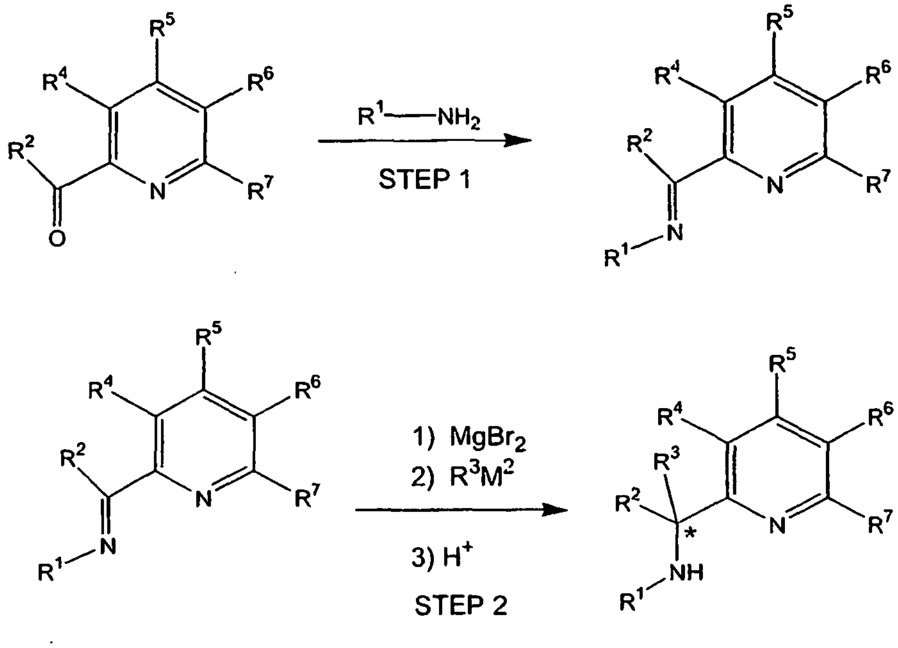


Scheme 1

In Scheme 1, the * represents a chiral center when $R^2$ and $R^3$ are not identical; also, the R groups have the same definitions as above. Generally, $R^3M^2$ is a nucleophile such as an alkylating or arylating or hydrogenating reagent and $M^2$ is a metal such as a main group metal, or a metalloid such as boron. The alkylating, arylating or hydrogenating reagent may be a Grignard, alkyl, aryl-lithium or borohydride reagent. Scheme 1, step 2 first employs the use of complexing reagent. Preferably, as in the case of Scheme 1, magnesium bromide is used as the complexing reagent. The role of the complexing reagent is to direct the nucleophile, $R^3M^2$, selectively to the imine carbon. Where the presence of functional groups impede this synthetic approach, alternative synthetic strategies may be employed. For instance, ligands where $R^3$ = phosphino can be prepared in accordance with the teachings of USP 6,034,240 and 6,043,363. In addition, tetra-alkylhafnium compounds or tetra-substituted alkylhafnium compounds or tetra-arylhafnium compounds or tetra-substituted arylhafnium compounds may be employed in step 2, in accordance with the teachings of USP 6,103,657. Scheme 2 further describes a synthesis process:

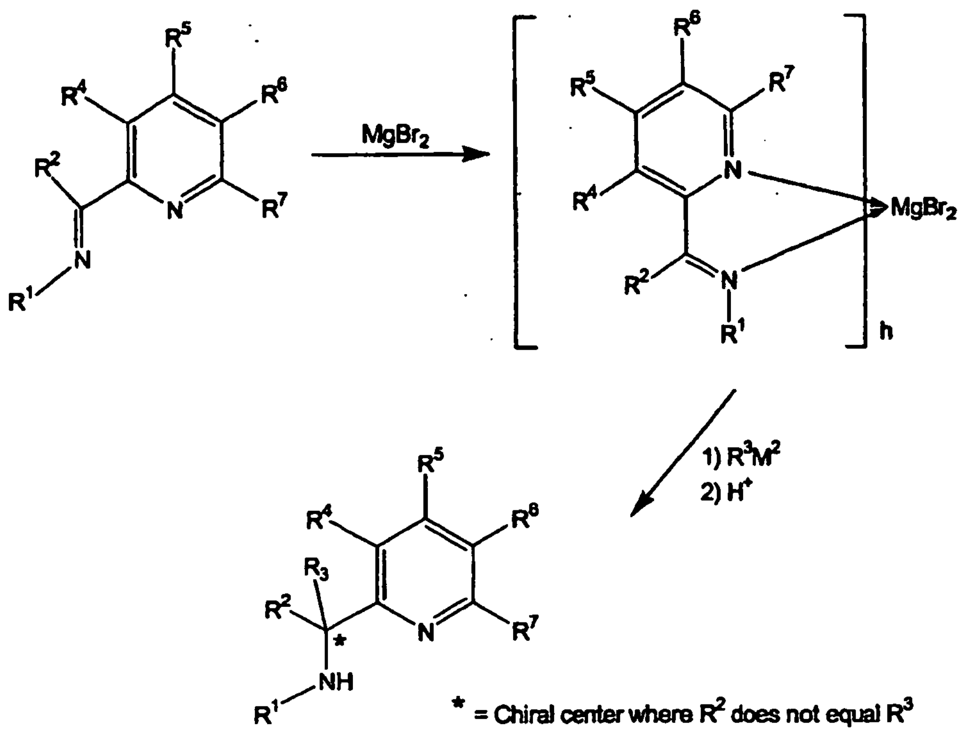


Scheme 2

In scheme 2, h = 1 or 2 and the bromine ions may or may not be bound to the magnesium. The effect of the complexation is to guide the subsequent nucleophilic attack by $R^3M^2$ to the imine carbon. Thus complexation may lead to a more selective reaction that may increase the yield of the desired ancillary ligands. Using this technique, selectivity is generally greater than 50%, more preferably greater than 70% and even more preferably greater than 80%. Complexation may be particularly useful for the preparation of arrays of ancillary ligands of the type disclosed in the invention, where $R^3$ is a variable in the preparation of the ancillary ligand array. As shown in Scheme 2 by the *, where $R^2$ and $R^3$ are different, this approach also leads to the formation of a chiral center on the ancillary ligands of the invention. Under some circumstances $R^3M^2$ may be successfully added to the imine in the absence the complexing reagent. Ancillary ligands that possess chirality may be important in certain olefin polymerization reactions, particularly those that lead to a stereospecific polymer, see "Stereospecific Olefin Polymerization with Chiral Metallocene Catalysts", Brintzinger, et al., Angew. Chem. lat Ed. Engl., 1995, Vol. 34, pp. 1143-1170, and the references therein; Bercaw et al., J. Am. Chem. Soc., 1999, Vol. 121, 564-573; and Bercaw et al., J. Am. Chem. Soc., 1996, Vol. 118, 11988-11989.

In the practice of high throughput methods or combinatorial materials science, introduction of diversity may be important in designing libraries or arrays. The synthetic schemes discussed herein will allow those of skill in the art to introduce diversity on the ligands, which may assist in optimizing the selection of a particular ligand for a particular polymerization reaction. Step 1 (see Scheme 1) may be conducted with, for example, any combination of pyridines and anilines shown herein.

<u>Compositions</u>

Once the desired ligand is formed, it may be combined with a metal atom, ion, compound or other metal precursor compound. In some applications, the ligands will be combined with a metal compound or precursor and the product of such combination is not determined, if a product forms. For example, the ligand may be added to a reaction vessel at the same time as the metal or metal precursor compound along with the reactants, activators, scavengers, etc. Additionally, the ligand can be modified prior to addition to or after the addition of the metal precursor, e.g. through a deprotonation reaction or some other modification.

For formulas I, II, III, IV and V, the metal precursor compounds may be characterized by the general formula $Hf(L)_n$ where L is independently selected from the group consisting of halide (F, Cl, Br, I), alkyl, substituted alkyl, cycloalkyl, substituted cycloalkyl, heteroalkyl, substituted heteroalkyl, heterocycloalkyl, substituted heterocycloalkyl, aryl, substituted aryl, heteroaryl, substituted heteroaryl, alkoxy, aryloxy, hydroxy, boryl, silyl, amino, amine, hydrido, allyl, diene, seleno, phosphino, phosphine, carboxylates, thio, 1,3-dionates, oxalates, carbonates, nitrates, sulphates, and combinations thereof. n is 1, 2, 3, 4, 5, or 6. The hafnium precursors may be monomeric, dimeric or higher orders thereof. It is well known that hafnium metal typically contains some amount of impurity of zirconium. Thus, this invention uses as pure hafnium as is commercially reasonable. Specific examples of suitable hafnium precursors include, but are not limited to $HfCl_4$, $Hf(CH_2Ph)_4$, $Hf(CH_2CMe_3)_4$, $Hf(CH_2SiMe_3)_4$, $Hf(CH_2Ph)_3Cl$, $Hf(CH_2CMe_3)_3Cl$, $Hf(CH_2SiMe_3)_3Cl$, $Hf(CH_2Ph)_2Cl_2$, $Hf(CH_2CMe_3)_2Cl_2$, $Hf(CH_2SiMe_3)_2Cl_2$, $Hf(NMe_2)_4$, $Hf(NEt_2)_4$, and $Hf(N(SiMe_3)_2)_2Cl_2$. Lewis base adducts of these examples are also suitable as hafnium precursors, for example, ethers, amines, thioethers, phosphines and the like are suitable as Lewis bases.

For formulas IV and V, the metal precursor compounds may be characterized by the general formula $M(L)_n$ where M is hafnium or zirconium and each L is independently selected from the group consisting of halide (F, Cl, Br, I), alkyl, substituted alkyl, cycloalkyl, substituted cycloalkyl, heteroalkyl, substituted heteroalkyl, heterocycloalkyl, substituted heterocycloalkyl, aryl, substituted aryl, heteroaryl, substituted heteroaryl, alkoxy, aryloxy, hydroxy, boryl, silyl, amino, amine, hydrido, allyl, diene, seleno, phosphino, phosphine, carboxylates, thio, 1,3-dionates, oxalates, carbonates, nitrates, sulphates, and combinations thereof. n is 4, typically. It is well known that hafnium metal typically contains some amount of impurity of zirconium. Thus, this practice uses as pure hafnium or zirconium as is commercially reasonable. Specific examples of suitable hafnium and zirconium precursors include, but are not limited to $HfCl_4$, $Hf(CH_2Ph)_4$, $Hf(CH_2CMe_3)_4$, $Hf(CH_2SiMe_3)_4$, $Hf(CH_2Ph)_3Cl$, $Hf(CH_2CMe_3)_3Cl$, $Hf(CH_2SiMe_3)_3Cl$, $Hf(CH_2Ph)_2Cl_2$, $Hf(CH_2CMe_3)_2Cl_2$, $Hf(CH_2SiMe_3)_2Cl_2$, $Hf(NMe_2)_4$, $Hf(NEt_2)_4$, and $Hf(N(SiMe_3)_2)_2Cl_2$; $ZrCl_4$, $Zr(CH_2Ph)_4$, $Zr(CH_2CMe_3)_4$, $Zr(CH_2SiMe_3)_4$, $Zr(CH_2Ph)_3Cl$, $Zr(CH_2CMe_3)_3Cl$, $Zr(CH_2SiMe_3)_3Cl$, $Zr(CH_2Ph)_2Cl_2$, $Zr(CH_2CMe_3)_2Cl_2$, $Zr(CH_2SiMe_3)_2Cl_2$, $Zr(NMe_2)_4$, $Zr(NEt_2)_4$, $Zr(NMe_2)_2Cl_2$, $Zr(NEt_2)_2Cl_2$, and $Zr(N(SiMe_3)_2)_2Cl_2$. Lewis base adducts of these examples are also suitable as hafnium precursors, for example, ethers, amines, thioethers, phosphines and the like are suitable as Lewis bases.

The ligand to metal precursor compound ratio is typically in the range of 0.01:1 to 100:1, more preferably in the range of 0.1:1 to 10:1.

Metal-Ligand Complexes

Generally, the ligand is mixed with a suitable metal precursor compound prior to or simultaneously with allowing the mixture to be contacted with the reactants (e.g., monomers). When the ligand is mixed with the metal precursor compound, a metal-ligand complex may be formed, which may be a catalyst or may need to be activated to be a catalyst. The metal-ligand complexes discussed herein are referred to as 2,1 complexes or 3,2 complexes, with the first number representing the number of coordinating atoms and second number representing the charge occupied on the metal. The 2,1-complexes therefore have two coordinating atoms and a single anionic charge. Other embodiments are those complexes that have a general 3,2 coordination scheme to a metal center, with 3,2 referring to a ligand that occupies three coordination sites on the metal and two of those sites being anionic and the remaining site being a neutral Lewis base type coordination.

Looking first at the 2,1-nomnetallocene metal-ligand complexes, the metal-ligand complexes may be characterized by the following general formula:

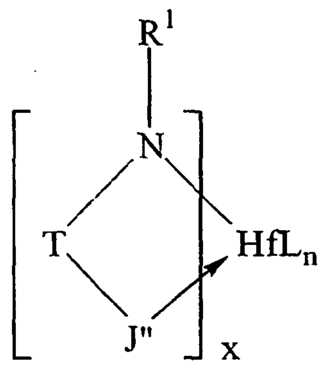

(VI)

wherein T, J", $R^1$, L and n are as defined previously; and x is 1 or 2. The J" heteroaryl may or may not datively bond, but is drawn as bonding. More specifically, the nonmetallocene-ligand complexes may be characterized by the formula:

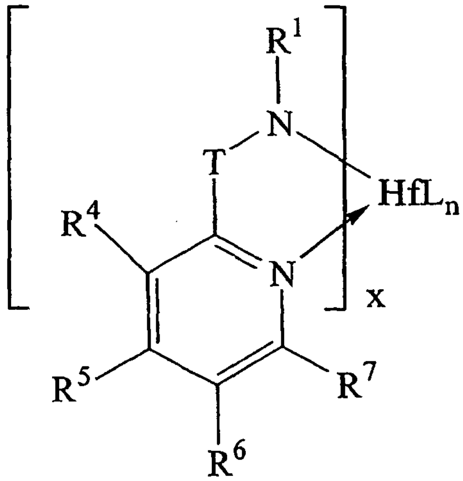

(VII)

wherein $R^1$, T, $R^4$, $R^5$, $R^6$, $R^7$, L and n are as defined previously; and x is 1 or 2. In one preferred embodiment x = 1 and n = 3. Additionally, Lewis base adducts of these metal-ligand complexes can also be used, for example, ethers, amines, thioethers, phosphines and the like are suitable as Lewis bases.

More specifically, the nonmetallocene metal-ligand complexes may be characterized by the general formula:

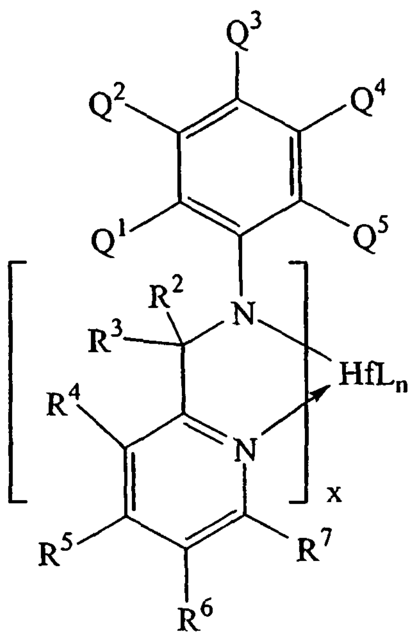

(VIII)

wherein the variables are generally defined above. Thus, e.g., $Q^2$, $Q^3$, $Q^4$, $R^2$, $R^3$, $R^4$, $R^5$, $R^6$ and $R^7$ are independently selected from the group consisting of hydrogen, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxyl, aryloxyl, silyl, boryl, phosphino, amino, thio, seleno, nitro, and combinations thereof; optionally, two or more $R^4$, $R^5$, $R^6$, $R^7$ groups may be joined to form a fused ring system having from 3-50 non-hydrogen atoms in addition to the pyridine ring, e.g. generating a quinoline group; also, optionally, any combination of $R^2$, $R^3$ and $R^4$ may be joined together in a ring structure; $Q^1$ and $Q^5$ are selected from the group consisting of alkyl, substituted alkyl, cycloalkyl, substituted cycloalkyl, aryl, substituted aryl, provided that $Q^1$ and $Q^5$ are not both methyl; and each L is independently selected from the group consisting of halide, alkyl, substituted alkyl, cycloalkyl, substituted cycloalkyl, heteroalkyl, substituted heteroalkyl heterocyloalkyl, substituted heterocycloalkyl, aryl, substituted aryl, heteroaryl, substituted heteroaryl,

alkoxy, aryloxy, hydroxy, boryl, silyl, amino, amine, hydrido, allyl, diene, seleno, phosphino, phosphine, carboxylates, thio, 1,3-dionates, oxalates, carbonates, nitrates, sulphates and combinations thereof; n is 1, 2, 3, 4, 5, or 6; and x = 1 or 2.

In other embodiments, the 2,1 metal-ligand complexes can be characterized by the general formula:

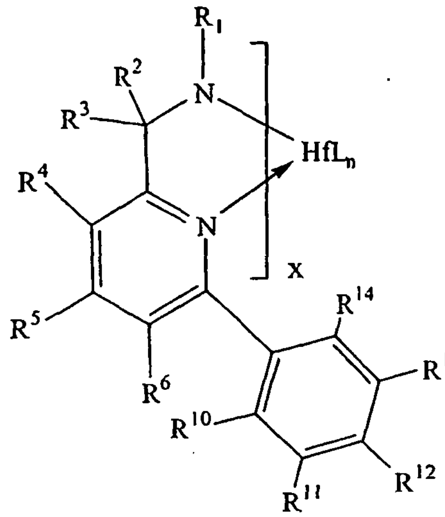

(IX)

wherein the variables are generally defined above.

In still other embodiments, the 2,1 metal-ligand complexes can be characterized by the general formula:

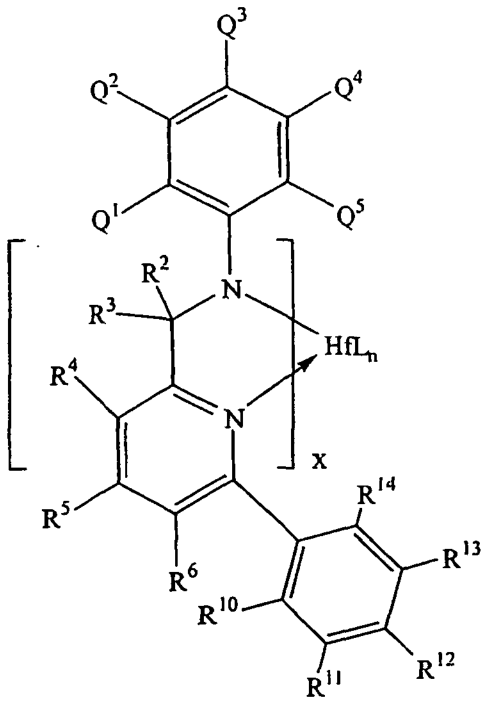

(X)

wherein the variables are generally defined above.

The more specific embodiments of the nonmetallocene metal-ligand complexes of formulas VI, VII, VIII, IX and X are explained above with regard to the specifics described for the ligands and metal precursors. Specific examples of 2,1 metal-ligand complexes include, but are not limited to:

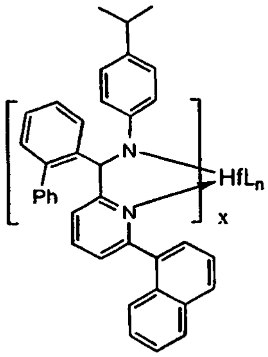

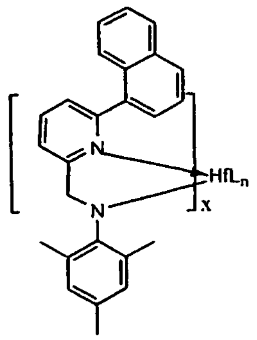

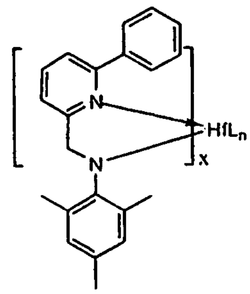

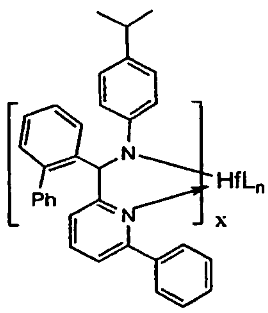

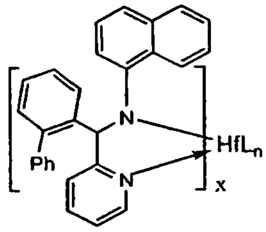

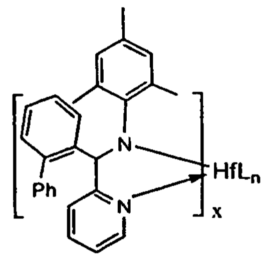

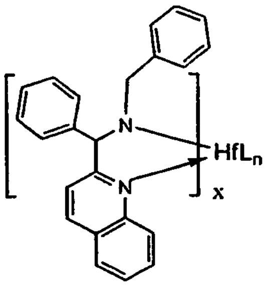

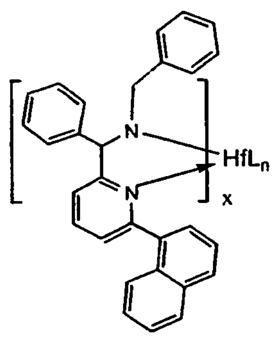

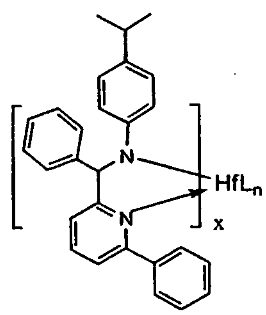

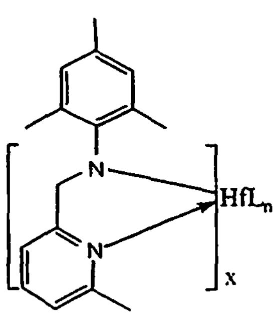

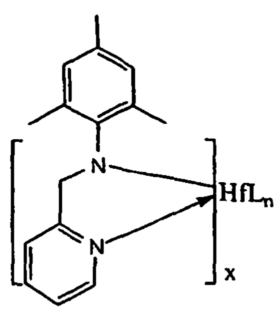

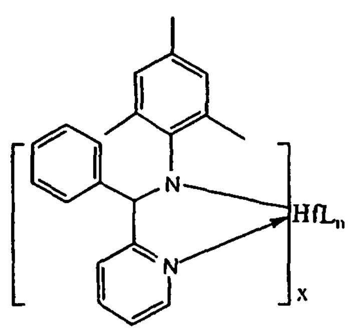

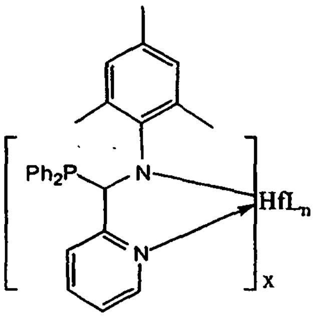
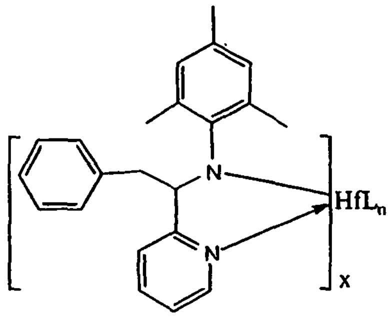

where L, n and x are defined as above (e.g., x = 1 or 2) and Ph = phenyl. In preferred embodiments, x = 1 and n = 3. Furthermore in preferred embodiments, L is selected from the group consisting of alkyl, substituted alkyl, aryl, substituted aryl or amino.

Turning to the 3,2 metal-ligand nonmetallocene complexes, the metal-ligand complexes may be characterized by the general formula:

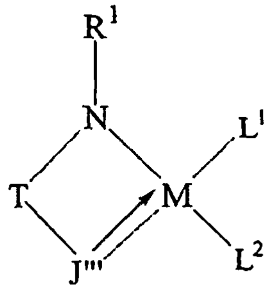

(XI)

where M is zirconium or hafnium;

$R^1$ and T are defined above;

J"' being selected from the group of substituted heteroaryls with 2 atoms bonded to the metal M, at least one of those 2 atoms being a heteroatom, and with one atom of J'" is bonded to M via a dative bond, the other through a covalent bond; and

$L^1$ and $L^2$ are independently selected from the group consisting of halide, alkyl, substituted alkyl, cycloalkyl, substituted cycloalkyl, heteroalkyl, substituted heteroalkyl, heterocycloalkyl, substituted heterocycloalkyl, aryl, substituted aryl, heteroaryl, substituted heteroaryl, alkoxy, aryloxy, hydroxy, boryl, silyl, amino, amine, hydrido, allyl, diene, seleno, phosphino, phosphine, carboxylates, thio, 1,3-dionates, oxalates, carbonates, nitrates, sulphates, and combinations thereof.

More specifically, the 3,2 metal-ligand nonmetallocene complexes may be characterized by the general formula:

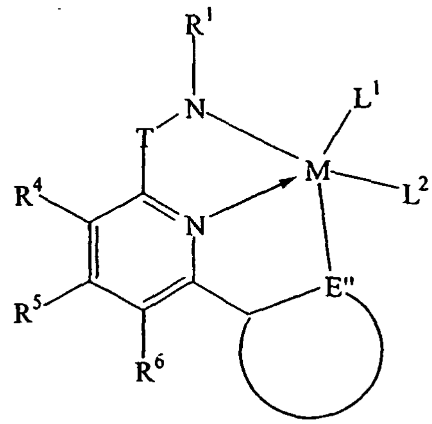

(XII)

where M is zirconium or hafnium;

T, $R^1$, $R^4$, $R^5$, $R^6$, $L^1$ and $L^2$ are defined above; and

E" is either carbon or nitrogen and is part of an cyclic aryl, substituted aryl, heteroaryl, or substituted heteroaryl group.

Even more specifically, the 3,2 metal-ligand nonmetallocene complexes may be characterized by the general formula:

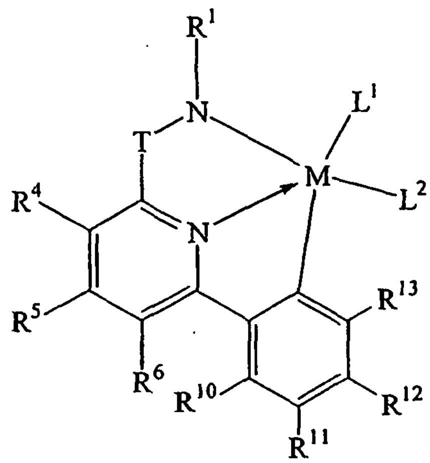

(XIII)

where M is zirconium or hafnium; and

T, $R^1$, $R^4$, $R^5$, $R^6$, $R^{10}$, $R^{11}$, $R^{12}$, $R^{13}$, $L^1$ and $L^2$ are defined above.

Still even more specifically, the 3,2 metal-ligand nonmetallocene complexes may be characterized by the general formula:

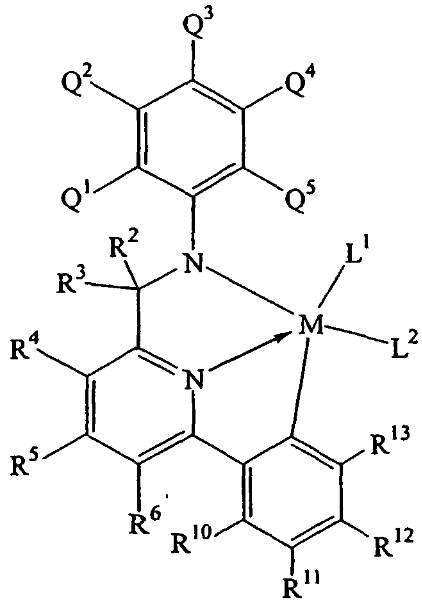

(XIV)

where M is zirconium or hafnium; and

T, $R^1$, $R^4$, $R^5$, $R^6$, $R^{10}$, $R^{11}$, $R^{12}$, $R^{13}$, $Q^1$, $Q^2$, $Q^3$, $Q^4$, $Q^5$, $L^1$ and $L^2$ are defined above.

The more specific embodiments of the metal-ligand complexes of formulas XI, XII, XIII and XIV are explained above with regard to the specifics described for the ligands and metal precursors.

In the above formulas, $R^{10}$, $R^{11}$, $R^{12}$ and $R^{13}$ are independently selected from the group consisting of hydrogen, halo, alkyl, substituted alkyl, cycloalkyl, substituted cycloalkyl, heteroalkyl, substituted heteroalkyl, heterocycloalkyl, substituted hetercycloalkyl, aryl, substituted aryl, heteroaryl, substituted heteroaryl, alkoxy, aryloxy, silyl, boryl, phosphino, amino, thio, seleno, nitro, and combinations thereof; optionally, two or more $R^{10}$, $R^{11}$, $R^{12}$ and $R^{13}$ groups may be joined to form a fused ring system having from 3-50 non-hydrogen atoms.

In addition, Lewis base adducts of the metal-ligand complexes in the above formulas are also suitable, for example, ethers, amines, thioethers, phosphines and the like are suitable as Lewis bases.

The metal-ligand complexes can be formed by techniques known to those of skill in the art. In some embodiments, $R^{14}$ is hydrogen and the metal-ligand complexes are formed by a metallation reaction (in situ or not) as shown below in scheme 3:

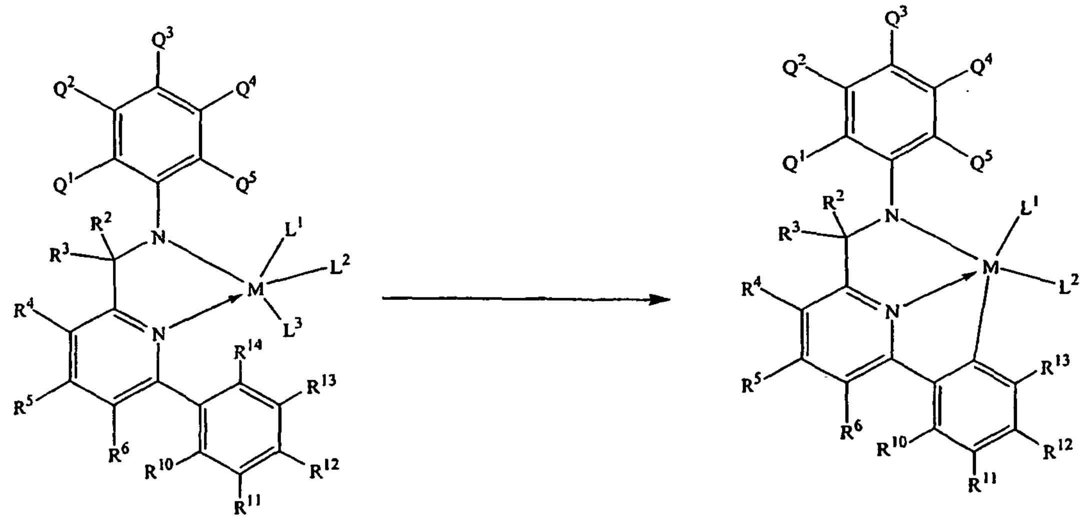

2,1 Complex

3,2 Complex

Scheme 3

In scheme 3, $R^{14}$ is hydrogen (but see above for the full definition of $R^{14}$ in other embodiments). The metallation reaction to convert the 2,1-complex on the left to the 3,2 complex on the right can occur via a number of mechanisms, likely depending on the substituents chosen for $L^1$, $L^2$ and $L^3$ and the other substituents such as $Q^1$-$Q^5$, $R^2$-$R^6$, $R^{10}$ to $R^{13}$. In one embodiment, when $L^1$, $L^2$ and $L^3$ are each $N(CH_3)_2$, the reaction can proceed by heating the 2,1 complex to a temperature above about 100°C. In this embodiment, it is believed that $L^1$ and $L^2$ remain $N(CH_3)_2$ in the 3,2 complex. In another embodiment where $L^1$, $L^2$ and $L^3$ are each $N(CH_3)_2$, the reaction can proceed by adding a group 13 reagent (as described below) to the 2,1 complex at a suitable temperature (such as room temperature). Preferably the group 13 reagent for this purpose is di-isobutyl aluminum hydride, tri-isobutyl aluminum or trimethyl aluminum. In this embodiment, $L^1$ and $L^2$ are typically converted to the ligand (e.g., alkyl or hydride) stemming from the group 13 reagent (e.g., from trimethyl aluminum, $L^1$ and $L^2$ are each $CH_3$ in the 3,2 complex). The 2,1 complex in scheme 3 is formed by the methods discussed above.

In an alternative embodiment possibly outside the scope of scheme 3, for isotactic polypropylene production, it is currently preferred that $R^{14}$ is either hydrogen or methyl.

Specific examples of 3,2 complexes include:

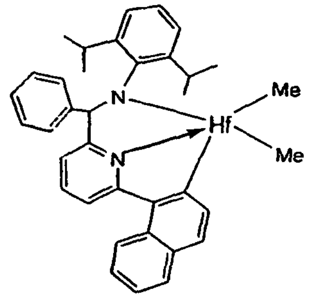

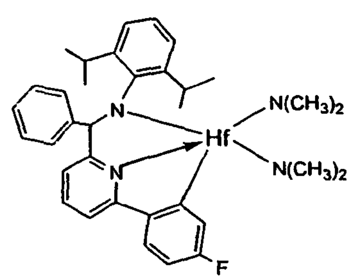

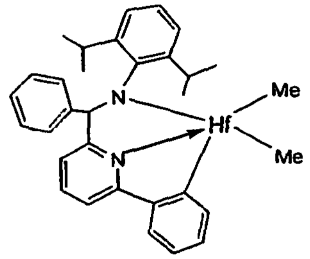 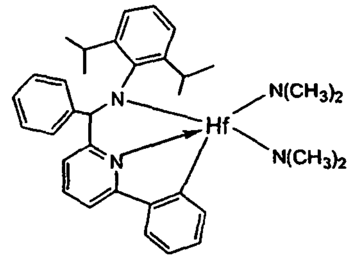

Various references disclose metal complexes that may appear to be similar; see for example, USP 6,103,657 and USP 5,637,660. However, certain embodiments herein provide unexpectedly improved polymerization performance (e.g., higher activity and/or higher polymerization temperatures and/or higher comonomer incorporation and/or crystalline polymers resulting from a high degree of stereoselectivity during polymerization) relative to the embodiments disclosed in those references. In particular, as shown in certain of the examples herein, the activity of the hafnium metal catalysts is far superior to that of the zirconium catalysts.

The ligands, complexes or catalysts may be supported on an organic or inorganic support. Suitable supports include silicas, aluminas, clays, zeolites, magnesium chloride, polyethylene glycols, polystyrenes, polyesters, polyamides, peptides and the like. Polymeric supports may be cross-linked or not. Similarly, the ligands, complexes or catalysts may be supported on similar supports known to those of skill in the art. In addition, the catalysts may be combined with other catalysts in a single reactor and/or employed in a series of reactors (parallel or serial) in order to form blends of polymer products. Supported catalysts typically produce P/E*cogolymers with an MWD larger than those produce from unsupported catalysts., although these MWDs are typically less 6, preferably less than 5 and more preferably less than 4.

The metal complexes are rendered catalytically active by combination with an activating cocatalyst or by use of an activating technique. Suitable activating cocatalysts include neutral Lewis acids such as alumoxane (modified and unmodified), $C_{1-30}$ hydrocarbyl substituted Group 13 compounds, especially tri(hydrocarbyl)aluminum- or tri(hydrocarbyl) boron compounds and halogenated (including perhalogenated) derivatives thereof, having from 1 to 10 carbons in each hydrocarbyl or halogenated hydrocarbyl group, more especially perfluorinated tri(aryl)boron compounds, and most especially tris(pentafluorophenyl)borane; nonpolymeric, compatible, noncoordinating, ion forming compounds (including the use of such compounds under oxidizing conditions), especially the use of ammonium-, phosphonium-, oxonium-, carbonium-, silylium- or sulfonium- salts of compatible, noncoordinating anions, or ferrocenium salts of compatible, noncoordinating anions; bulk electrolysis (explained in more detail hereinafter); and combinations of the foregoing activating cocatalysts and techniques. The foregoing activating cocatalysts and activating techniques have been previously taught with respect to different metal complexes in the following references: USP 5,153,157, 5,064,802, 5,721,185 and 5,350,723, and EP-A-277,003 and -A-468,651 (equivalent to USSN 07/547,718).

The alumoxane used as an activating cocatalyst is of the formula $(R^4{}_x(CH_3)_yAlO)_n$, in which $R^4$ is a linear, branched or cyclic $C_1$ to $C_6$ hydrocarbyl, x is from 0 to 1, y is from 1 to 0, and n is an integer from 3 to 25, inclusive. The preferred alumoxane components, referred to as modified methylaluminoxanes, are those wherein $R^4$ is a linear, branched or cyclic $C_3$ to $C_9$ hydrocarbyl, x is from 0.15 to 0.50, y is from 0.85 to 0.5 and n is an integer between 4 and 20, inclusive; still more preferably, $R^4$ is isobutyl, tertiary butyl or n-octyl, x is from 0.2 to 0.4 , y is from a 0.8 to 0.6 and n is an integer between 4 and 15, inclusive. Mixtures of the above alumoxanes may also be employed.

Most preferably, the alumoxane is of the formula $(R^4{}_x(CH_3)_yAlO)_n$, wherein $R^4$ is isobutyl or tertiary butyl, x is about 0.25, y is about 0.75 and n is from 6 to 8.

Particularly preferred alumoxanes are so-called modified alumoxanes, preferably modified methylalumoxanes (MMAO), that are completely soluble in alkane solvents, for example heptane, and may include very little, if any, trialkylaluminum. A technique for preparing such modified alumoxanes is disclosed in U.S. Patent No. 5,041,584 (which is incorporated by reference). Alumoxanes useful as an activating cocatalyst may also be made as disclosed in USP 4,542,199; 4,544,762; 4,960,878; 5,015,749; 5,041,583 and 5,041,585. Various alumoxanes can be obtained from commercial sources, for example, Akzo-Nobel Corporation, and include MMAO-3A, MMAO-12, and PMAO-TP.

Combinations of neutral Lewis acids, especially the combination of a trialkyl aluminum compound having from 1 to 4 carbons in each alkyl group and a halogenated tri(hydrocarbyl)boron compound having from 1 to 10 carbons in each hydrocarbyl group, especially tris(pentafluorophenyl)borane, and combinations of neutral Lewis acids, especially tris(pentafluorophenyl)borane, with nonpolymeric, compatible noncoordinating ion-forming compounds are also useful activating cocatalysts.

Suitable ion forming compounds useful as cocatalysts comprise a cation which is a Bronsted acid capable of donating a proton, and a compatible, noncoordinating anion, A-. As used herein, the term "noncoordinating" means an anion or substance which either does not coordinate to the Group 4 metal containing precursor complex and the catalytic

derivative derived therefrom, or which is only weakly coordinated to such complexes thereby remaining sufficiently labile to be displaced by a neutral Lewis base. A noncoordinating anion specifically refers to an anion which when functioning as a charge balancing anion in a cationic metal complex does not transfer an anionic substituent or fragment thereof to said cation thereby forming neutral complexes. "Compatible anions" are anions which are not degraded to neutrality when the initially formed complex decomposes and are noninterfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, said anion should be sufficiently labile to be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination complexes containing a single metal or metalloid atom are, of course, well known and many, particularly such compounds containing a single boron atom in the anion portion, are available commercially.

In one embodiment, the activating cocatalysts may be represented by the following general formula:

$$[L^*\text{-}H]^+_d[A^{d-}]$$

wherein:

- $L^*$ is a neutral Lewis base;
- $[L^*\text{-}H]^+$ is a Bronsted acid;
- $A^{d}$- is a noncoordinating, compatible anion having a charge of $d^-$, and
- d is an integer from 1 to 3.

More preferably $A^{d}$- corresponds to the formula: $[M'^{k+}Q_{n}']^{d-}$ wherein:

- k is an integer from 1 to 3;
- n' is an integer from 2 to 6;
- n'-k = d;
- M' is an element selected from Group 13 of the Periodic Table of the Elements; and
- Q independently each occurrence is selected from hydride, dialkylamido, halide, hydrocarbyl, hydrocarbyloxy, halosubstituted-hydrocarbyl, halosubstituted hydrocarbyloxy, and halo substituted silylhydrocarbyl radicals (including perhalogenated hydrocarbyl- perhalogenated hydrocarbyloxy- and perhalogenated silylhydrocarbyl radicals), said Q having up to 20 carbons with the proviso that in not more than one occurrence is Q halide. Examples of suitable hydrocarbyloxide Q groups are disclosed in USP 5,296,433.

In a more preferred embodiment, d is one, i. e., the counter ion has a single negative charge and is A-. Activating cocatalysts comprising boron which are particularly useful in the preparation of the catalysts may be represented by the following general formula:

$$[L^*\text{-}H]^+ [BQ_4]^-$$

wherein:

- $[L^*\text{-}H]^+$ is as previously defined;
- B is boron in an oxidation state of 3; and
- Q is a hydrocarbyl-, hydrocarbyloxy-, fluorinated hydrocarbyl-, fluorinated hydrocarbyloxy- or fluorinated silylhydrocarbyl- group of up to 20 nonhydrogen atoms, with the proviso that in not more than one occasion is Q hydrocarbyl.

Most preferably, Q is each occurrence a fluorinated aryl group, especially, a pentafluorophenyl group.

Illustrative, but not limiting, examples of boron compounds which may be used as an activating cocatalyst in the preparation of the catalysts are tri-substituted ammonium salts such as:

triethylammonium tetraphenylborate,

N,N-dimethylanilinium tetraphenylborate,

tripropylammonium tetrakis(pentafluorophenyl) borate,

N,N-dimethylanilinium n-butyltris(pentafluorophenyl) borate,

triethylammonium tetrakis(2,3,4,6-tetrafluorophenyl) borate,

N,N-diethylanilinium tetrakis(2,3,4,6-tetrafluorophenyl) borate, and

N,N-dimethyl-2,4,6-trimethylanilinium tetrakis(2,3,4,6-tetrafluorophenyl) borate;

dialkyl ammonium salts such as:

di-(i-propyl)ammonium tetrakis(pentafluorophenyl) borate, and

dicyclohexylammonium tetrakis(pentafluorophenyl) borate;

tri-substituted phosphonium salts such as:

triphenylphosphonium tetrakis(pentafluorophenyl) borate,

tri(o-tolyl)phosphonium tetrakis(pentafluorophenyl) borate, and

tri(2,6-dimethylphenyl)phosphonium tetrakis(pentafluorophenyl) borate;

di-substituted oxonium salts such as:

diphenyloxonium tetrakis(pentafluorophenyl) borate,

di(o-tolyl)oxonium tetrakis(pentafluorophenyl) borate, and

di(2,6-dimethylphenyl)oxonium tetrakis(pentafluorophenyl) borate;

di-substituted sulfonium salts such as:

diphenylsulfonium tetrakis(pentafluorophenyl) borate,

di(o-tolyl)sulfonium tetrakis(pentafluorophenyl) borate, and

di(2,6-dimethylphenyl)sulfonium tetrakis(pentafluorophenyl) borate.

Preferred $[L^*-H]^+$ cations are N,N-dimethylanilinium and tributylammonium.

Another suitable ion forming, activating cocatalyst comprises a salt of a cationic oxidizing agent and a noncoordinating, compatible anion represented by the formula:

$$(Ox^{e+})_d(A^{d-})_e$$

wherein:

$Ox^{e+}$ is a cationic oxidizing agent having a charge of $e^+$;

e is an integer from 1 to 3; and
$A^{d-}$ and d are as previously defined.

Examples of cationic oxidizing agents include: ferrocenium, hydrocarbyl-substituted ferrocenium, $Ag^+$, or $Pb^{+2}$. Preferred embodiments of $A^{d-}$ are those anions previously defined with respect to the Bronsted acid containing activating cocatalysts, especially tetrakis(pentafluorophenyl)borate.
Another suitable ion forming, activating cocatalyst comprises a compound which is a salt of a carbenium ion and a noncoordinating, compatible anion represented by the formula:

$$©^+A^-$$

wherein:

$©^+$ is a $C_{1-20}$ carbenium ion; and

$A^-$ is as previously defined.

A preferred carbenium ion is the trityl cation, i.e., triphenylmethylium.
A further suitable ion forming, activating cocatalyst comprises a compound which is a salt of a silylium ion and a noncoordinating, compatible anion represented by the formula:

$$R_3Si(X')_q{}^+A^-$$

wherein:

R is $C_{1-10}$ hydrocarbyl, and X', q and $A^-$ are as previously defined.

Preferred silylium salt activating cocatalysts are trimethylsilylium tetrakis(pentafluorophenyl)borate, triethylsilylium(tetrakispentafluoro)phenylborate and ether substituted adducts thereof. Silylium salts have been previously generically disclosed in J. Chem Soc. Chem. Comm., 1993, 383-384, as well as Lambert, J. B., et al., Organometallics, 1994, 13, 2430-2443.
Certain complexes of alcohols, mercaptans, silanols, and oximes with tris(pentafluorophenyl)borane are also effective catalyst activators and may be used according to the present invention. Such cocatalysts are disclosed in USP 5,296,433.
The technique of bulk electrolysis involves the electrochemical oxidation of the metal complex under electrolysis conditions in the presence of a supporting electrolyte comprising a noncoordinating, inert anion. In the technique, solvents, supporting electrolytes and electrolytic potentials for the electrolysis are used such that electrolysis byproducts that would render the metal complex catalytically inactive are not substantially formed during the reaction. More particularly, suitable solvents are materials that are: liquids under the conditions of the electrolysis (generally temperatures from 0 to 100 C), capable of dissolving the supporting electrolyte, and inert. "Inert solvents" are those that are not reduced or oxidized under the reaction conditions employed for the electrolysis. It is generally possible in view of the desired electrolysis reaction to choose a solvent and a supporting electrolyte that are unaffected by the electrical potential used for the desired electrolysis. Preferred solvents include difluorobenzene (all isomers), dimethoxyethane (DME), and mixtures thereof.
The electrolysis may be conducted in a standard electrolytic cell containing an anode and cathode (also referred to as the working electrode and counter electrode respectively). Suitable materials of construction for the cell are glass, plastic, ceramic and glass coated metal. The electrodes are prepared from inert conductive materials, by which are meant conductive materials that are unaffected by the reaction mixture or reaction conditions. Platinum or palladium are preferred inert conductive materials. Normally an ion permeable membrane such as a fine glass frit separates the cell into separate compartments, the working electrode compartment and counter electrode compartment. The working electrode is immersed in a reaction medium comprising the metal complex to be activated, solvent, supporting electrolyte, and any other materials desired for moderating the electrolysis or stabilizing the resulting complex. The counter electrode is immersed in a mixture of the solvent and supporting electrolyte. The desired voltage may be determined by theoretical calculations or experimentally by sweeping the cell using a reference electrode such as a silver electrode immersed in the cell electrolyte. The background cell current, the current draw in the absence of the desired electrolysis, is also determined. The electrolysis is completed when the current drops from the desired level to the background level. In this manner, complete conversion of the initial metal complex can be easily detected.
Suitable supporting electrolytes are salts comprising a cation and a compatible, noncoordinating anion, A-.

Preferred supporting electrolytes are salts corresponding to the formula:

$G^+A^-$

wherein:

$G^+$ is a cation which is nonreactive towards the starting and resulting complex, and

A- is as previously defined.

Examples of cations, $G^+$, include tetrahydrocarbyl substituted ammonium or phosphonium cations having up to 40 nonhydrogen atoms. Preferred cations are the tetra-n-butylammonium- and tetraethylammonium- cations.

During activation of the complexes of the present invention by bulk electrolysis the cation of the supporting electrolyte passes to the counter electrode and A- migrates to the working electrode to become the anion of the resulting oxidized product. Either the solvent or the cation of the supporting electrolyte is reduced at the counter electrode in equal molar quantity with the amount of oxidized metal complex formed at the working electrode. Preferred supporting electrolytes are tetrahydrocarbylammonium salts of tetrakis(perfluoroaryl) borates having from 1 to 10 carbons in each hydrocarbyl or perfluoroaryl group, especially tetra-n-butylammonium tetrakis(pentafluorophenyl) borate.

A further discovered electrochemical technique for generation of activating cocatalysts is the electrolysis of a disilane compound in the presence of a source of a noncoordinating compatible anion. This technique is more fully disclosed and claimed in USP 5,625,087.

The foregoing activating techniques and ion forming cocatalysts are also preferably used in combination with a tri(hydrocarbyl)aluminum or tri(hydrocarbyl)borane compound having from 1 to 4 carbons in each hydrocarbyl group.

The molar ratio of catalyst/cocatalyst employed preferably ranges from 1:10,000 to 100:1, more preferably from 1:5000 to 10:1, most preferably from 1:100 to 1:1. In one embodiment the cocatalyst can be used in combination with a tri(hydrocarbyl)aluminum compound having from 1 to 10 carbons in each hydrocarbyl group. Mixtures of activating cocatalysts may also be employed. It is possible to employ these aluminum compounds for their beneficial ability to scavenge impurities such as oxygen, water, and aldehydes from the polymerization mixture. Preferred aluminum compounds include trialkyl aluminum compounds having from 1 to 6 carbons in each alkyl group, especially those wherein the alkyl groups are methyl, ethyl, propyl, isopropyl, n-butyl, isobutyl, pentyl, neopentyl or isopentyl. The molar ratio of metal complex to aluminum compound is preferably from 1:10,000 to 100:1, more preferably from 1:1000 to 10:1, most preferably from 1:500 to 1:1. A most preferred borane activating cocatalyst comprises a strong Lewis acid, especially tris(pentafluorophenyl)borane.

In some embodiments, two or more different catalysts, including the use of mixed catalysts can be employed. In addition to a nonmetallocene, metal-centered, heteroaryl ligand catalyst, when a plurality of catalysts are used, any catalyst which is capable of copolymerizing one or more olefin monomers to make an interpolymer or homopolymer may be used in embodiments of the invention in conjunction with a nonmetallocene, metal-centered, heteroaryl ligand catalyst. For certain embodiments, additional selection criteria, such as molecular weight capability and/or comonomer incorporation capability, preferably should be satisfied. Two or more nonmetallocene, metal-centered, heteroaryl ligand catalysts having different substituents can be used in the practice of certain of the embodiments disclosed herein. Suitable catalysts which may be used in conjunction with the nonmetallocene, metal-centered, heteroaryl ligand catalysts disclosed herein include, but are not limited to, Ziegler-Natta, metallocene and constrained geometry catalysts and variations on one or more of these. They include any known and presently unknown catalysts for olefin polymerization. It should be understood that the term "catalyst" as used herein refers to a metal-containing compound which is used, along with an activating cocatalyst, to form a catalyst system. The catalyst, as used herein, is usually catalytically inactive in the absence of a cocatalyst or other activating technique. However, not all suitable catalysts are catalytically inactive without a cocatalyst.

One suitable class of catalysts is the constrained geometry catalysts disclosed in USP 5,064,802, 5,132,380, 5,703,187 and 6,034,021; EP 0 468 651 and 0 514 828; and WO 93/19104 and 95/00526. Another suitable class of catalysts is the metallocene catalysts disclosed in USP 5,044,438, 5,057,475, 5,096,867 and 5,324,800. The constrained geometry catalysts may be considered as metallocene catalysts, and both are sometimes referred to in the art as single-site catalysts.

Another suitable class of catalysts is substituted indenyl containing metal complexes as disclosed in USP 5,965,756 and 6,015,868. Other catalysts are disclosed in copending applications USSN 09/230,185, 09/715,380, 60/215,456, 60/170,175 and 60/393,862. These catalysts tend to have the capability of producing higher molecular weight polymers. Yet other catalysts, cocatalysts, catalyst systems, and activating techniques which may be used include those disclosed in WO 96/23010, 99/14250, 98/41529 and 97/42241; Scollard, et al., in J. Am. Chem. Soc 1996, 118, 10008 - 10009; EP 0 468 537 B1; WO 97/22635; EP 0 949 278 A2, 0 949 279 A2, and 1 063 244 A2; USP 5,408,017,

5,767,208 and 5,907,021; WO 88/05792, 88/05793 and 93/25590; USP 5,599,761 and 5,218,071; WO 90/07526; USP 5,972,822, 6,074,977, 6,013,819, 5,296,433, 4,874,880, 5,198,401, 5,621,127, 5,703,257, 5,728,855, 5,731,253, 5,710,224, 5,883,204, 5,504,049, 5,962,714, 5,965,677 and 5,427,991; WO 93/21238, 94/03506, 93/21242, 94/00500, 96/00244 and 98/50392; Wang, et al., Organometallics 1998, 17, 3149-3151; Younkin, et al., Science 2000, 287, 460-462; Chen and Marks, Chem. Rev. 2000, 100, 1391-1434; Alt and Koppl, Chem. Rev. 2000, 100, 1205-1221; Resconi, et al., Chem. Rev. 2000, 100, 1253-1345; Ittel, et al., ChemRev. 2000, 100, 1169-1203; Coates, Chem. Rev., 2000, 100, 1223-1251; USP 5,093,415, 6,303,719 and 5,874,505; and WO 96/13530. Also useful are those catalysts, cocatalysts and catalyst systems disclosed in USSN 09/230,185 and 09/715,380, and USP 5,965,756 and 6,150,297.

Process Descriptions

The P/E* polymers used in the practice of this invention can be made by any convenient process. In one embodiment, the process reagents, i.e., (i) propylene, (ii) ethylene and/or one or more unsaturated comonomers, (iii) catalyst, and, (iv) optionally, solvent and/or a molecular weight regulator (e.g., hydrogen), are fed to a single reaction vessel of any suitable design, e.g., stirred tank, loop, fluidized-bed, etc. The process reagents are contacted within the reaction vessel under appropriate conditions (e.g., solution, slurry, gas phase, suspension, high pressure) to form the desired polymer, and then the output of the reactor is recovered for post-reaction processing. All of the output from the reactor can be recovered at one time (as in the case of a single pass or batch reactor), or it can be recovered in the form of a bleed stream which forms only a part, typically a minor part, of the reaction mass (as in the case of a continuous process reactor in which an output stream is bled from the reactor at the same rate at which reagents are added to maintain the polymerization at steady-state conditions). "Reaction mass" means the contents within a reactor, typically during or subsequent to polymerization. The reaction mass includes reactants, solvent (if any), catalyst, and products and by-products. The recovered solvent and unreacted monomers can be recycled back to the reaction vesseL

The polymerization conditions at which the reactor is operated are similar to those for the polymerization of propylene using a known, conventional Ziegler-Natta catalyst. Typically, solution polymerization of propylene is performed at a polymerization temperature between -50 to 200, preferably between -10 and 150, C, and more preferably between 20 to 150C and most preferably between 80 and 150C, and the polymerization pressure is typically between atmospheric to 7, preferably between 0.2 and 5, Mpa. If hydrogen is present, then it is usually present at a partial pressure (as measured in the gas phase portion of the polymerization) of 0.1 kPa to 5 Mpa, preferably between 1 kPa to 3 Mpa. Gas phase, suspension and other polymerization schemes will use conditions conventional for those schemes. For gas-phase or slurry-phase polymerization processes, it is desirable to perform the polymerization at a temperature below the melting point of the polymer.

For the propylene/ethylene copolymer processes described herein, optionally containing additional unsaturated monomer, the weight ratio of propylene to ethylene in the feed to the reactors is preferably in the range of 10,000:1 to 1;10, more preferably 1,000:1 to 1:1, still more preferably 500:1 to 3:1. For the propylene/$C_{4-20}$ $\alpha$-olefin copolymer processes of the present invention, the weight ratio of propylene to $C_{4-20}$ $\alpha$-olefin in the feed preferably is in the range of 10,000:1 to 1:20, more preferably 1,000:1 to 1:1, still more preferably 1,000:1 to 3:1.

The post-reactor processing of the recover reaction mass from the polymerization vessel typically includes the deactivation of the catalyst, removal of catalyst residue, drying of the product, and the like. The recovered polymer is then ready for storage and/or use.

The P/E* polymers produced in a single reaction vessel in accordance with this invention will have the desired MFR, narrow MWD, $^{13}C$ NMR peaks at 14.6 and 15.7 ppm (the peaks of approximately equal intensity), high B-value (if any), and its other defining characteristics. If, however, a broader MWD is desired, e.g., a MWD of between 2.5 and 3.5 or even higher, without any substantial change to the other defining characteristics of the propylene copolymer, then the copolymer is preferably made in a multiple reactor system. In multiple reactor systems, MWD as broad as 15, more preferably 10, most preferably 4-8, can be prepared.

In one embodiment, the monomers comprise propylene and at least one olefin selected from the group consisting of $C_4$-$C_{10}$ $\alpha$-olefins, especially 1-butene, 1-hexene, and 1-octene, and the melt flow rate (MFR) of the interpolymer is preferably in the range of 0.1 to 500, more preferably in the range from 0.1 to 100, further more preferably 0.2 to 80, most preferably in the range of 0.3 - 50. In some embodiments, the nonmetallocene, catalysts used in the practice of the invention described herein may be utilized in combination with at least one additional homogeneous or heterogeneous polymerization catalyst in separate reactors connected in series or in parallel to prepare polymer blends having desirable properties. An example of such a process is disclosed in WO 94/00500, equivalent to USSN 07/904,770, as well as USSN 08/10958, filed January 29, 1993. Included in these embodiments is the use of two different nonmetallocene, metal-centered, heteroaryl ligand catalysts.

The catalyst system may be prepared as a homogeneous catalyst by addition of the requisite components to a solvent in which polymerization will be carried out by solution polymerization procedures. The catalyst system may also be prepared and employed as a heterogeneous catalyst by adsorbing the requisite components on a catalyst

support material such as silica gel, alumina or other suitable inorganic support material. When prepared in heterogeneous or supported form, it is preferred to use silica as the support material. The heterogeneous form of the catalyst system may be employed in a slurry or gas phase polymerization. As a practical limitation, slurry polymerization takes place in liquid diluents in which the polymer product is substantially insoluble. Preferably, the diluent for slurry polymerization is one or more hydrocarbons with less than 5 carbon atoms. If desired, saturated hydrocarbons such as ethane, propane or butane may be used in whole or part as the diluent. Likewise the $\alpha$-olefin comonomer or a mixture of different $\alpha$-olefin comonomers may be used in whole or part as the diluent. Most preferably, the major part of the diluent comprises at least the $\alpha$-olefin monomer or monomers to be polymerized. ,

Solution polymerization conditions utilize a solvent for the respective components of the reaction. Preferred solvents include, but are not limited to, mineral oils and the various hydrocarbons which are liquid at reaction temperatures and pressures. Illustrative examples of useful solvents include, but are not limited to, alkanes such as pentane, isopentane, hexane, heptane, octane and nonane, as well as mixtures of alkanes including kerosene and Isopar E™, available from Exxon Chemicals Inc.; cycloalkanes such as cyclopentane, cyclohexane, and methylcyclohexane; and aromatics such as benzene, toluene, xylenes, ethylbenzene and diethylbenzene.

At all times, the individual ingredients, as well as the catalyst components, should be protected from oxygen and moisture. Therefore, the catalyst components and catalysts should be prepared and recovered in an oxygen and moisture free atmosphere. Preferably, therefore, the reactions are performed in the presence of a dry, inert gas such as, for example, nitrogen or argon.

The polymerization may be carried out as a batch or a continuous polymerization process. A continuous process is preferred, in which event catalysts, solvent or diluent (if employed), and comonomers (or monomer) are continuously supplied to the reaction zone and polymer product continuously removed therefrom. The polymerization conditions for manufacturing the interpolymers according to embodiments of the invention are generally those useful in the solution polymerization process, although the application is not limited thereto. Gas phase and slurry polymerization processes are also believed to be useful, provided the proper catalysts and polymerization conditions are employed.

In some embodiments, the polymerization is conducted in a continuous solution polymerization system comprising two or more reactors connected in series or parallel. A catalyst solution comprising a nonmetallocene, metal-centered, heteroaryl ligand catalyst as described previously is used to polymerize propylene and optionally additional olefin monomers in at least one reactor. In one reactor, a relatively high molecular weight product ($M_w$ from 100,000 to over 1,000,000, more preferably 200,000 to 500,000) is formed while in the second or subsequent reactor(s) a product of a relatively low molecular weight ($M_w$ 2,000 to 300,000) is formed. The final product is a mixture of the two reactor effluents which are combined prior to devolatilization to result in a uniform mixing of the two polymer products. Such a dual reactor/dual catalyst process allows for the preparation of products with tailored properties.

In one embodiment, the reactors are connected in series, that is the effluent from the first reactor is charged to the second reactor and fresh monomer(s), solvent and hydrogen is added to the second reactor. Reactor conditions are adjusted such that the weight ratio of polymer produced in the first reactor to that produced in the second reactor typically from 20:80 to 80:20. Preferably, the weight ratio of polymer produced in the first reactor to that produced in the second reactor is from 25:75 to 75:25, more preferably from 30:70 to 70:30.

One representative example of a series polymerization is the preparation of a P/E* copolymer in which in the first reactor, propylene, ethylene, solvent and catalyst are contacted under solution phase conditions such that the propylene and ethylene copolymerize to form propylene copolymer. The nonmetallocene, metal-centered heteroaryl ligand catalyst, however, is highly active and under appropriate conditions, converts 50 % or more of the propylene and virtually all of the ethylene to the copolymer. Consequently when the contents, i.e., reaction mass, of the first reactor is transferred to the second reactor, most, if not all, of the polymer made in the second reactor is propylene homopolymer due to the absence or near absence of ethylene comonomer to the second reactor. One skill in the art understands that many variations on this theme are possible by replacing ethylene with, or using in combination with ethylene, one or more unsaturated comonomers; using a second but related catalyst in the second reactor; etc.

In one embodiment, the second reactor in a series polymerization process contains a heterogeneous Ziegler-Natta catalyst or chrome catalyst known in the art. Examples of Ziegler-Natta catalysts include, but are not limited to, titanium-based catalysts supported on $MgCl_2$, and additionally comprise compounds of aluminum containing at least one aluminum-alkyl bond. Suitable Ziegler Natta catalysts and their preparation include, but are not limited to, those disclosed in USP 4,612,300,4,330,646 and 5,869,575. In another embodiment of the present invention, the second reactor in a series polymerization process contains a constrained geometry or a bis-Cp metallocene catalyst.

In another embodiment, propylene/ethylene copolymers are prepared in high yield and productivity. The process employed to make these copolymers may be either a solution or slurry process both of which are known in the art. Kaminsky, J. Poly. Sci., Vol. 23, pp. 2151-64 (1985) reported the use of a soluble bis(cyclopentadienyl) zirconium dimethyl-alumoxane catalyst system for solution polymerization of propylene/ethylene (PE) elastomers. USP 5,229,478 discloses a slurry polymerization process utilizing similar bis(cyclopentadienyl) zirconium based catalyst systems.

The following procedure may be carried out to obtain a P/E* copolymer: In a stirred-tank reactor propylene

monomer is introduced continuously together with solvent, and ethylene monomer. The reactor contains a liquid phase composed substantially of ethylene and propylene monomers together with any solvent or additional diluent. If desired, a small amount of a "H"-branch inducing diene such as norbornadiene, 1,7-octadiene or 1,9-decadiene may also be added. A nonmetallocene, metal-centered, heteroaryl ligand catalyst and suitable cocatalyst are continuously introduced in the reactor liquid phase. The reactor temperature and pressure may be controlled by adjusting the solvent/monomer ratio, the catalyst addition rate, as well as by cooling or heating coils, jackets or both. The polymerization rate is controlled by the rate of catalyst addition. The ethylene content of the polymer product is determined by the ratio of ethylene to propylene in the reactor, which is controlled by manipulating the respective feed rates of these components to the reactor. The polymer product molecular weight is controlled, optionally, by controlling other polymerization variables such as the temperature, monomer concentration, or by a stream of hydrogen introduced to the reactor, as is known in the art. The reactor effluent is contacted with a catalyst kill agent, such as water. The polymer solution is optionally heated, and the polymer product is recovered by flashing off unreacted gaseous ethylene and propylene as well as residual solvent or diluent at reduced pressure, and, if necessary, conducting further devolatilization in equipment such as a devolatilizing extruder or other devolatilizing equipment operated at reduced pressure. For a solution polymerization process, especially a continuous solution polymerization, preferred ranges of propylene concentration at steady state are from 0.05 weight percent of the total reactor contents to 50 weight percent of the total reactor contents, more preferably from 0.5 weight percent of the total reactor contents to 30 weight percent of the total reactor contents, and most preferably from 1 weight percent of the total reactor contents to 25 weight percent of the total reactor contents. The preferred range of polymer concentration (otherwise known as % solids) is from 3% of the reactor contents by weight to 45% of the reactor contents or higher, more preferably from 10 % of the reactor contents to 40% of the reactor contents, and most preferably from 15% of the reactor contents to 40% of the reactor contents.

In a continuous process, the mean residence time of the catalyst and polymer in the reactor generally is from 5 minutes to 8 hours, and preferably from 10 minutes to 6 hours, more preferably from 10 minutes to 1 hour.

In some embodiments, ethylene is added to the reaction vessel in an amount to maintain a differential pressure in excess of the combined vapor pressure of the propylene and diene monomers. The ethylene content of the polymer is determined by the ratio of ethylene differential pressure to the total reactor pressure. Generally the polymerization process is carried out with a pressure of ethylene of from 70 to 7000 kPa (10 to 1000 psi), most preferably from 30 to 600 kPa (40 to 800 psi). The polymerization is generally conducted at a temperature of from 25 to 250 ˚C, preferably from 75 to 200 ˚C, and most preferably from greater than 95 to 200 ˚C.

In another embodiment, a process for producing a propylene homopolymer or interpolymer of propylene with at least one additional olefinic monomer selected from ethylene or $C_{4-20}$ $\alpha$-olefins comprises the following steps: 1) providing controlled addition of a nonmetallocene, metal-centered, heteroaryl ligand catalyst to a reactor, including a cocatalyst and optionally a scavenger component; 2) continuously feeding propylene and optionally one or more additional olefinic monomers independently selected from ethylene or $C_{4-20}$ $\alpha$-olefins into the reactor, optionally with a solvent or diluent, and optionally with a controlled amount of $H_2$; and 3) recovering the polymer product. Preferably, the process is a continuous solution process. The cocatalysts and optional scavenger components in the novel process can be independently mixed with the catalyst component before introduction into the reactor, or they may each independently be fed into the reactor using separate streams, resulting in "in reactor" activation. Scavenger components are known in the art and include, but are not limited to, alkyl aluminum compounds, including alumoxanes. Examples of scavengers include, but are not limited to, trimethyl aluminum, triethyl aluminum, triisobutyl aluminum, trioctyl aluminum, methylalumoxane (MAO), and other alumoxanes including, but not limited to, MMAO-3A, MMAO-7, PMAO-IP (all available from Akzo Nobel).

As previously note, the process described above may optionally use more than one reactor. The use of a second reactor is especially useful in those embodiments in which an additional catalyst, especially a Ziegler-Natta or chrome catalyst, or a metallocene catalyst, especially a CGC, is employed. The second reactor typically holds the additional catalyst.

By proper selection of process conditions, including catalyst selection, polymers with tailored properties can be produced. For a solution polymerization process, especially a continuous solution polymerization, preferred ranges of ethylene concentration at steady state are from less than 0.02 weight percent of the total reactor contents to 5 weight percent of the total reactor contents, and the preferred range of polymer concentration is from 10% of the reactor contents by weight to 45% of the reactor contents or higher.

In general, catalyst efficiency (expressed in terms of gram of polymer produced per gram of transition metal) decreases with increasing temperature and decreasing ethylene concentration. In addition, the molecular weight of the polymer product generally decreases with increasing reactor temperature and decreases with decreasing propylene and ethylene concentration. The molecular weight of the polyolefin can also be controlled with the addition of chain transfer compounds, especially through the addition of $H_2$.

Applications

The isotactic propylene homo- and copolymers used in the fibers of this invention have many useful applications. Representative examples include mono- and multifilament fibers, staple fibers, binder fibers, spun bond fibers or melt blown fibers (using, e.g., systems as disclosed in USP 4,430,563, 4,663,220, 4,668,566 or 4,322,027), both woven and nonwoven fabrics, strapping, tape, monofilament, continuous filament (e.g., for use in apparel, upholstery) and structures made from such fibers (including, e.g., blends of these fibers with other fibers such as PET or cotton. Staple and filament fibers can be melt spun into the final fiber diameter directly without additional drawing, or they can be melt spun into a higher diameter and subsequently hot or cold drawn to the desired diameter using conventional fiber drawing techniques.

The polymers used in the practice of this invention also exhibit excellent elasticity. Figure 8 reports the comparative results of two polymers of this invention at differenct ethylene contents versus a metallocene catalyzed propylene polymer, a polyethylene elastomer, an ethylene-styrene elastomer and a hydgrogenated styrene-ethylene-butene-stryrene block elastomer. Not only does the polymer of this invention compare well against each of these elastomers, but it compares particularly well against the metallocene catalyzed propylene polymer (a thirty percent increase in ethylene content was required of the metallocene catalyzed propylene polymer to obtain a comparable elasticity). Of even more interest, Figure 9 reports the comparative results of these same elastomers after having been stretched. Not only was the elasticity of the polymers of this invention increased markedly, but they now compared favorably even to the hydgrogenated styrene-ethylene-butene-stryrene block elastomers. The data behind these figures is reported in Example 10.

Whether or not pre-stretching is desirable will depend upon the application. For example, the elastomeric propylene homo- and copolymers of this invention can replace the thermoplastic triblock elastomers as the filament layer in the stretch bonded laminate process of USP 6,323,389. The filament layer would be stretched, preferably only once, prior to being sandwiched between the two spunbond layers. In an alternative example, the elastomeric polymers of this invention can replace the elastic layer in the necked bonded laminate process of USP 5,910,224. Some pre-stretching of the propylene polymer may be preferred.

The polymers of this invention, either alone or in combination with one or more other polymers (either polymers of the invention or polymers not of the invention) may be blended, if desired or necessary, with various additives such as antioxidants, ultraviolet absorbing agents, antistatic agents, nucleating agents, lubricants, flame retardants, antiblocking agents, colorants, inorganic or organic fillers or the like.

Elastic fibers comprising polyolefins are known, e.g., USP 5,272,236, 5,278,272, 5,322,728, 5,380,810, 5,472,775, 5,645,542, 6,140,442 and 6,225,243. The polymers of this invention can be used in essentially the same manner as known polyolefins for the making and using of elastic fibers. In this regard, the polymers of this invention can include functional groups, such as a carbonyl, sulfide, silane radicals, etc., and can be crosslinked or uncrosslinked. If crosslinked, the polymers can be crosslinked using know techniques and materials with the understanding that not all crosslinking techniques and materials are effective on all polyolefins, e.g., while peroxide, azo and electromagnetic radiation (such as e-beam, UV, IR and visible light) techniques are all effective to at least a limited extent with polyethylenes, only some of these, e.g., e-beam, are effective with polypropylenes and then not necessarily to the same extent as with polyethylenes. The use of additives, promoters, etc., can be employed as desired.

"Fiber" means a material in which the length to diameter ratio is typically greater than 10. Fiber diameter can be measured and reported in a variety of fashions. Generally, fiber diameter is measured in denier per filament. Denier is a textile term which is defined as the grams of the fiber per 9000 meters of that fiber's length. Monofilament generally refers to an extruded strand having a denier per filament greater than 15, usually greater than 30. Fine denier fiber generally refers to fiber having a denier of 15 or less. Microdenier (aka microfiber) generally refers to fiber having a diameter not greater than 100 micrometers.

"Filament fiber" or "monofilament fiber" means a continuous strand of material of indefinite (i.e., not predetermined) length, as opposed to a "staple fiber" which is a discontinuous strand of material of definite length (i.e., a strand which has been cut or otherwise divided into segments of a predetermined length).

"Elastic" means that a fiber will recover at least 50 percent of its stretched length after the first pull and after the fourth to 100% strain (doubled the length). Elasticity can also be described by the "permanent set" of the fiber. Permanent set is the converse of elasticity. A fiber is stretched to a certain point and subsequently released to the original position before stretch, and then stretched again. The point at which the fiber begins to pull a load is designated as the percent permanent set. "Elastic materials" are also referred to in the art as "elastomers" and "elastomeric". Elastic material (sometimes referred to as an elastic article) includes the polyolefin polymer itself as well as, but not limited to, the polyolefin polymer in the form of a fiber, film, strip, tape, ribbon, sheet, coating, molding and the like. The preferred elastic material is fiber. The elastic material can be either cured or uncured, radiated or unradiated, and/or crosslinked or uncrosslinked.

"Nonelastic material" means a material, e.g., a fiber, that is not elastic as defined above.

"Homofil fiber", "monolithic fiber" and similar terms mean a fiber that has a single polymer region or domain,

and that does not have any other distinct polymer regions (in contrast to bicomponent fibers).

"Bicomponent fiber" means a fiber that has two or more distinct polymer regions or domains. Bicomponent fibers are also know as conjugated or multicomponent fibers. The polymers are usually different from each other although two or more components may comprise the same polymer. The polymers are arranged in substantially distinct zones across the cross-section of the bicomponent fiber, and usually extend continuously along the length of the bicomponent fiber. The configuration of a bicomponent fiber can be, for example, a sheath/core arrangement (in which one polymer is surrounded by another), a side by side arrangement, a pie arrangement or an "islands-in-the sea" arrangement. Bicomponent fibers are further described in USP 6,225,243, 6,140,442, 5,382,400, 5,336,552 and 5,108,820.

"Meltblown fibers" are fibers formed by extruding a molten thermoplastic polymer composition through a plurality of fine, usually circular, die capillaries as molten threads or filaments into converging high velocity gas streams (e.g. air) which function to attenuate the threads or filaments to reduced diameters. The filaments or threads are carried by the high velocity gas streams and deposited on a collecting surface to form a web of randomly dispersed fibers with average diameters generally smaller than 10 microns.

"Meltspun fibers" are fibers formed by melting at least one polymer and then drawing the fiber in the melt to a diameter (or other cross-section shape) less than the diameter (or other cross-section shape) of the die.

"Spunbond fibers" are fibers formed by extruding a molten thermoplastic polymer composition as filaments through a plurality of fine, usually circular, die capillaries of a spinneret. The diameter of the extruded filaments is rapidly reduced, and then the filaments are deposited onto a collecting surface to form a web of randomly dispersed fibers with average diameters generally between 7 and 30 $\mu$m (microns).

"Nonwoven" means a web or fabric having a structure of individual fibers or threads which are randomly interlaid, but not in an identifiable manner as is the case of a knitted fabric. The elastic fiber of the present invention can be employed to prepare nonwoven structures as well as composite structures of elastic nonwoven fabric in combination with nonelastic materials.

The P/E* polymers can be blended with other polymers to form, among other things, useful fibers. Suitable polymers for blending with the P/E* polymers are commercially available from a variety of suppliers and include, but are not limited to, other polyolefins such as an ethylene polymer (e.g., low density polyethylene (LDPE), ULDPE, medium density polyethylene (MDPE), LLDPE, HDPE, homogeneously branched linear ethylene polymer, substantially linear ethylene polymer, graft-modified ethylene polymer, ethylene-styrene interpolymers (ESI), ethylene vinyl acetate interpolymer, ethylene acrylic acid interpolymer, ethylene ethyl acetate interpolymer, ethylene methacrylic acid interpolymer, ethylene methacrylic acid ionomer, and the like), polycarbonate, polystyrene, conventional polypropylene (e.g., homopolymer polypropylene, polypropylene copolymer, random block polypropylene interpolymer and the like), thermoplastic polyurethane, polyamide, polylactic acid interpolymer, thermoplastic block polymer (e.g. styrene butadiene copolymer, styrene butadiene styrene triblock copolymer, styrene ethylene-butylene styrene triblock copolymer and the like), polyether block copolymer (e.g., PEBAX), copolyester polymer, polyester/polyether block polymers (e.g., HYTEL), ethylene carbon monoxide interpolymer (e.g., ethylene/carbon monoxide (ECO), copolymer, ethylene/acrylic acid/carbon monoxide (EAACO) terpolymer, ethylene/methacrylic acid/carbon monoxide (EMAACO) terpolymer, ethylene/vinyl acetate/carbon monoxide (EVACO) terpolymer and styrene/carbon monoxide (SCO)), polyethylene terephthalate (PET), chlorinated polyethylene, and the like and mixtures thereof. In other words, the isotactic propylene homo- and/or copolymer used in the practice of this invention can be blended with two or more polyolefins, or blended with one or more polyolefins and/or with one or more polymers other than a polyolefin. If the isotactic propylene homo- and/or copolymer used in the practice of this invention is a blend of one or more polyolefins with one or more polymers other than a polyolefin, then the polyolefins comprise at least 1, preferably at least 50 and more preferably at least 90, wt % of the total weight of the blend.

In one embodiment, one or more P/E* polymers is blended with a conventional polypropylene polymer. Suitable conventional polypropylene polymers for use in the invention, including random block propylene ethylene polymers, are available from a number of manufacturers, such as, for example, Montell Polyolefins and Exxon Chemical Company. Suitable conventional polypropylene polymers from Exxon are supplied under the designations ESCORENE and ACHIEVE.

Suitable graft-modified polymers useful as blend polymers in the practice of this invention are well known in the art, and include the various ethylene polymers bearing a maleic anhydride and/or another carbonyl-oontaining, ethylenically unsaturated organic radical. Representative graft-modified polymers are described in USP 5,883,188, such as a homogeneously branched ethylene polymer graft-modified with maleic anhydride.

Suitable polylactic acid (PLA) polymers for use as blend polymers in the practice of this invention are well known in the literature (e.g., see D. M. Bigg et al., "Effect of Copolymer Ratio on the Crystallinity and Properties of Polylactic Acid Copolymers", ANTEC '96, pp. 2028-2039; WO 90/01521; EP 0 515203A and EP 0 748 846 A2. Suitable polylactic acid polymers are supplied commercially by Cargill Dow under the designation EcoPLA.

Suitable thermoplastic polyurethane polymers for use as blend polymers in the practice of this invention are commercially available from The Dow Chemical Company under the designation PELLETHANE.

Suitable polyolefin carbon monoxide interpolymers for use as blend polymers in the practice of this invention can be manufactured using well known high pressure free-radical polymerization methods. However, they may also be manufactured using traditional Ziegler-Natta catalysis, or with the use of so-called homogeneous catalyst systems such as those described and referenced above.

Suitable free-radical initiated high pressure carbonyl-containing ethylene polymers such as ethylene acrylic acid interpolymers for use as blend polymers in the practice of this invention can be manufactured by any technique known in the art including the methods taught by Thomson and Waples in USP 3,520,861, 4,988,781; 4,599,392 and 5,384,373.

Suitable ethylene vinyl acetate interpolymers for use as blend polymers in the practice of this invention are commercially available from various suppliers, including Exxon Chemical Company and Du Pont Chemical Company.

Suitable ethylene/alkyl acrylate interpolymers for use as blend polymers in the practice of this invention are commercially available from various suppliers. Suitable ethylene/acrylic acid interpolymers for use as blend polymers in the practice of this invention are commercially available from The Dow Chemical Company under the designation PRIMACOR. Suitable ethylene/methacrylic acid interpolymers for use as blend polymers in the practice of this invention are commercially available from Du Pont Chemical Company under the designation NUCREL.

Chlorinated polyethylene (CPE), especially chlorinated substantially linear ethylene polymers, for use as blend polymers in the practice of this invention can be prepared by chlorinating polyethylene in accordance with well known techniques. Preferably, chlorinated polyethylene comprises equal to or greater than 30 weight percent chlorine. Suitable chlorinated polyethylenes for use as blend polymers in the practice of this invention are commercially supplied by The Dow Chemical Company under the designation TYRIN.

Bicomponent fibers can also be made from the P/E* copolymers of this invention. Such bicomponent fibers have the polypropylene polymer of the present invention in at least one portion of the fiber. For example, in a sheath/ core bicomponent fiber (i.e., one in which the sheath surrounds the core), the polypropylene can be in either the sheath or the core. Different polypropylene polymers of this invention can also be used independently as the sheath and the core in the same fiber, preferably where both components are elastic and especially where the sheath component has a lower melting point than the core component. Other types of bicomponent fibers are within the scope of the invention as well, and include such structures as side-by-side conjugated fibers (e.g., fibers having separate regions of polymers, wherein the polyolefin of the present invention comprises at least one region of the fiber).

The shape of the fiber is not limited. For example, typical fiber has a circular cross-sectional shape, but sometimes fibers have different shapes, such as a trilobal shape, or a flat (i.e., "ribbon" like) shape. The fiber embodiments of this invention are not limited by the shape of the fiber.

The fibers, elastic or nonelastic, can be used with other fibers such as PET, nylon, cotton, Kevlar$^{tm}$, etc. to make elastic and nonelastic fabrics.

Fabrics made from the elastic and/or nonelastic fibers of this invention include woven, nonwoven and knit fabrics. Nonwoven fabrics can be made various by methods, e.g., spunlaced (or hydrodynamically entangled) fabrics as disclosed in USP 3,485,706 and 4,939,016, carding and thermally bonding staple fibers; spunbonding continuous fibers in one continuous operation; or by melt blowing fibers into fabric and subsequently calandering or thermally bonding the resultant web. These various nonwoven fabric manufacturing techniques are well known to those skilled in the art and the disclosure is not limited to any particular method. Other structures made from such fibers are also included within the scope of the invention, including e.g., blends of these novel fibers with other fibers (e.g., poly(ethylene terephthalate) or cotton).

Fabricated articles which can be made using the elastic and/or nonelastic fibers and fabrics of this invention include composite articles (e.g., diapers) that have elastic portions. For example, elastic portions are typically constructed into diaper waist band portions to prevent the diaper from falling and leg band portions to prevent leakage (as shown in USP 4,381,781). Often, the elastic portions promote better form fitting and/or fastening systems for a good combination of comfort and reliability. The inventive elastic fibers and fabrics of this invention can also produce structures which combine elasticity with breathability. For example, the inventive elastic fibers, fabrics and/or films may be incorporated into the structures disclosed in U.S. provisional patent application 60/083,784, filed May 1, 1998.

The inventive elastic fibers and fabrics can also be used in various structures as described in USP 2,957,512. For example, layer 50 of the structure described in USP '512 (i.e., the elastic component) can be replaced with the inventive elastic fibers and fabrics, especially where flat, pleated, creped, crimped, etc., nonelastic materials are made into elastic structures. Attachment of the inventive elastic fibers and/or fabric to nonelastic fibers, fabrics or other structures can be done by melt bonding or with adhesives. Gathered or shirted elastic structures can be produced from the inventive elastic fibers and/or fabrics and nonelastic components by pleating the non-elastic component (as described in USP '512) prior to attachment, pre-stretching the elastic component prior to attachment, or heat shrinking the elastic component after attachment.

Continuous elastic filaments as described herein can also be used in woven applications where high resilience is desired.

USP 5,037,416 describes the advantages of a form fitting top sheet by using elastic ribbons (see member 19 of USP '416). The inventive elastic fibers could serve the function of member 19 of USP '416, or could be used in fabric form to provide the desired elasticity.

The inventive elastic fibers can also be a melt blown elastic component as described in reference 6 of the drawings of USP 4,879,170.

Elastic panels can also be made from the inventive elastic fibers and fabrics disclosed herein, and can be used, for example, as members 18, 20, 14, and/or 26 of USP 4,940,464. The inventive elastic fibers and fabrics described herein can also be used as elastic components of composite side panels (e.g., layer 86 of'464).

The elastic materials of the present invention can also be rendered pervious or "breathable" by any method well known in the art including by apperturing, slitting, microperforating, mixing with fibers or foams, adding fillers, or the like and combinations thereof. Examples of such methods include, USP 3,156,242, 3,881,489, 3,989,867 and 5,085,654.

Not only can the isotactic propylene homo- and copolymers used in the practice of this invention be blended with one or more other polymers, but they can also be blended with various additives such as nucleating, clarifying, stiffness and/or crystallization rate agents. These agents are used in a conventional matter and in conventional amounts.

The P* and P/E*polymers can be subjected to post-reaction treatments, e.g. crosslinking, vis-breaking, and the like. Vis-breaking is particularly useful in reducing the viscosity of high molecular weight polymers. These post treatments are also used in their conventional manner.

The following examples are given to illustrate various embodiments of the invention. They do not intend to limit the invention as otherwise described and claimed herein. All numerical values are approximate. When a numerical range is given, it should be understood that embodiments outside the range are still within the scope of the invention unless otherwise indicated. In the following examples, various polymers were characterized by a number of methods. Performance data of these polymers were also obtained. Most of the methods or tests were performed in accordance with an ASTM standard, if applicable, or known procedures. All parts and percentages are by weight unless otherwise indicated. Figures 12A-12J illustrate the chemical structures of various catalysts described in the following examples.

SPECIFIC EMBODIMENTS

Tetrahydrofuran (THF), diethyl ether, toluene, hexane, and ISOPAR E (obtainable from Exxon Chemicals) are used following purging with pure, dry nitrogen and passage through double columns charged with activated alumina and alumina supported mixed metal oxide catalyst (Q-5 catalyst, available from Engelhard Corp). All syntheses and handling of catalyst components are performed using rigorously dried and deoxygenated solvents under inert atmospheres of nitrogen or argon, using either glove box, high vacuum, or Schlenk techniques, unless otherwise noted. MMAO-3A, PMAO, and PMAO-IP can be purchased from Akzo-Nobel Corporation.

Synthesis of ($C_5Me_4SiMe_2N^tBu$)Ti($\eta^4$-1,3-pentadiene) (Catalyst A)

Catalyst A can be synthesized according to Example 17 of USP 5,556,928.

Synthesis of dimethylsilyl(2-methyl-s-indacenyl)(t-butylamido) titanium 1,3-pentadiene (Catalyst B)

Catalyst B can be synthesized according to Example 23 of USP 5,965,756.

Synthesis of (N-(1,1-dimethylethyl)-1,1-di-*p*-tolyl-1-((1,2,3,3a,7a-η)-3-(1,3-dihydro-2*H*-isoindol-2-yl)-1H-inden-1-yl)silanaminato-(2-)-N-)dimethyltitanium (Catalyst C)

(1) Preparation of dichloro(N-(1,1-dimethylethyl)-1,1-di(p-tolyl)-1-((1,2,3, 3a,7a-η)-3-(1,3-dihydro-2*H*-isoindol-2-yl)-1H-inden-1-yl)silanaminato-(2-)-N-)-titanium

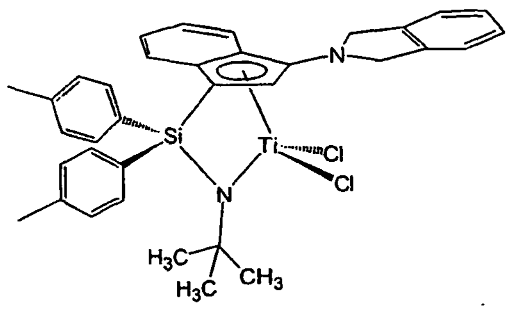

(A) Preparation of N-(*tert*-butyl)-N-(1,1-*p*-tolyl)-1-(3-(1,3-dillydro-2*H*-isoindol-2-yl)-1H-indenyl)silyl)amine:

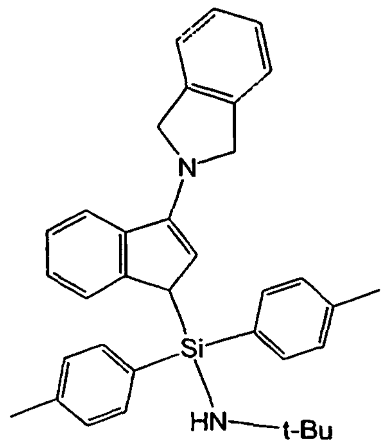

To a 1.70 g (5.35 mmol) of N-(*tert*-butyl)-N-(1-chloro-1,1-di(3-*p*-tolyl)silylamine dissolved in 20 mL of THF is added 1.279 g (5.35 mmol) of 1-(1H-3-indenyl)-1-(2,3-dihydro-1H-isoindolinyl) lithium salt dissolved in 20 mL of THF. After the addition, the reaction mixture is stirred for 9 hours and then solvent is removed under reduced pressure. The residue is extracted with 40 mL of hexane and filtered. Solvent is removed under reduced pressure giving 2.806 of product as a gray solid.

$^{1}H$ ($C_6D_6$) δ: 1.10 (s, 9H), 2.01 (s, 3H), 2.08 (s, 3H), 4.12 (d, 1H, $^{3}J_{H-H}$ = 1.5 Hz), 4.39 (d, 1H, $^{2}J_{H-H}$ = 11.1 Hz), 4.57 (d, 1H, $^{2}J_{H-H}$ = 11.7 Hz), 5.55 (d, 1H, $^{3}J_{H-H}$ = 2.1 Hz), 6.9-7.22 (m, 10H), 7.56 (d, 1H, $^{3}J_{H-H}$ = 7.8 Hz), 7.62 (d, 1H, $^{3}J_{H-H}$ = 6.9 Hz), 7.67 (d, 1H, $^{3}J_{H-H}$ = 7.8 Hz), 7.83 (d, 1H, $^{3}J_{H-H}$ = 7.8 Hz).

$^{13}C\{^{1}H\}$ ($C_6D_6$) δ: 21.37, 21.43, 33.78, 41.09, 50.05, 56.56, 104.28, 120.98, 122.46, 123.84, 124.71, 124.84, 126.98, 128.29, 128.52, 129.05, 132.99, 133.68, 135.08, 135.90, 136.01, 138.89,139.05, 139.09, 141.27, 146.39, 148.48.

(B) Preparation of N-(*tert*-butyl)-N-(1,1-*p*-tolyl)-1-(1,3-dihydro-2*H*-isoindol-2-yl)-1H-indenyl)silyl)amine, dilithium salt:

To a 50 mL hexane solution containing 2.726 g (5.61 mmol) of the N-(*tert*-butyl)-N-(1,1-*p*-tolyl)-1-(3-(1,3-dihydro-2*H*-isoindol-2-yl)-1H-indenyl)silyl)amine is added 7.4 mL of 1.6 M n-BuLi solution. During addition of the n-BuLi, a yellow precipitate appears. After stirring for 6 hours, the yellow precipitate is collected on a frit, washed with 2 x 25 mL of hexane, and dried under reduced pressure to give 2.262 g of the product as a yellow powder.

$^{1}H$ ($C_6D_6$) δ: 1.17 (s, 9H), 2.30 (s, 6H), 4.51 (s, 4H), 6.21 (s, 1H), 6.47 (m, 2H), 6.97 (d, 4H, $^{3}J_{H-H}$ = 8.1 Hz), 7.15 (m, 2H), 7.23 (m, 2H), 7.50 (m, 1H), 7.81 (d, 4H, $^{3}J_{H-H}$ = 7.8 Hz), 8.07 (d, 1H, $^{3}J_{H-H}$ = 7.2 Hz). $^{13}C\{^{1}H\}$ ($C_6D_6$) δ: 21.65, 38.83, 52.46, 59.82, 95.33, 112.93, 114.15, 115.78, 118.29, 122.05, 122.60, 124.16, 124.78, 126.94, 127.30, 133.06, 134.75, 137.30, 141.98, 148.17.

(C) Preparation of dichloro(N-(1,1-dimethylethyl)-1,1-dip-tolyl-1-((1,2,3,3a,7a-η)-3-(1,3-dihydro-2*H*-isoindol-2-yl)-1H-inden-1-yl)silanaminato-(2-)-N-)titanium:

In the drybox 1.552 g (4.19 mmol) of $TiCl_3$(THF) is suspended in 20 mL of THF. To this solution, 2.206 g (4.19 mmol) of N-(*tert*-butyl)-N-(1,1-*p*-tolyl)-1-(1,3-dihydro-2*H*-isoindol-2-yl)-1H-indenyl)silyl)amine, dilithium salt dissolved in 30 mL of THF is added within 1 minute. The solution is then stirred for 60 minutes. After this time, 0.76 g of $PbCl_2$ (2.75 mmol) is added and the solution is stirred for 60 minutes. The THF is then removed under reduced pressure. The residue is first extracted with 60 mL of methylene chloride and filtered. Solvent is removed under reduced pressure leaving a black crystalline solid. Hexane is added (30 mL) and the black suspension is stirred for 10 hour. The solids are collected on a frit, washed with 30 mL of hexane and dried under reduced pressure to give 2.23 g of the desired product as a deep purple solid.

$^1H$ (THF-$d_8$) δ: 1.40 (s, 9H), 2.46 (s, 3H), 2.48 (s, 3H), 5.07 (d, 2H, $^2J_{H-H}$ = 12.3 Hz), 5.45 (d, 2H, $^2J_{H-H}$ = 12.6 Hz), 5.93 (s, 1H), 6.95 (d, 1H, $^3J_{H-H}$ = 9.0 Hz), 7.08 (d, 1H, $^3J_{H-H}$ = 7.8 Hz), 7.15-7.4 (m, 9H), 7.76 (d, 1H, $^3J_{H-H}$ = 7.8 Hz), 7.82 (d, 1H, $^3J_{H-H}$ = 7.5 Hz), 8.05 (d, 1H, $^3J_{H-H}$ = 8.7 Hz). $^{13}C\{^1H\}$ (THF-$d_8$) δ: 21.71, 21.76, 33.38, 56.87, 61.41, 94.5, 107.95, 122.86, 125.77, 126.68, 127.84, 127.92, 128.40, 128.49, 129.36, 129.79, 131.23, 131.29, 135.79, 136.43, 136.73, 141.02, 141.22, 150.14.

(2) Preparation of (N-(1,1-dimethylethyl)-1,1-di-*p*-totyl-1-((1,2,3,3a,7a-η)-3-(1,3-dihydro-2*H*-isoindol-2-yl)-1H-inden-1-yl)silanaminato-(2-)-N-)dimethyltitanium:

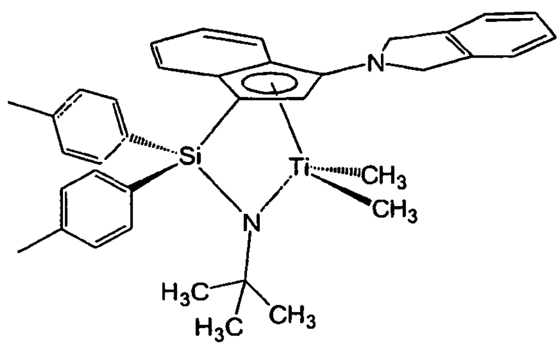

In the drybox 0.50 g of dichloro(N-(1,1-dimethylethyl)-1,1-di-*p*-tolyl-1-((1,2,3,3a,7a-η)-3-(1,3-dihydro-2*H*-isoindol-2-yl)-1H-inden-1-yl)silanaminato-(2-)-N-)titanium complex (0.79 mmol) is dissolved in 30 mL of diethyl ether. To this solution, 1.14 mL (1.6 mmol) of MeLi (1.6 M in ether) is added dropwise while stirring over a 1 minute period. After the addition of MeLi is completed, the solution is stirred for 1.5 hour. Diethyl ether is removed under reduced pressure and the residue extracted with 45 mL of hexane. Hexane is removed under reduced pressure giving a red crystalline material. This solid is dissolved in about 7 mL of toluene and 25 mL of hexane, filtered, and the solution was put into the freezer (-27 ˚C) for 2 days. The solvent is then decanted and the resulting crystals are washed with cold hexane and dried under reduced pressure to give 156 mg of product.

$^1H$ ($C_6D_6$) δ: 0.25 (s, 3H), 0.99 (3H), 1.72 (s, 9H), 2.12 (s, 3H), 2.15 (s, 3H), 4.53 (d, 2H, $^2J_{H-H}$ = 11.7 Hz), 4.83 (d, 2H, $^2J_{H-H}$ = 11.7 Hz), 5.68 (s, 1H), 6.72 (dd, 1H, $^3J_{H-H}$ = 8.6 Hz,, $^3J_{H-H}$ = 6.6 Hz), 6.9-7.2 (m, 11H), 7.30 (d, 1H, $^3J_{H-H}$= 8.6 Hz).7.71 (d, 1H, $^3J_{H-H}$ = 8.5 Hz), 7.93 (d, 1H, $^3J_{H-H}$ = 7.8 Hz), 8.11 (d, 1H, $^3J_{H-H}$ = 7.8 Hz). $^{13}C\{^1H\}$ ($C_6D_6$) δ: 21.45, 21.52, 35.30, 50.83, 56.03, 56.66, 57.65, 83.80, 105.64, 122.69, 124.51, 124.56, 125.06, 125.35, 127.33, 128.98, 129.06, 129.22, 133.51, 134.02, 134.62, 136.49, 136.84, 137.69, 139.72, 139.87, 143.84.

Synthesis of (1H-cyclopenta [1] phenanthrene-2-yl)dimethyl(t-butylamido)silane titanium dimethyl (Catalyst D)

Catalyst D can be synthesized according to Example 2 of USP 6,150,297.

Synthesis of rac-[dimethylsilylbis(1-(2-methyl-4-phenyl)indenyl)]zirconium (1,4-diphenyl-1,3-butadiene) (Catalyst E)

Catalyst E can be synthesized according to Example 15 of USP 5,616,664.

Synthesis of rac-[1,2-ethanediylbis(1-indenyl)]zirconium (1,4-diphenyl-1,3-butadiene) (Catalyst F)

Catalyst F can be synthesized according to Example 11 of USP 5,616,664.

Synthesis of Catalyst G

*Hafnium tetrakisdimethylamine.* The reaction is prepared inside of a dry box. A 500 mL round bottom flask containing a stir bar, is charged with 200 mL of toluene and $LiNMe_2$ (21 g, 95%, 0.39 mol). $HfCl_4$ (29.9 g, 0.093 mol) is added slowly over 2 h. The temperature reaches 55°C. The mixture is stirred overnight at ambient temperature. The LiCl is filtered off. The toluene is carefully distilled away from the product. Final purification is achieved by distillation with a vacuum transfer line attached to a cold (-78° C) receiving flask. This process is performed outside the dry box on a Schlenk line. The material is distilled over at 110-120° C at 300-600 microns. The 19.2 g of the white solid is collected.

*2-formyl-6-naphthylpyridine.* Inside of a dry box, naphthylboronic acid (9.12 g, 53.0 mmol) and $Na_2CO_3$ (11.64 g, 110 mmol) are dissolved in 290 mL of degassed 4:1 $H_2O$/MeOH. This solution is added to a solution of 8 g (43 mmol) of 2-bromo-6-formylpyridine and 810 mg (0.7 mmol) of $Pd(PPh_3)_4$ in 290 mL of degassed toluene. The charged reactor is removed from the dry box, while under a blanket of $N_2$ and is connected to the house $N_2$ line. The biphasic solution is vigorously stirred and heated to 70 °C for 4 h. On cooling to RT, the organic phase is separated. The aqueous layer is washed with 3 x 75 mL of $Et_2O$. The combined organic extracts are washed with 3 x 100 mL of $H_2O$ and 1 x 100 mL of brine and dried over $Na_2SO_4$. After removing the volatiles in vacuo, the resultant light yellow oil is purified via trituration with hexanes. The isolated material is recrystallized from a hot hexane solution and ultimately yielded 8.75 g, 87% yield. mp 65-66° C.

$^1$H NMR ($CDCl_3$) δ 7.2-8.3 (m, 10H), 10.25 (s, 1 H) ppm. $^{13}$C NMR ($CDCl_3$) 120.3, 125.64, 125.8, 126.6, 127.26, 12S. 23, 129.00, 129.74, 130.00, 131.39, 134.42, 137.67, 137.97, 153.07, 160.33, 194.23 ppm.

*6-naphthylpyridine-2-(2,6-diisopropylphenyl)imine*: A dry, 500 mL 3-neck round bottom flask is charged with a solution of 5.57 g (23.9 mmol) of 2-formyl-6-naphthlypyridine and 4.81 g (27.1 mmol) of 2,6-diisopropylaniline in 238 mL of anhydrous THF containing 3 Å molecular sieves (6 g) and 80 mg of *p*-TsOH. The loading of the reactor is performed under $N_2$. The reactor is equipped with a condenser, an over head mechanical stirrer and a thermocouple well. The mixture is heated to reflux under $N_2$ for 12 h. After filtration and removal of the volatile in vacuo, the crude, brown oil is triturated with hexanes. The product is filtered off and rinsed with cold hexanes. The slightly off white solid weighes 6.42 g. No further purification is performed. mp 142-144° C.

$^1$H NMR ($CDCl_3$) δ 1.3 (d, 12 H), 3.14 (m, 2H), 7.26 (m, 3H), 7.5-7.6 (m, 5H), 7.75-7.8 (m, 3H), 8.02 (m 1H), 8.48 (m, 2H) ppm. $^{13}$C NMR ($CDCl_3$) 23.96, 28.5,119.93, 123.50, 124.93, 125.88, 125.94, 126.49, 127.04, 127.24, 128.18, 128.94, 129.7, 131.58, 134.5, 137.56, 137.63, 138.34, 148.93, 154.83, 159.66, 163.86 ppm.

*(6-naphthyl-2-pyridyl)-N-(2,6-diisopropylphenyl)benzylamine*: A 250 mL 3-neck flask, equipped with mechanical stirrer and a $N_2$ sparge, is charged with 6-naphthylpyridine-2-(2,6-diisopropylphenyl)imine (6.19 mg, 15.8 mmol) and 80 mL of anhydrous, degassed $Et_2O$. The solution is cooled to -78 C while a solution of phenyllithium (13.15 mL of 1.8 M in cyclohexane, 23.7 mmol) is added dropwise over 10 min. After warming to RT over 1 h. the solution is stirred at RT for 12 hours. The reaction is then quenched with ~50 mL of aq. $NH_4Cl$. The organic layer is separated, washed with brine and $H_2O$, then dried over $Na_2SO_4$. Using the Biotage Chromatography system (column # FK0-1107-19073, 5% THF/95% hexanes), the product is isolated as a colorless oil. The chromatography is performed by dissolving the crude oil in 50 mL of hexanes. The purification is performed in 2 x ~25 mL batches, using half of the hexane stock solution for each run. 7.0 g of the oil is isolated (93% yield).

$^1$H NMR ($CDCl_3$) δ 0.90 (d, 12 H), 3.0 (m, 2H), 4.86 (s, 1H), 5.16 (s, 1H), 7.00 (m, 3H), 7.1-7.6 (m, 12H), 7.8-7.88 (m, 2H), 7.91-7.99 (d, 1H) ppm. $^{13}$C NMR ($CDCl_3$) 24.58, 28.30, 70.02, 121.14, 123.62, 123.76, 123.95, 125.71, 126.32, 126.55, 126.74, 127.45, 128.04, 128.74, 129.47, 131.66, 134.49, 137.4, 138.95, 142.68, 143.02, 143.89, 159.36, 162.22 ppm.

*Catalyst G-($Nme_2$)3:* The reaction is performed inside of a dry box. A 100 mL round bottom flask is charged with $Hf(Nme_2)_4$ (2.5 g, 5.33 mmol), 30 mL of pentane and a stir bar. The amine 1 is dissolve in 40 mL of pentane then added to the stirring solution of $Hf(Nme_2)_4$. The mixture is stirred at ambient temperature for 16 h (overnight). The light yellow solid is filtered off and rinsed with cold pentane. The dry weight of the powder is 2.45 g. A second crop is collected from the filtrate weighing 0.63 g. The overall yield is 74%.

$^1$H NMR ($C_6D_6$) δ 0.39 (d, 3 H, J = 6.77 Hz), 1.36 (d, 3H, J = 6.9 Hz), 1.65 (d, 3H, J = 6.68 Hz), 1.76 (d, 3H, J = 6.78 Hz), 2.34 (br s, 6H), 2.80 (br s, 6H), 2.95 (br s, 6H), 3.42 (m, 1H, J = 6.8 Hz), 3.78 (m, 1H, J = 6.78 Hz), 6.06 (s, 1H), 6.78 (m, 2H), 6.94 (m, 1H), 7.1-7.4 (m, 13H), 7.8 (m, 2H) ppm.

*Catalyst G:* The reaction is performed inside of a dry box. A 100 mL round bottom flask is charged with70 mL of pentane and 15 mL of a 2.0 M trimethyl aluminum in hexane solution. The solution is cooled to -40° C. The hafnium trisamide compound from the previous reaction (1.07,g 1.28 mmol) is added in small portions over 5-10 minutes. Upon the addition, a white gelatinous residue forms. After 45-60 min the reaction becomes yellow with a fine, yellow, powder

precipitating from the mixture. After a total reaction time of 2.5 h the mixture is filtered and 615 mg of Catalyst G is isolated as a bright, yellow powder. No further purification is performed.
$^1$H NMR ($C_6D_6$) δ 0.51 (d, 3 H, J = 6.73 Hz), 0.79 (s, 3H), 1.07 (s, 3H), 1.28 (d, 3H, J = 6.73 Hz), 1.53(m, 6H), 3.37 (m, 1H, J = 6.75 Hz), 3.96 (m, 1H, J = 6.73 Hz), 6.05 (s, 1H), 6.50 (d, 1H, J = 7,75 Hz), 6.92 (t, 1H, J = 7.93 Hz), 7.1- 7.59 (m, 12H), 7.6 (d, 1H), 7.8-8.0 (m, 2H), 8.3 (m, 1H), 8.69 (d, 1H, J = 7.65 Hz) ppm.

Synthesis of Catalyst H

To a solution of 9-bromophenanthrene (10.36 mg, 41 mmol) in 132 mL of anhydrous, degassed $Et_2O$ cooled to -40C is added under $N_2$ 27 mL (43.2 mmol) of a 1.6 M solution of n-BuLi in hexanes. The solution is swirled to mix and allowed to react at -40C for 3 hours during which colorless crystals precipitated from solution. The 9-phenanthrenyllithium is added as a slurry to a well-mixed solution of 6-naphthylpyridine-2-(2,6-diisopropylphenyl)imine (10.6 g, 27.04 mmol) in 130 mL of $Et_2O$ cooled to -40 C. After warming to ambient temperature over 1 h, the solution is stirred at ambient temperature for 2 hours. The reaction is then quenched with aq. $NH_4Cl$, and subjected to an aqueous/organic work-up. The organic washes are combined and dried over $Na_2SO_4$. Upon removal of the volatiles with rotary evaporation, the product precipitates from solution. The isolated solids are rinsed with cold hexanes. The material is vacuum dried at 70° C using the house vacuum over night. The dried material is isolated as a white solid, weighing 12.3 g for a yield of 80%. A second crop is isolated weighing 0.37 g. Mp 166-168° C.
$^1$H NMR ($C_6D_6$) δ 1.08 (dd, 12 H), 3.43 (m, 2H), 5.47 (m, 1H), 6.16 (d, 1H), 7.0- 7.8 (m, 14H), 8.2 (d, 1H), 8.5-8.6 (m, 4H), ppm. $^{13}$C NMR ($CDCl_3$) 24.68, 28.22, 68.87, 120.56, 122.89, 123.63, 123.73, 124.07, 124.1, 125.5, 125.59, 126.24, 126.42, 126.52, 126.76, 126.83, 126.9, 127.05, 127.14, 128.0, 128.55, 129.49, 129.55, 130.67, 130.71, 131.52, 131.55, 132.24, 134.39,137.57, 143.31, 159.1, 162 ppm.

*Catalyst H-(Nme$_2$)$_3$*: Inside of a dry box, six different teflon-screw capped, glass pressure tube reactors are each charged with $Hf(Nme_2)_4$ (1.55 g, 4.37 mmol, overall 9.3 g, 26.2 mmol), 10 mL of toluene and the ligand isolated from the previous procedure above (2.1 g, 3.68 mmol, overall 12.6 g, 22.1 mmol). The tightly sealed reactors are removed from the dry box and placed in a heater block with the temperature set at 125°C. The reactor tubes are heated overnight (~16 h). The cooled tubes are taken into the dry box and the contents of the reactor tubes are combined in a 500 mL round bottom flask. The flask is placed under vacuum to remove the dimethylamine and toluene. The light yellow/green solid which is left is rinsed with ~125 mL of cold pentane and filtered, yielding 13.6 g of a light yellow powder for a yield of 65%.

*Catalyst H:* The reaction is performed inside of a dry box. A 500 mL jar is charged with 250 mL of pentane and the hafnium amide isolated in the procedure outlined immediately above (13.6 g, 15.5 mmol). The mixture is cooled to -40° C. To the stirring mixture is slowly added 70 mL of a 2.0 M trimethyl aluminum (140 mmol) in hexane solution. After 3 h the reaction becomes yellow with a fine, powder precipitating from the mixture. The mixture is then cooled to -40° C and filtered. The initially collected product is rinsed with 2 x 60 mL of cold pentane. 10.24 g Catalyst H is isolated (84% yield) with a purity of > 99% by $^1$H NMR.

Synthesis of Armeenium Borate [methylbis(hydrogenatedtallowalkyl)ammonium tetrakis (pentafluoro phenyl) borate]

Armeenium borate can be prepared from ARMEEN® M2HT (available from Akzo-Nobel), HCl, and Li $[B(C_6F_5)_4]$ according to Example 2 of USP 5,919,983.

General 1 Gallon Continuous Solution Propylene/Ethylene

Copolymerization Procedure

Purified toluene solvent, ethylene, hydrogen, and propylene are supplied to a 1 gallon reactor equipped with a jacket for temperature control and an internal thermocouple. The solvent feed to the reactor is measured by a mass-flow controller. A variable speed diaphragm pump controls the solvent flow rate and increases the solvent pressure to the reactor. The propylene feed is measured by a mass flow meter and the flow is controlled by a variable speed diaphragm pump. At the discharge of the pump, a side stream is taken to provide flush flows for the catalyst injection line and the reactor agitator. The remaining solvent is combined with ethylene and hydrogen and delivered to the reactor. The ethylene stream is measured with a mass flow meter and controlled with a Research Control valve. A mass flow controller is used to deliver hydrogen into the ethylene stream at the outlet of the ethylene control valve. The temperature of the solvent/monomer is controlled by use of a heat exchanger before entering the reactor. This stream enters the bottom of the reactor. The catalyst component solutions are metered using pumps and mass flow meters, and are combined with the catalyst flush solvent This stream enters the bottom of the reactor, but in a different port than the monomer stream. The reactor is run liquid-full at 3.5 MPa gauge (500 psig) with vigorous stirring. The process flow is

in from the bottom and out of the top. All exit lines from the reactor are steam traced and insulated. Polymerization is stopped with the addition of a small amount of water, and other additives and stabilizers can be added at this point The stream flows through a static mixer and a heat exchanger in order to heat the solvent/polymer mixture. The solvent and unreacted monomers are removed at reduced pressure, and the product is recovered by extrusion using a devolatilizing extruder. The extruded strand is cooled under water and chopped into pellets. The operation of the reactor is controlled with a process control computer.

EXAMPLE 1

Propylene/Ethylene Polymerization

Using Metallocene Catalyst E (Comparative)

The general procedure for the 1 gallon continuous solution polymerization outlined above was employed. A catalyst solution containing 2.6 ppm Zr from Catalyst E was prepared and added to a 4 L catalyst storage tank. This solution was combined in a continuous stream with a continuous stream of a solution containing Armeenium tetrakis (pentafluorophenyl)borate in toluene and a continuous stream of a solution of PMAO-IP in toluene to give a ratio of total Ti:B:Al of 1:1.2:30. The activated catalyst solution was fed continuously into the reactor at a rate sufficient to maintain the reactor temperature at approximately 80 degrees C and a polymer production rate of approximately 3 pounds an hour. The polymer solution was continuously removed from the reactor exit and was contacted with a solution containing 100 ppm of water for each part of the polymer solution, and polymer stabilizers (i.e., 1000 ppm Irgaphos 168 and 1000 ppm Irganox 1010 per part of the polymer). The resulting exit stream was mixed, heated in a heat exchanger, and the mixture was introduced into a separator where the molten polymer was separated from the solvent and unreacted monomers. The resulting molten polymer was extruded and chopped into pellets after being cooled in a water bath. For this example, the propylene to ethylene ratio was 22.0. Product samples were collected over 1 hour time periods, after which time the melt flow rate was determined for each sample. Figure 7 is a $^{13}C$ NMR of Comparative Example 1, and it demonstrates the absence of regio-error peaks in the region around 15 ppm.

EXAMPLES 2-6

Examples 2-6 were conducted similar to Example I except as otherwise noted in Tables 2-6-1 and 2-6-2 below. Catalyst E is listed for comparative purposes. Figure 6 is the $^{13}C$ NMR sprectrum of the propylene/ethylene copolymer product of Example 2. Figures 2A and 2B show a comparison of the DSC heating traces of the propylene/ethylene copolymers of Comparative Example 1 and Example 2.

Table 2-6-1 - Polymerization Conditions

| Example | Reactor TEMP DEGC | SOLV FLOW (kg/hr) (LB/HR) | C2 FLOW (kg/hr) (LB/HR) | C3 FLOW (kg/hr) (LB/HR) | H2 FLOW SCCM | POLY (kg/hr) (LBS/HR) production rate |
|---|---|---|---|---|---|---|
| 1 (comparative) | 80.5 | 16.3 (36.0) | 0.22 (0.50) | 4.99 (1.00) | 0 | 1.41 (3.13) |
| 2 | 80.1 | 15.0 (33.0) | 0.09 (0.20) | 2.72 (6.00) | 20.8 | 1.57 (3.47) |
| 3 | 80.5 | 11.8 (3260) | 0.05 (0.10) | 2.72 (6.00) | 14.1 | 1.40 (3.09) |
| 4 | 79.9 | 11.8 (26.0) | 0.09 (0.20) | 2.72 (6.00) | 20.1 | 1.47 (3.25) |
| 5 | 80.0 | 11.8 (26.0) | 0.14 (0.30) | 2.72 (6.00) | 26.1 | 1.43 (3.16) |
| 6 | 80.3 | 11.8 (26.0) | 0.18 (0.40) | 2.72 (6.00) | 32.1 | 1.51 (3.32) |

Table 2-6-2 - Monomer conversion and activity

| Example | Catalyst | C3/C2 ratio | propylene conversion | ethylene conversion | catalyst concentration ppm(metal) | efficiency g metal per g polymer |
|---|---|---|---|---|---|---|
| 1 (comparative) | E | 22.00 | 25.7% | 64.8% | 2.6 | 6,145,944 |

(continued)

| Example | Catalyst | C3/C2 ratio | propylene conversion | ethylene conversion | catalyst concentration ppm(metal) | efficiency g metal per g polymer |
|---|---|---|---|---|---|---|
| 2 | G | 30.17 | 53.1% | 99.1% | 25.6 | 235,823 |
| 3 | H | 61.07 | 48.7% | 98.4% | 55.0 | 225,666 |
| 4 | H | 30.34 | 49.7% | 99.0% | 55.0 | 259,545 |
| 5 | H | 20.17 | 46.8% | 98.6% | 55.0 | 259,282 |
| 6 | H | 15.00 | 48.0% | 98.7% | 55.0 | 278,579 |

Table 2-6-3 - Summary of Polymer Analysis Data

| Example | MFR (g/10min) | Density (kg/dm3) | Cryst. (%) from density | DSC $T_g$ (˚C) | $T_{c,o}$ (˚C) | $T_{c,p}$ (˚C) |
|---|---|---|---|---|---|---|
| 1 | 72 | 0.8809 | 37.9 | -26.1 | 52.3 | 47.6 |
| 2 | 1.7 | 0.8740 | 29.6 | -24.8 | 59.0 | 49.3 |
| 3 | 2.2 | 0.8850 | 42.8 | -10.0 | 78.6 | 64.5 |
| 4 | 2.3 | 0.8741 | 29.7 | -23.2 | 50.8 | 41.6 |
| 5 | 2 | 0.8648 | 18.3 | -27.1 | 30.4 | 10.9 |
| 6 | 2.0 | 0.8581 | 9.9 | -29.6 | - | - |

Table 2-6-4 - Summary of Polymer Analysis Data cont'd

| Example | ΔHc (J/g) | Cryst. (%) (from Hc) | Tm,p (˚C) | Tm,e (˚C) | ΔHf (l/g) | Cryst. (%) (from Hf) |
|---|---|---|---|---|---|---|
| 1 | 40.8 | 24.7 | 91.9 | 114.3 | 52.1 | 31.6 |
| 2 | 27.1 | 16.4 | 64.5 | 128.9 | 38.0 | 23.0 |
| 3 | 45.0 | 27.3 | 102.2 | 145.7 | 65.3 | 39.6 |
| 4 | 30.6 | 18.5 | 67.4 | 145.6 | 42.9 | 26.0 |
| 5 | 8.7 | 5.3 | 50.0 | 119.4 | 13.0 | 7.9 |
| 6 | - | - | - | - | - | - |

Table 2-6-5 - Summary of Polymer Analysis Data cont'd

| Example | Ethylene (wt%)* | Ethylene (mol%)* | Regio-errors 14-16 ppm(mol%)* | Mn (kg/mol) | Mw (kg/mol) | MWD |
|---|---|---|---|---|---|---|
| 1 | 9.5 | 13.6 | 0.00 | 58.5 | 117.4 | 2.0 |
| 2 | 8.2 | 11.8 | 0.24 | 132.6 | 315.7 | 2.4 |
| 3 | 5.6 | 8.2 | 0.46 | 146.0 | 318.3 | 2.2 |
| 4 | 8.2 | 11.8 | 0.34 | 138.5 | 305.7 | 2.2 |
| 5 | 11.1 | 15.8 | 0.35 | | | |
| 6 | 13.2 | 18.6 | 0.37 | 127.5 | 306.8 | 2.4 |

Table 2-6-6-Summary of Polmer Analysis Data cont'd

| Example | %mm* | %mr* | %n* |
|---|---|---|---|
| 1 | 98.55 | 0 | 1.45 |
| 2 | 98.23 | 1.09 | 5.68 |
| 3 | 94.3 | 2.21 | 3.43 |
| 4 | 96.37 | 0 | 3.63 |
| 5 | 95.3 | 0.0 | 4.66 |

(continued)

| Example | %mm* | %mr* | %n* |
|---|---|---|---|
| 6 | 95.17 | 0 | 4.83 |

*corrected PPE + EPE

EXAMPLE 7

This example demonstrates the calculation ofB values for certain of the Examples disclosed herein. The polymer from Comparative Example 1 is analyzed as follows. The data was collected using a Varian UNITY Plus 400MHz NMR spectrometer, corresponding to a $^{13}C$ resonance frequency of 100.4 MHz. Acquisition parameters were selected to ensure quantitative $^{13}C$ data acquisition in the presence of the relaxation agent. The data was acquired using gated $^{1}H$ decoupling, 4000 transients per data file, a 7sec pulse repetition delay, spectral width of 24,200Hz and a file size of 32K data points, with the probe head heated to 130˚C. The sample was prepared by adding approximately 3mL of a 50/50 mixture of tetrachloroethane-d2/orthodichlorobenzene that is 0.025M in chromium acetylacetonate (relaxation agent) to 0.4g sample in a 10mm NMR tube. The headspace of the tube was purged of oxygen by displacement with pure nitrogen. The sample was dissolved and homogenized by heating the tube and its contents to 150˚C, with periodic refluxing initiated by heat gun.

Following data collection, the chemical shifts were internally referenced to the mmmm pentad at 21.90 ppm.

For propylene/ethylene copolymers, the following procedure is used to calculate the percent ethylene in the polymer. Integral regions are determined as follows:

Table 7-1: Integral Regions for Calculating % Ethylene

| Region designation | Ppm | Integral area |
|---|---|---|
| A | 44-49 | 259.7 |
| B | 36-39 | 73.8 |
| C | 32.8-34 | 7.72 |
| P | 31.0-30.8 | 64.78 |
| Q | Peak at 30.4 | 4.58 |
| R | Peak at 30 | 4.4 |
| F | 28.0-29.7 | 233.1 |
| G | 26-28.3 | 15.25 |
| H | 24-26 | 27.99 |
| I | 19-23 | 303.1 |
| Region D is calculated as follows: D = P x (G x Q)/2.<br>Region E is calculated as follows: E = R + Q + (G x Q)/2. | | |

The triads are calculated as follows:

Table 7-2: Traid Calculation

PPP = (F + A - 0.5D)/2

PPE=D

EPE = C

EEE = (E - 0.5G)/2

PEE=G

PEP = H

Moles P = (B + 2A)/2

Moles E = (E + G + 0.5B + H)/2

For this example, the mole % ethylene is calculated to be 13.6 mole %.

For this example, the triad mole fractions are calculated to be as follows:

Table 7-3: Triad Mole Calculation

PPP = 0.6706
PPE = 0.1722
EPE = 0.0224
EEE = 0.0097
PEE = 0.0442
EPE = 0.0811

From this, the B value is calculated to be (0.172 + 0.022 + 0.044 + 0.081) / 2 (.136 x .864) =1.36
In a similar manner, the B values for the following examples are calculated to be:

Table 7-4: B-Value Calculation

| Example | B Value |
|---|---|
| Comparative 1 | 1.36 |
| 2 | 1.68 |
| 3 | 1.7 |
| 4 | 1.78 |
| 6 | 1.7 |

EXAMPLE 8

Table 8 is a summary showing the skewness index, $S_{ix}$, for inventive and prior art samples. All of the samples were prepared and measured as described in Table C in the Description of the Preferred Embodiments and entitled Parameters Used for TREF. The copolymers of the invention have a skewness index greater than (-1.2). The results from Table 8 are represented graphically in Figure 11.

The inventive examples show unusual and unexpected results when examined by TREF. The distributions tend to cover a large elution temperature range while at the same time giving a prominent, narrow peak. In addition, over a wide range of ethylene incorporation, the peak temperature, $T_{Max}$, is near 60˚C to 65˚C. In the prior art, for similar levels of ethylene incorporation, this peak moves to higher elution temperatures with lower ethylene incorporation.

For conventional metallocene catalysts the approximate relationship of the mole fraction of propylene, $X_p$, to the TREF elution temperature for the peak maximum, $T_{Max}$, is given by the following equation:

$$Log_e(X_p) = -289/(273 + T_{max}) +0.74$$

For the inventive copolymers, the natural log of the mole fraction of propylene, LnP, is greater than that of the conventional metallocenes, as shown in theis equation:

$$LnP > -289/(273 + T_{max}) +0.75$$

Table 8: Summary of Skewness Index Results

| P/E* Sample No. | Catalyst Type | Ethylene Content (Mole %) | Elation Temperature of Peak maximum (˚C) | $S_{ix}$ |
|---|---|---|---|---|
| 8-1 | Catalyst H | 8.2 | 61.4 | 0.935 |
| 8-2 | Catalyst J | 8.9 | 60.8 | -0.697 |
| 8-3 | Catalyst J | 8.5 | 61.4 | -0.642 |
| 8-4 | Catalyst J | 7.6 | 65.0 | 0.830 |

(continued)

| P/E* Sample No. | Catalyst Type | Ethylene Content (Mole %) | Elation Temperature of Peak maximum (˚C) | $S_{ix}$ |
|---|---|---|---|---|
| 8-5 | Catalyst J | 7.6 | 65.0 | 0.972 |
| 8-6 | Catalyst J | 8.6 | 61.4 | 0.804 |
| 8-7 | Catalyst J | 9.6 | 60.2 | -0.620 |
| 8-8 | Catalyst J | 12.4 | 60.2 | 0.921 |
| 8-9 | Catalyst J | 8.6 | 60.8 | -0.434 |
| 8-10 | Catalyst J | 8.6 | 62.0 | 1.148 |
| 8-11 | Catalyst H | - | 57.8 | 1.452 |
| 8-12 | Catalyst J | - | 78.2 | 1.006 |
| 8-13 | Catalyst H | 4.4 | 80.0 | -1.021 |
| 8-14 | Catalyst E | 7.6 | 80.6 | -1.388 |
| 8-15 | Catalyst E | 10.0 | 70.4 | -1.278 |
| 8-16 | Catalyst E | 10.7 | 66.2 | -1.318 |
| 8-17 | Catalyst F | 11.1 | 69.2 | -1.296 |
| 8-18 | Catalyst E | 10.6 | 65.6 | -1.266 |

EXAMPLE 9

DSC analysis shows that propylene/ethylene copolymers produced by a solution polymerization process using a nonmetallocene, metal-centered, pyridal-amine ligand catalyst have melting behavior that differs in surprising ways from propylene/ethylene copolymers produced by metallocene polymerization processes that are known in the art. The different melting behavior of these copolymers compared to that of copolymers that are known in the art not only demonstrates the novelty of these materials, but also can be used to infer certain advantages of these materials for some applications. The novel aspects of the melting behavior of these copolymers and their associated utility are discussed below, after first describing the DSC analysis method.

Any volatile materials (e.g., solvent or monomer) are removed from the polymer prior to DSC analysis. A small amount of polymer, typically five to fifteen milligrams, is accurately weighed into an aluminum DSC pan with lid. Either hermetic or standard type pans are suitable. The pan containing the sample is then placed on one side of the DSC cell, with an empty pan with lid placed on the reference side of the DSC cell. The DSC cell is then closed, with a slow purge of nitrogen gas through the cell during the test. Then the sample is subjected to a programmed temperature sequence that typically has both isothermal segments and segments where the temperature is programmed to increase or decrease at a constant rate. Results that are presented here were all obtained using heat-flux type DSC instruments manufactured by TA Instruments (e.g., Model 2910 DSC). The measurement principles underlying heat-flux DSC are described on page 16 of Turi, *ibid.* The primary signals generated by such instruments are temperature (units: ˚C) and differential heat flow (units: watts) into or out of the sample (i.e., relative to the reference) as a function of elapsed time. Melting is endothermic and involves excess heat flow into the sample relative to the reference, whereas crystallization is exothermic and involves excess heat flow out of the sample. These instruments are calibrated using indium and other narrow-melting standards. Calibration ensures that the temperature scale is correct and for the proper correction of unavoidable heat losses.

Temperature programs for DSC analysis of semi-crystalline polymers involve several steps. Although the temperature programs used to generate the data presented here differed in some details, the critical steps were maintained constant throughout. The first step is an initial heating to a temperature sufficient to completely melt the sample; for polypropylene homopolymers and copolymers, this is 210˚C or higher. This first step also helps insure excellent thermal contact of the polymer sample with the pan. Although details of this first step differed for data presented here - for example, the rate of heating, the upper temperature, and the hold time at the upper temperature - in all cases the choices were sufficient to achieve the principal objectives of this step, of bringing all samples to a common completely melted starting point with good thermal contact. The second step involves cooling at a constant rate of 10˚C/min from an upper temperature of at least 210˚C to a lower temperature of 0˚C or less. The lower temperature is chosen to be at

or slightly below the glass transition temperature of the particular propylene polymer. The rate of crystallization becomes very slow at the glass transition temperature; hence, additional cooling will have little effect on the extent of crystallization. This second step serves to provide a standard crystallization condition, prior to examining subsequent melting behavior. After a brief hold at this lower temperature limit, typically one to three minutes, the third step is commenced. The third step involves heating the sample from a temperature of 0˚C or lower (i.e., the final temperature of the previous step) to 210˚C or higher at a constant rate of 10˚C/min. This third step serves to provide a standard melting condition, as preceded by a standard crystallization condition. All the melting behavior results presented here were obtained from this third step, that is, from the second melting of the sample.

The output data from DSC consists of time (see), temperature (˚C), and heat flow (watts). Subsequent steps in the analysis of melting endotherms are as follows. First, the heat flow is divided by the sample mass to give specific heat flow (units: W/g). Second, a baseline is constructed and subtracted from the specific heat flow to give baseline-subtracted heat flow. For the analyses presented here, a straight-line baseline is used. The lower temperature limit for the baseline is chosen as a point on the high temperature side of the glass transition. The upper temperature limit for the baseline is chosen as a temperature 5-10˚C above the completion of the melting endotherm. Although a straight-line baseline is theoretically not exact, it offers greater ease and consistency of analysis, and the error introduced is relatively minor for samples with specific heats of melting of 15-20 Joules per gram or higher. Employing a straight-line baseline in lieu of a more theoretically correct baseline does not substantively affect any of the results or conclusions presented below, although the fine details of the results would be expected to change with a different prescription of the instrumental baseline.

There are a number of quantities that can be extracted from DSC melting data. Quantities that are particularly useful in demonstrating differences or similarities among different polymers are: (1) the peak melting temperature, $T_{max}$ (˚C), which is the temperature at which the baseline-subtracted heat flow is a maximum (here the convention is that heat flow into the sample is positive); (2) the specific heat of melting, $\Delta h_m$ (J/g), which is the area under the melting endotherm obtained by integrating the baseline-subtracted heat flow (dq/dt) (W/g) versus time between the baseline limits; (3) the specific heat flow $(dq/dt)_{max}$ (W/g) at the peak melting temperature; (4) the peak specific heat flow normalized by the specific heat of melting, $\{(dq/dt)_{max}/\Delta h_m\}$ ($sec^{-1}$); (5) the first moment $T_1$ of the melting endotherm, defined and calculated as described below; (6) the variance $V_1$ (˚$C^2$) of the melting endotherm relative to the first moment $T_1$, defined and calculated as described below; and (7) the square root of the variance, $V_1^{1/2}$ (˚C), which is one measure of the breadth of the melting endotherm.

Treatment of the melting endotherm as a distribution is a useful way to quantify its breadth. The quantity that is distributed as a function of temperature is the baseline-subtracted heat flow (dq/dt). That this is also a distribution of temperature is made explicit using the calculus chain rule, (dq/dt) = (dq/Dt)(Dt/dt) where (Dt/dt) is the heating rate. The standard definition of the first moment $T_1$ of this distribution is given by the following equation, where the integrations are carried out between the baseline limits. All integrations are most reliably performed as (dq/dt) versus time, as opposed to the alternative (dq/Dt) versus temperature. In the following equation, (dq/dt) and T are the specific heat flow and temperature at time t.

$$T_1 = \frac{\int T \cdot (dq/dt)\,dt}{\int (dq/dt)\,dt}$$

The variance $V_1$ relative to the first moment is then standardly defined as:

$$V_1 = \frac{\int (T - T_1)^2 \cdot (dq/dt)\,dt}{\int (dq/dt)\,dt}$$

Both $V_1$ and $V_1^{1/2}$ are measures of the breadth of the melting endotherm.

Results of DSC analyses of both inventive and comparative polymers are shown in Table 9-1. All the samples are propylene/ethylene copolymers Polymers 1-12 were made using Catalyst H in a solution process. Polymers 13 to 21 were made with Catalyst E in a solution process. An idea of the precision of the experimental method plus the data analysis procedure is provided by replicates (polymers 15, and 17) and by the consistency of results for sets of polymers that were synthesized under nearly identical conditions (polymers 1 to 3, 6 to 8 and 9-12).

Differences in melting behavior are most easily seen with the aid of figures. Figure 12 compares the melting

endotherms of Samples 4 and 17a. These two propylene/ethylene copolymers have nearly equivalent heats of melting and mole percent ethylene contents, about 71 J/g and 8 mole%. However, despite these similarities, the melting behavior of the inventive copolymer (Sample 4) is surprisingly different than that of the comparative copolymer (Sample 17a). The melting endotherm of Sample 4 is shifted towards lower temperatures and significantly broadened, when comparing at equivalent heat of melting. These changes in melting behavior are unique to and characteristic of the copolymers of this invention.

Comparison at equivalent heats of melting is particularly meaningful and relevant This is because equivalent heats of melting implies approximately equal levels of crystallinity, which in turn implies that the room temperature moduli should be similar. Therefore, at a given modulus or stiffness, the copolymers of this invention possess usefully broadened melting ranges compared to typical non-inventive copolymers.

Figures 13 to 17 which are derived from the results in Table 9-1, further highlight the differences in melting behavior for the copolymers of this invention compared to typical copolymers. For all five of these figures, quantities are plotted as functions of the heat of melting, which as described above is an especially meaningful and relevant basis for making intercomparisons and inferring utility. For these plots, data have broken into two series based on the catalyst type used to make the polymer, either metallocene or nonmetallocene type.

Figure 13 demonstrates how the peak melting temperature is shifted towards lower temperature for the copolymers of this invention. All the changes in melting behavior, of which this shift in peak melting temperature is but one example, imply that there are differences in the crystalline structure at the level of crystal lamellae or other type of primary crystalline elements. In turn, such differences in crystalline structure can most reasonably be attributed to differences in microstructure, for example, the different type of mis-insertion errors or the higher B values that characterize the polymers of this invention. Regardless of the exact nature of the microstructural features that give rise to the changes in melting behavior, the changes are in and of themselves evidence that the copolymers of this invention are novel compositions.

Figure 14 which shows a plot of the temperature $T_{1\%c}$ at which there is approximately 1% residual crystallinity, demonstrates another surprising aspect of the melting behavior of the copolymers of this invention. The factor that is used to convert specific heat of melting into nominal weight% crystallinity is 165 J/g = 100 weight% crystallinity. (Use of a different conversion factor could change details of the results but not substantive conclusions.) With this conversion factor, the total crystallinity of a sample (units: weight% crystallinity) is calculated as 100% times $\Delta h_m$ divided by 165 J/g. And, with this conversion factor, 1% residual crystallinity corresponds to 1.65 J/g. Therefore, $T_{1\%c}$ is defined as the upper limit for partial integration of the melting endotherm such that $\Delta h_m$ minus the partial integral equals 1.65 J/g, where the same lower limit and baseline are used for this partial integration as for the complete integration. Surprisingly, for nonmetallocene-catalyzed copolymers as compared to metallocene-catalyzed copolymers, this 1% residual crystallinity temperature shifts downward less rapidly with increase in ethylene level (i.e., with decrease in the heat of melting). This behavior of $T_{1\%c}$ is similar to that of the final temperature of melting $T_{me}$.

Figure 15, which shows the variance relative to the first moment of the melting endotherm as a function of the heat of melting, demonstrates directly the greater breadth of the melting endotherm for the copolymers of this invention.

Figure 16, which shows the maximum heat flow normalized by the heat of melting as a function of the heat of melting, further demonstrates the broadening of the melting endotherm. This is because, at equivalent heat of melting, a lower peak value implies that the distribution must be broadened to give the same area. Roughly approximating the shape of these melting curves as a triangle, for which the area is given by the formula one-half times the base times the height, then bl/b2 = h2/h1. The inventive copolymers show as much as a four-fold decrease in height, implying a significant increase in breadth.

Figure 17 illustrates a useful aspect of the broader melting range of the inventive polymers, namely that the rate at which the last portion of crystallinity disappears (units: weight% crystallinity per ˚C) is significantly lower than for metallocene polymers.

The data in Table 9-2 demonstrate in practical terms the utility of this broadening of the melting endotherm. Entries in Table 9-2 illustrate: (1) the extent to which a greater fraction of melting occurs at lower temperatures, which is important for heat seal and bonding applications, and which is greater for the inventive copolymers; and (2) the extent to which crystallinity remains at higher temperatures and the rate at which the final portion of crystallinity disappears, which can be important for fabrication operations such as thermoforming, foaming, blow molding, and the like, both of which are greater for the inventive copolymers.

Table 9-1. Melting Results from DSC

| Sample* | ethylene (mole %) | $\Delta h_m$ (J/g) | $T_{max}$ (˚C) | T, (˚C) | $(dq/dt)_{max}/\Delta h_m$ ($sec^{-1}$) | $V_1$ (˚$C^2$) | $T_{1\%c}$ (˚C) | $R_f$ (**) |
|---|---|---|---|---|---|---|---|---|
| 9-1-1 | 1.5 | 92.4 | 138.2 | 118.4 | 0.0105 | 630 | 142.0 | 1.48 |

(continued)

| Sample* | ethylene (mole %) | $\Delta h_m$ (J/g) | $T_{max}$ (˚C) | T, (˚C) | $(dq/dt)_{max}/\Delta h_m$ ($sec^{-1}$) | $V_1$ (˚$C^2$) | $T_{1\%c}$ (˚C) | $R_f$ (**) |
|---|---|---|---|---|---|---|---|---|
| 9-1-2 | 4.3 | 85.0 | 120.7 | 99.2 | 0.0045 . | 716 | 135.0 | 0.40 |
| 9-1-3 | 8.2 | 67.5 | 85.9 | 83.8 | 0.0023 | 909 | 139.7 | 0.19 |
| 9-1-4 | 8.2 | 71.2 | 93.0 | 84.4 | 0.0025 | 835 | 137.5 | 0.19 |
| 9-1-5 | 8.2 | 74.6 | 108.2 | 87.0 | 0.0029 | 790 | 134.6 | 0.23 |
| 9-1-6 | 11.8 | 51.6 | 71.7 | 69.3 | 0.0024 | 790 | 124.4 | 0.14 |
| 9-1-7 | 11.8 | 52.5 | 74.8 | 69.4 | 0.0025 | 781 | 123.7 | 0.14 |
| 9-1-8 | 11.8 | 51.9 | 73.9 | 69.4 | 0.0025 | 802 | 124.3 | 0.14 |
| 9-1-9 | 15.8 | 24.0 | 55.2 | 66.7 | 0.0031 | 667 | 112.0 | 0.10 |
| 9-1-10 | 15.8 | 28.7 | 552 | 66.3 | 0.0026 | 795 | 118.0 | 0.10 |
| 9-1-11 | 15.8 | 27.6 | 55.6 | 66.0 | 0.0026 | 783 | 116.4 | 0.10 |
| 9-1-12 | 15.8 | 26.9 | 55.2 | 66.4 | 0.0026 | 769 | 115.7 | 0.10 |
| 9-1-13 | ... | 90.3 | 140.6 | 125.0 | 0.0076 | 419 | 146.1 | 1.21 |
| 9-1-14 | ... | 91.3 | 139.0 | 123.9 | 0.0068 | 374 | 145.5 | 1.05 |
| 9-1-15a | 4.2 | 110.2 | 137.7 | 121.8 | 0.0094 | 337 | 144.3 | 0.95 |
| 9-1-16b | 4.2 | 96.5 | 137.9 | 121.1 | 0.0100 | 451 | 142.7 | 1.38 |
| 9-1-16 | ... | 94.6 | 136.7 | 120.3 | 0.0086 | 385 | 140.5 | 1.43 |
| 9-1-17a | 8.0 | 71.4 | 117.5 | 105.8 | 0.0081 | 197 | 124.8 | 0.74 |
| 9-1-17b | 8.0 | 69.7 | 117.0 | 103.4 | 0.0080 | 271 | 122.8 | 1.00 |
| 9-1-18 | ... | 70.1 | 110.3 | 91.0 | 0.0062 | 512 | 115.9 | 0.95 |
| 9-1-19 | ... | 55.9 | 97.0 | 78.7 | 0.0052 | 436 | 103.9 | 0.67 |
| 9-1-20 | ... | 19.8 | 63.0 | 61.1 | 0.0044 | 188 | 80.1 | 0.25 |
| 9-1-21 | ... | 18.2 | 56.6 | 58.8 | 0.0049 | 158 | 75.3 | 0.27 |

* Samples, samples -1 to -12 with catalyst H, and -13 to -19 with catalyst E.
** Units for $R_f$: weight% crystallinity per ˚C

Table 9-2: Broadening of the Melting Endotherm

| Sample | Starting Crystallinity (weight%) | fraction melted at $T_1$ - 30˚C | fraction Melted at $T_1$ - 20˚C | fraction remaining at $T_1$ + 20˚C | fraction remaining at $T_1$ + 30˚C |
|---|---|---|---|---|---|
| 9-2-8 (inventive) | 43.2 | 0.153 | 0.229 | 0.249 | 0.134 |
| 9-2-22a (comparative) | 43.3 | 0.040 | 0.112 | 0.019 | 0.004 |
| 9-2-11 (inventive) | 31.8 | 0.143 | 0.235 | 0.221 | 0.131 |
| 9-2-25 (comparative) | 33.9 | 0.103 | 0.170 | 0.127 | 0.009 |

EXAMPLE 10

Figures 8 and 9 report certain elasticity data for the polymers of this invention and certain comparative polymers.

Table 10-1 describes the elastomers.

The test samples were compression molded specimens. Polymer in pellet form was compression molded at 190C into 1.5 mm thick sheets. The sheets were cooled by placing each between two platens at 25C under light pressure. The specimens were allowed to age for at least seven days at ambient conditions before testing.

Tensile "dog bones" were punched out of the sheets using a knife shaped according to ASTM D-1708. The first melting behavior was measured by cutting out a 5 to 10 mg piece of the aged specimen. The specimen was loaded into an aluminum pan and analyzed in a differential scanning calorimeter manufactured by TA Instruments Incorporated. Heating spanned -50 to 230C at 10C/min.

The specimens were tested in uniaxial tension with a mechanical test device (Instron Corp.) fitted with pneumatic grips. The engineering strain rate was 400% per minute. Both strain to break and multicycle loading strain histories were used. In the case of multicycle loading, specimens were loaded and unloaded to various strains (100 to 900%) for up to 10 cycles. No pause was used between successive cycles.

Table 10-2 reports the data in Figures 8 and 9. The data in Table 10-2 reports elasticity versus crystallinity for the same group of elastomers. Crystallinity is an important property in elastomeric applications because it controls to a large extent the stiffness (i.e., modulus) of a material. The virgin or unstretched metallocene polypropylenes exhibit elasticity versus crystallinity similar to the homogeneous polyethylene and ethylene-stryene elastomers, while the elastomeric polymers of this invention exhibit higher elasticity at the same crystallinity. Even after pre-stretching, the elastomeric polymers of this invention continue to exhibit superior elasticity at the same crystallinity as compared to both the metallocene propylenes and the homogeneous polyethylene and ethyleae-stryene elastomers. The polymers of this invention demonstrate similar elasticity after stretching as do commercial grade SEBS polymers, e.g., Krayton G-1657.

Table 10-1: Elastomers

| Polymer samples | Description | Copolymer (wt.%) | Copolymer (mol%) | DSC Crystallinity (wt.%) |
|---|---|---|---|---|
| 1 | P/E* polymer | 11 | 16 | 18 |
| 2 | P/E* polymer | 13 | 19 | 10 |
| A | metallocene propylene-ethylene copolymer | - | - | 21 |
| B | metallocene propylene-ethylene copolymer | - | - | 4 |
| C | ethylene-octene copolymer | 41 | 15 | 14 |
| D | Affinity EG8100 | 35 | 12 | 6 |
| E | ethylene-styrene copolymer | 41 | 16 | 5 |
| F | Kraton G-1657 (SEBS) | - | - | - |

Table 10-2

Elasticity Values of the Data in Figures 8 and 9

| Polymer | Virgin 1st cycle | Pre-stretched 10th cycle | average (> 1 cycle) |
|---|---|---|---|
| 1 | 0.57 | 0.88 | 0.88 |
| 2 | 0.75 | 0.97 | 0.97 |
| A | 0.49 | 0.85 | 0.83 |
| B | 0.71 | 0.99 | 0.99 |
| C | 0.52 | 0.78 | 0.76 |
| D | 0.64 | 0.92 | 0.89 |
| E | 0.71 | 0.92 | 0.90 |
| F | 0.90 | 0.98 | 0.99 |

EXAMPLE 11

A series of spinning trials produced various P/E* and comparative fibers from which elasticity, tenacity/elongation balance, and thermal behavior (bonding strength) were measured.

Elasticity

Two single filament fibers were produced. One fiber (52.2 denier) was made with a P/E* copolymer (11 weight percent ethylene, percent crystallinity of 15.3, 2 MFR, density 0.865 g/cc, and a melting point of 67C), and the other fiber (52.5 denier) was made with a metallocene-catalyzed ethylene-octene copolymer (percent crystallinity of 13.2, 2 MI, and a density of 0.87 g/cc). The elasticity of the fibers was measured using ASTM D1774 - Elastic Recovery. According to this test, the lower the unrecoverable elongation (if unrecoverable elongation is zero, then recovery is 100%), the better the elasticity. The results are reported in Figure 18.

Figure 18 shows that at similar percent crystallinity, the fiber made from the P/E* polymer demonstrated better elasticity than the fiber made from the metallocene-catalyzed ethylene-octene copolymer. This superior elasticity means that the fiber made from the P/E* copolymer will provide better elastic recovery for nonwoven fabrics and this, in turn, means that the fabrics can be thinner and more conforming to the body (for increased comfort). The fiber can be in either spunbond or stable format, and a representative nonwoven fabric in which the fiber can be used is a diaper, e.g., as the topsheet or backsheet (stretching without yielding).

The superior elasticity also means that the fiber made from the P/E* polymer will improve the resiliency of a carpet either when made only from P/E* polymer or when made from a blend of P/E* polymer and propylene homopolymer. This desirable elasticity will allow the fibers to extend under a load (e.g., when walked upon) without yielding, and then recovering without lying over. Moreover, the P/E* polymer will improve the haptics, e.g, tactile feel, of the fiber as compared to the fiber made from an ethylene-octene copolymer.

The superior elasticity also means that the fiber made from the P/E* polymer, if crosslinked, is desirable for use in stretch apparel manufacture. Again, the fabrics made from these fibers can be constructed in a thinner format which, in turn, means better conformity to the body and better comfort.

Tenacity/Elongation Balance

Three 2 denier (per filament, i.e., 2 dpf) monolithic fibers were produced using a 55 die hole. All the polymers from which the fibers were made were 25 MFR. Two of the fibers were made with a P/E* copolymer of a MWD between 2 and 3. The first of these polymers contained 3 weight percent ethylene, and had a percent crystallinity of 48. The second of these polymers contained 5 weight percent ethylene, and had a percent crystallinity of 43. The third fiber was made from a Ziegler-Natta catalyzed propylene homopolymer, and it had a percent crystallinity of 59. The fibers were tested as a bundle (i.e., as yam) using ASTM D2256.

The tenacity and elongation-at-break balance for the three yarns are reported in Figures 19 and 20. The yam made from the fibers made from the P/E* polymers exhibit a better balance of these properties than the yam made from the fibers made from the propylene homopolymer. The latter has high tenacity with low elongation-at-break while the former shows lower tenacity and higher elongation-at-break. This improved balance will provide better extensibility when the fibers are used in nonwoven applications, e.g., baby diapers and feminine hygiene products.

Thermal Behavior

Three 2 denier (per filament, i.e., 2 dpf) bicomponent fibers were prepared. The core of each fiber was PET, and the sheath was either a P/E* polymer blended with maleic anhydride grafted polypropylene, or a Ziegler-Natta catalyzed polyethylene polymer blended with maleic anhydride grafted polyethylene. The bicomponent fibers were cut and crimped, and then blended with cellulose to create a nonwoven back sheet.

Two of the fibers were made with a P/E* copolymer with a 25 MFR. The first of these polymers contained 3 weight percent ethylene, and had a percent crystallinity of 48. The second of these polymers contained 5 weight percent ethylene, and had a percent crystallinity of 43. The third fiber was made from a Ziegler-Natta catalyzed ethylene-octene copolymer with a density of 0.93 g/cc, an 18 MI and a percent crystallinity of 53.

Dupont DSC-910 was used to measure the thermal transition temperatures and heat of transition for the sample run under nitrogen. In order to eliminate previous thermal history, the samples were first heated to about 200C. Heating and cooling curves were recorded at 10C/min. The binding strength was tested using 1 x 152.4 mm (6 (inch) strips of nonwoven fabric with 50.8 mm (2 inch) gauge and 25.4 mm (1 inch) per minute strain rate. The results are reported in Table 11.

TABLE 11

| Sample Description | Peak Melt Temperature (C) | Bonding Window (C) | Binding Strength at 165C (MPa) (psi) |
|---|---|---|---|
| P/E*, 3 wt% E | 122 | 30-40 | 0.182 (26) |
| P/E*, 5 wt% E | 105 | 30-40 | 0.217 (31) |
| Ethylene-Octene Copolymer | 127 | 5-10 | 0.14 (20) |

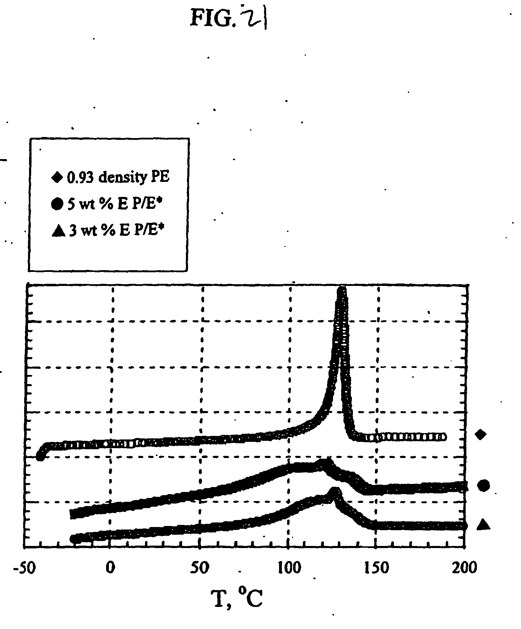

The P/E* polymer's low melting temperature and broad melting range provides better binding strength than the ethylene-octene copolymer. Figure 21 is an endotherm plot of these samples, and it shows the breadth of the melting range of the P/E* polymers as compared to the ethylene-octene copolymer. The broadness of the melting range correlates to the bonding window of the fiber. The binding strength is related to the peak melting temperature as shown in Table 11.

The thermal behavior of the P/E* polymers allows its use in low melting binder fiber applications and nonwoven fiber applications in which bonding window and binding strength (e.g., low initiation temperature, broad bonding window and high bond strength) are important. Applications for fibers made from these P/E* polymers include as a binder fiber for absorbent cores, carpet fiber tuft reinforcement, upholstery binder and the like. Fibers made from these materials can also be blended and/or fused with Ziegler-Natta catalyzed polypropylene fibers into high-loft, 3-dimensional nonwoven materials.

## Claims

1. A fiber comprising an isotactic copolymer of propylene and one or more unsaturated comonomers, the copolymer **characterized** as (A) comprising at least about 60 wt% of units derived from propylene, and between about 0.1 and 40 wt% the units derived from an unsaturated comonomer, and (B) having at least one of the following properties: (i)$^{13}$CNMR peaks corresponding to a regio-error at about 14.6 and about 15.7 ppm, the peaks of about equal intensity, (ii) a B-value greater than 1.4 when the comonomer content of the copolymer is at least 3 wt%, (iii) a skewness index, $S_{ix}$ greater than -1.20, (iv) a DSC curve with a $T_{me}$ that remains essentially the same and a $T_{max}$ that decreases as the amount of comonomer in the copolymer is increased, and (v) an X-ray diffraction pattern that reports more gamma-form crystals than a copolymer having the same monomer composition within 10 wt%, and the same Mw within 10 wt% prepared with a Ziegler-Natta (Z-N) catalyst.

2. The fiber of claim 1 wherein the units derived from an unsaturated comonomer is further **characterized** as comprising 0.1-35 wt% of units derived from ethylene, and 0 to 35 wt% units derived from one or more other unsaturated comonomers.

3. The fiber of claim 1 in which the copolymer has at least the $^{13}$CNMR peaks and B-value properties of (i) and (ii), respectively.

4. The fiber of claim 3 further comprising a polymer other than the copolymer **characterized** as having $^{13}$CNMR peaks corresponding to a regio-error at about 14.6 and about 15.7 ppm, the peaks of equal intensity, and a B-value greater than 1.4 when the comonomer content of the copolymer is at least 3 wt%.

5. The fiber of claim 4 in which the fiber is a bicomponent fiber.

6. The fiber of claim 5 in which the other polymer is at least one of an ethylene or $\alpha$-olefin homopolymer or interpolymer, styrene-based rubber, acrylonitrile-based rubber, natural rubber, thermoplastic polyurethane, epoxy resin, vinyl ester resin, polyester, phenolic resin, a homopolymer or copolymer of vinyl chloride or vinylidene chloride, acrylate resin, nylon and polycarbonate.

7. The fiber of claim 1 blended with other forms of fiber.

8. The fiber of claim 1 blended with cotton fibers.

9. The fiber of claim 1 blended with polyester fibers.

**10.** A fabric comprising the fiber of claim 1.

**11.** The fabric of claim 10 which is woven.

**12.** The fabric of claim 10 which is nonwoven.

**13.** Carpet, synthetic hair, a feminine hygiene product, a diaper, athletic sportswear, apparel, upholstery, bandages and sterilizable medical apparel and instrument wraps comprising the fiber of claim 1.

**Patentansprüche**

**1.** Faser umfassend ein isotaktisches Copolymer aus Propylen und einem oder mehreren ungesättigten Comonomeren, wobei das Copolymer **dadurch gekennzeichnet ist, dass** es (A) mindestens etwa 60 Gew.-% an Einheiten, die aus Propylen stammen, und zwischen etwa 0,1 und 40 Gew.-% an Einheiten, die aus einem ungesättigten Comonomer stammen, umfasst, und (B) mindestens eine der folgenden Eigenschaften hat: (i) $^{13}$CNMR-Peaks entsprechend einem Regio-Fehler bei etwa 14,6 und etwa 15,7 ppm, wobei die Peaks etwa gleiche Intensität haben, (ii) ein B-Wert von größer als 1,4, wenn der Comonomergehalt des Copolymers mindestens 3 Gew.-% ist, (iii) ein Schiefe-Index $S_{ix}$ von größer als -1,20, (iv) eine DSC-Kurve mit einer $T_{me}$, die im Wesentlichen die gleiche bleibt und einer $T_{max}$, die fällt, wenn die Menge an Comonomer in dem Copolymer erhöht wird, und (v) ein Röntgendiffraktrogramm, das mehr Gamma-förmige Kristalle anzeigt als ein Copolymer, das die gleiche Monomerzusammensetzung innerhalb 10 Gew.-% und das gleiche $M_w$ innerhalb 10 Gew.-% hat und mit einem Ziegler-Natta (Z-N)-Katalysator hergestellt wurde.

**2.** Faser nach Anspruch 1, wobei die Einheiten, die aus einem ungesättigten Comonomer stammen, ferner **dadurch gekennzeichnet sind, dass** sie 0,1-35 Gew.-% an Einheiten, die aus Ethylen stammen, und 0 bis 35 Gew.-% an Einheiten, die aus einem oder mehreren anderen ungesättigten Comonomeren stammen, umfassen.

**3.** Faser nach Anspruch 1, in der das Copolymer mindestens die $^{13}$CNMR-Peaks und B-Wert-Eigenschaften von (i) bzw. (ii) hat.

**4.** Faser nach Anspruch 3, ferner umfassend ein anderes Polymer als das Copolymer, das **dadurch gekennzeichnet ist, dass** es $^{13}$CNMR-Peaks entsprechend einem Regio-Fehler bei etwa 14,6 und etwa 15,7 ppm hat, wobei die Peaks von gleicher Intensität sind, und einen B-Wert von größer als 1,4 hat, wenn der Comonomergehalt des Copolymers mindestens 3 Gew.-% ist.

**5.** Faser nach Anspruch 4, in der die Faser eine Bikomponentenfaser ist.

**6.** Faser nach Anspruch 5, in der das andere Polymer mindestens eins von einem Ethylen oder $\alpha$-Olefin-Homopolymer oder Interpolymer, Styrol-basierten Gummi, Acrylnitril-basierten Gummi, natürlichen Gummi, thermoplastischen Polyurethan, Epoxidharz, Vinylesterharz, Polyester, Phenolharz, Homopolymer oder Copolymer von Vinylchlorid oder Vinylidenchlorid, Acrylatharz, Nylon und Polycarbonat ist.

**7.** Faser nach Anspruch 1, gemischt mit anderen Faserformen.

**8.** Faser nach Anspruch 1, gemischt mit Baumwollfasern.

**9.** Faser nach Anspruch 1, gemischt mit Polyesterfasern.

**10.** Gewebe, umfassend die Faser nach Anspruch 1.

**11.** Gewebe nach Anspruch 10, das gewebt ist.

**12.** Gewebe nach Anspruch 10, das nicht-gewebt ist.

**13.** Teppich, synthetisches Haar, ein Hygieneprodukt für Frauen, eine Windel, Athletik-Sportbekleidung, Kleidung, Polstermöbel, Binden und sterilisierbare medizinische Kleidung und Instrument-Hüllen, umfassend die Faser nach Anspruch 1.

**Revendications**

1. Fibre comprenant un copolymère isotactique de propylène et d'un ou plusieurs comonomères insaturés, lequel copolymère présente les caractéristiques suivantes :

   A) il comporte au moins à peu près 60 % en poids de motifs dérivés du propylène et à peu près 0,1 à 40 % en poids de motifs dérivés de comonomère insaturé ;
   B) et il possède au moins l'une des propriétés suivantes :

      i) en RMN du $^{13}C$, des pics correspondant à une régio-erreur, situés aux environs de 14,6 ppm et de 15,7 ppm, qui ont des intensités à peu près égales,
      ii) un indice B supérieur à 1,4 quand le copolymère contient au moins 3 % en poids de comonomère,
      iii) un indice de gauchissement $S_{ix}$ supérieur à -1,20,
      iv) une courbe d'AED où la température de fin de fusion $T_{ff}$ reste pratiquement constante et la température de pic de fusion $T_{max}$ diminue quand la proportion de comonomère dans le copolymère augmente,
      v) et un diagramme de diffraction des rayons X qui indique la présence de cristaux de forme gamma en plus grand nombre que dans le cas d'un copolymère présentant la même composition en monomères, à 10 % près, et la même masse molaire moyenne en poids Mw, à 10 % près, mais préparé à l'aide d'un catalyseur de Ziegler-Natta (catalyseur Z-N).

2. Fibre conforme à la revendication 1, dans laquelle, pour ce qui est des motifs dérivés de comonomère insaturé, il y a 0,1 à 35 % en poids de motifs dérivés de l'éthylène et 0 à 35 % en poids de motifs dérivés d'un ou plusieurs autres comonomères insaturés.

3. Fibre conforme à la revendication 1, dans laquelle le copolymère possède au moins les propriétés (i) et (ii) concernant respectivement les pics observés en RMN du $^{13}C$ et l'indice B.

4. Fibre conforme à la revendication 3, comprenant en outre un polymère autre que le copolymère présentant les caractéristiques de donner lieu, en RMN du $^{13}C$, à des pics correspondant à une réglo-erreur, situés aux environs de 14,6 ppm et de 15,7 ppm, qui ont des intensités à peu près égales, et d'avoir un indice B supérieur à 1,4 quand le copolymère contient au moins 3 % en poids de comonomère.

5. Fibre conforme à la revendication 4, laquelle fibre est une fibre bicomposant.

6. Fibre conforme à la revendication 5, dans laquelle l'autre polymère est au moins l'un des suivants : homopolymères d'éthylène ou d'$\alpha$-oléfine, interpolymères de tels composés, caoutchoucs à base de styrène, caoutchoucs à base d'acrylonitrile, caoutchouc naturel, polyuréthanes thermoplastiques, résines époxy, résines vinyl-esters, polyesters, résines phénoliques, homopolymères et copolymères de chlorure de vinyle ou de chlorure de vinylidène, résines d'acrylate, nylons et polycarbonates.

7. Fibres conformes à la revendication 1, mélangées avec des fibres d'autres types.

8. Fibres conformes à la revendication 1, mélangées avec des fibres de coton.

9. Fibres conformes à la revendication 1, mélangées avec des fibres de polyester.

10. Etoffe comprenant des fibres conformes à la revendication 1.

11. Etoffe conforme à la revendication 10, qui est tissée.

12. Etoffe conforme à la revendication 10, qui est non-tissée.

13. Tapis, chevelure artificielle, article d'hygiène féminine, couche, vêtement de sport athlétique, article d'habillement, tissu d'ameublement, bandage, habit médical stérilisable ou étui d'instrument stérilisable, comprenant des fibres conformes à la revendication 1.

FIG. 1

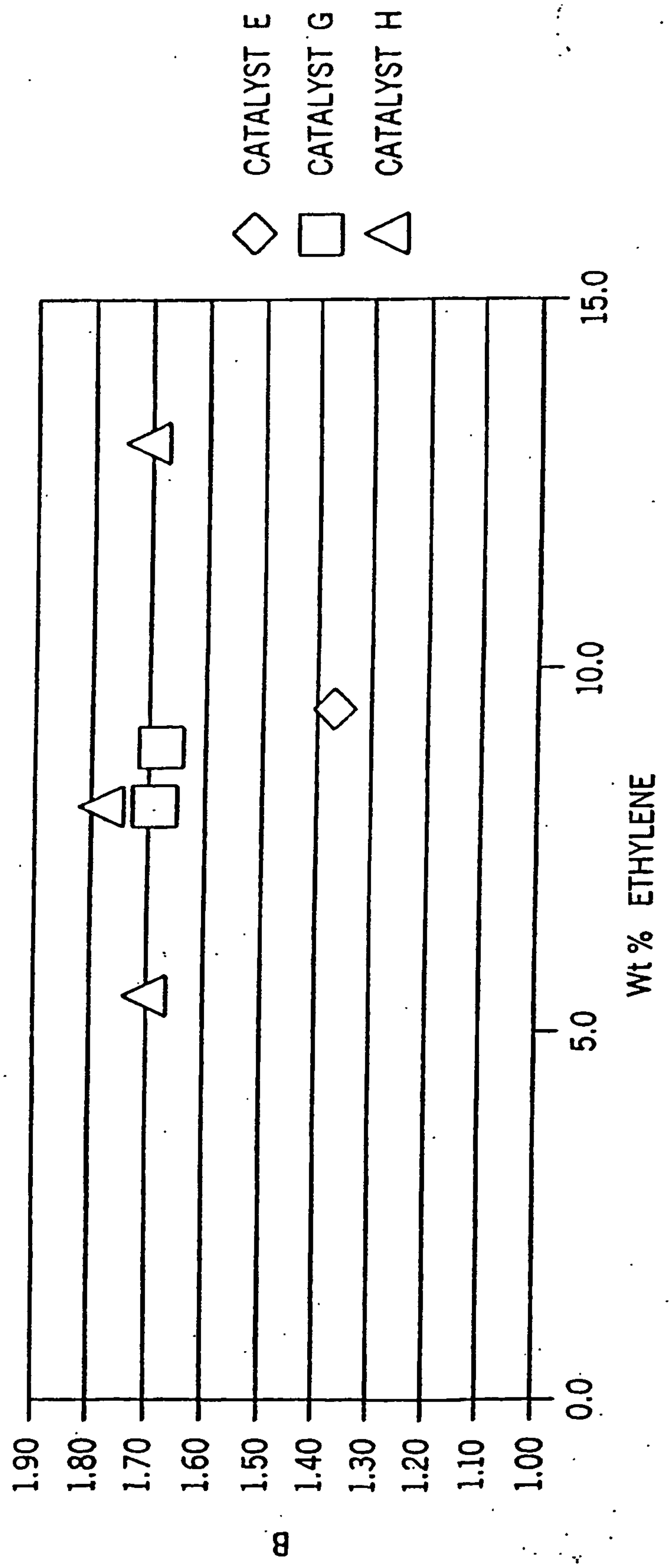
CATALYST E
CATALYST G
CATALYST H
B
1.90
1.80
1.70
1.60
1.50
1.40
1.30
1.20
1.10
1.00
0.0
5.0
10.0
15.0
Wt % ETHYLENE

FIG. 2A

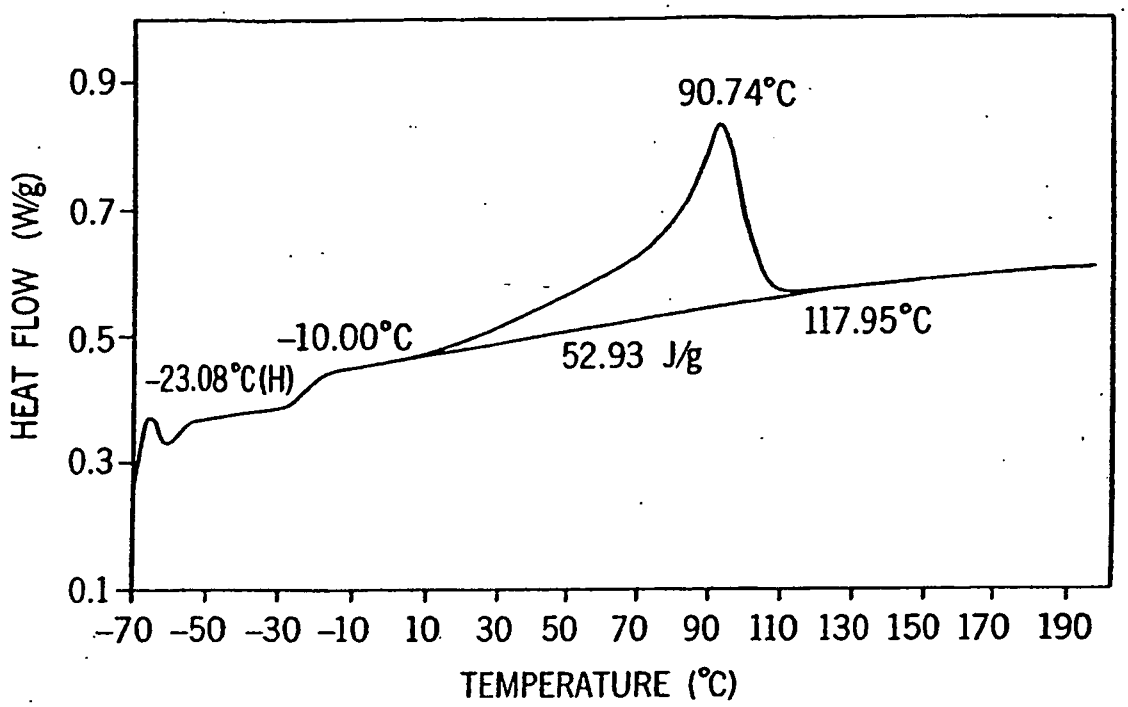
90.74°C
0.9
0.7
0.5
0.3
0.1
HEAT FLOW (W/g)
-10.00°C
-23.08°C(H)
52.93 J/g
117.95°C
-70 -50 -30 -10 10 30 50 70 90 110 130 150 170 190
TEMPERATURE (°C)

FIG. 2B

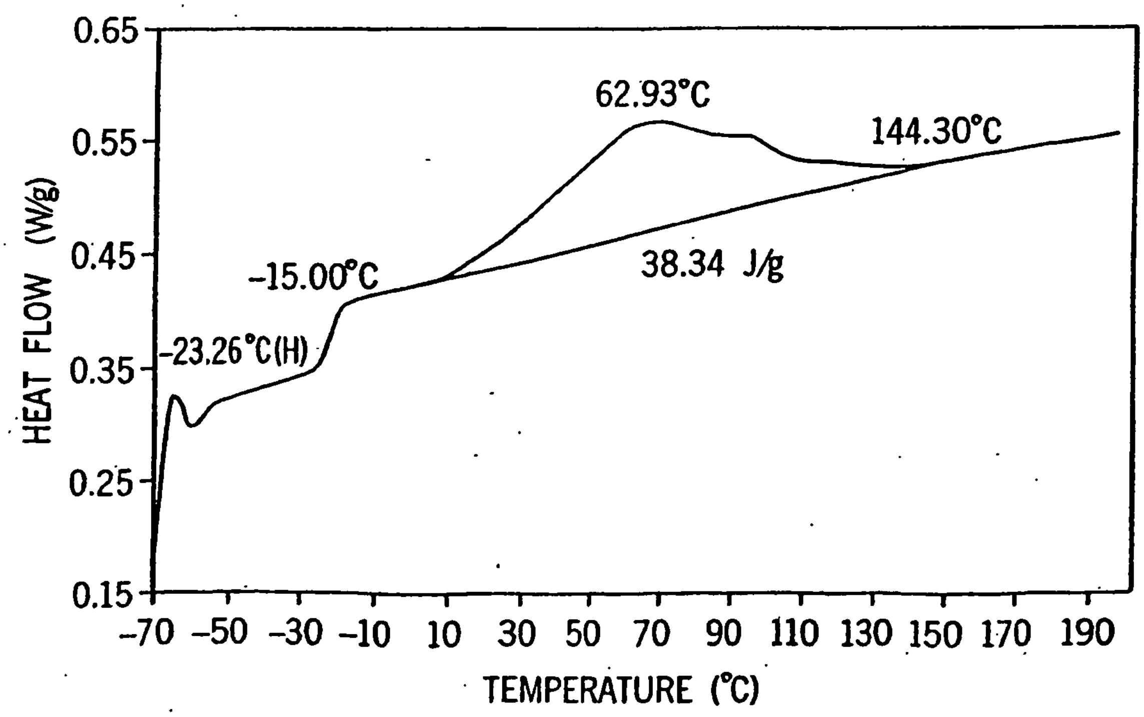
0.65
0.55
0.45
0.35
0.25
0.15
HEAT FLOW (W/g)
62.93°C
144.30°C
-15.00°C
38.34 J/g
-23.26°C(H)
-70 -50 -30 -10 10 30 50 70 90 110 130 150 170 190
TEMPERATURE (°C)

FIG. 3

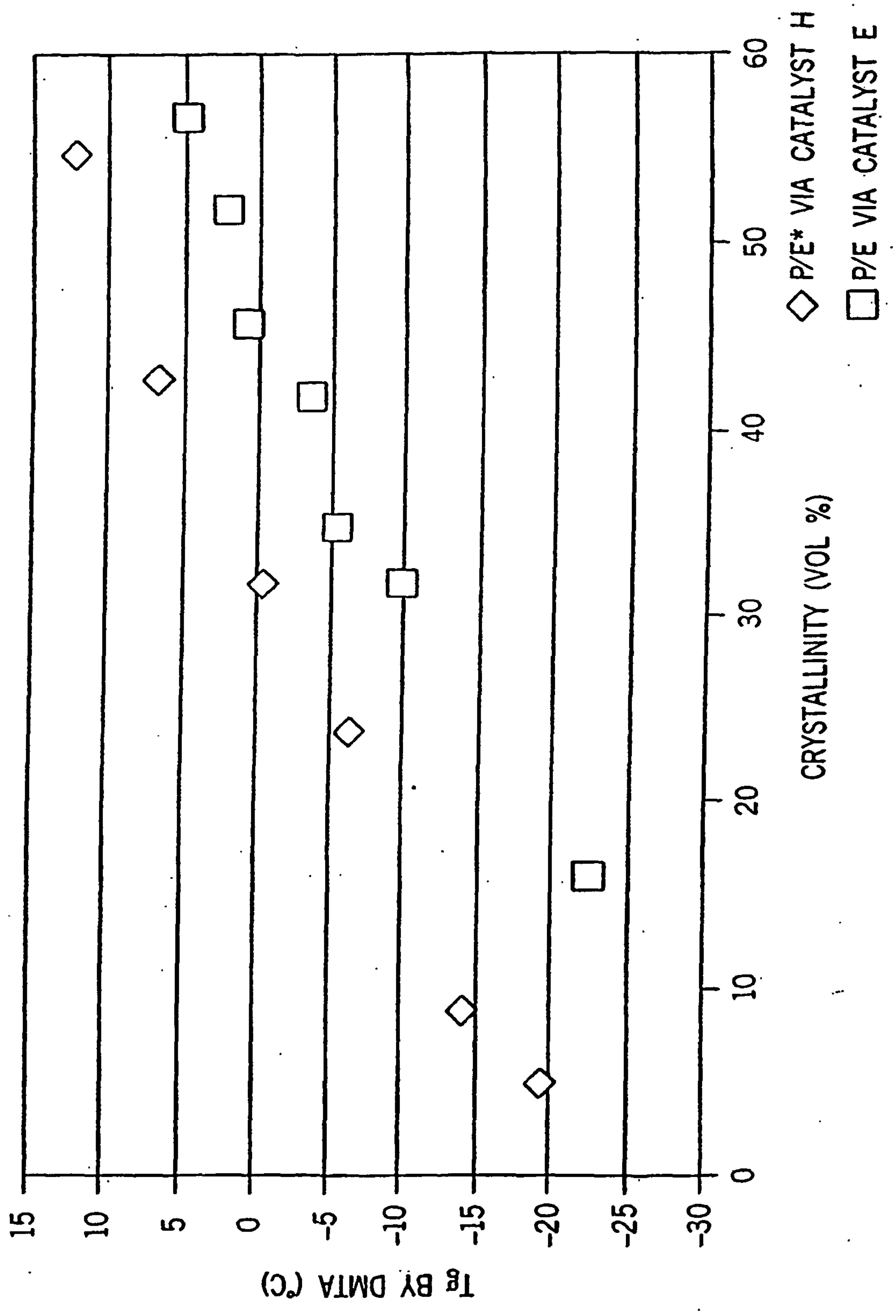
Tg BY DMTA (°C)
15
10
5
0
-5
-10
-15
-20
-25
-30
0
10
20
30
40
50
60
CRYSTALLINITY (VOL %)
P/E* VIA CATALYST H
P/E VIA CATALYST E

FIG. 4

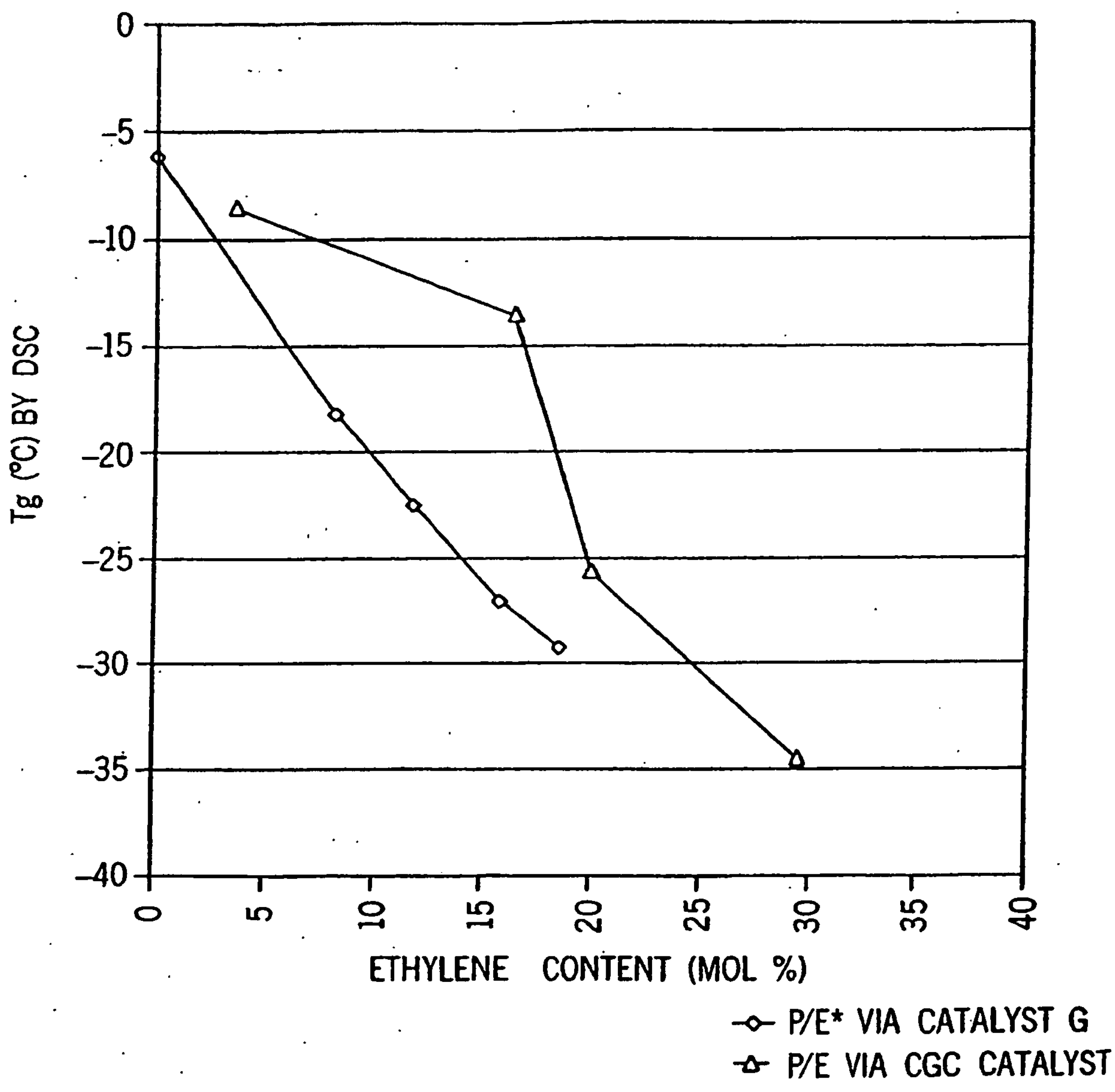

0
-5
-10
-15
-20
-25
-30
-35
-40
Tg (°C) BY DSC
0
5
10
15
20
25
30
35
40
ETHYLENE CONTENT (MOL %)
P/E* VIA CATALYST G
P/E VIA CGC CATALYST

FIG. 5

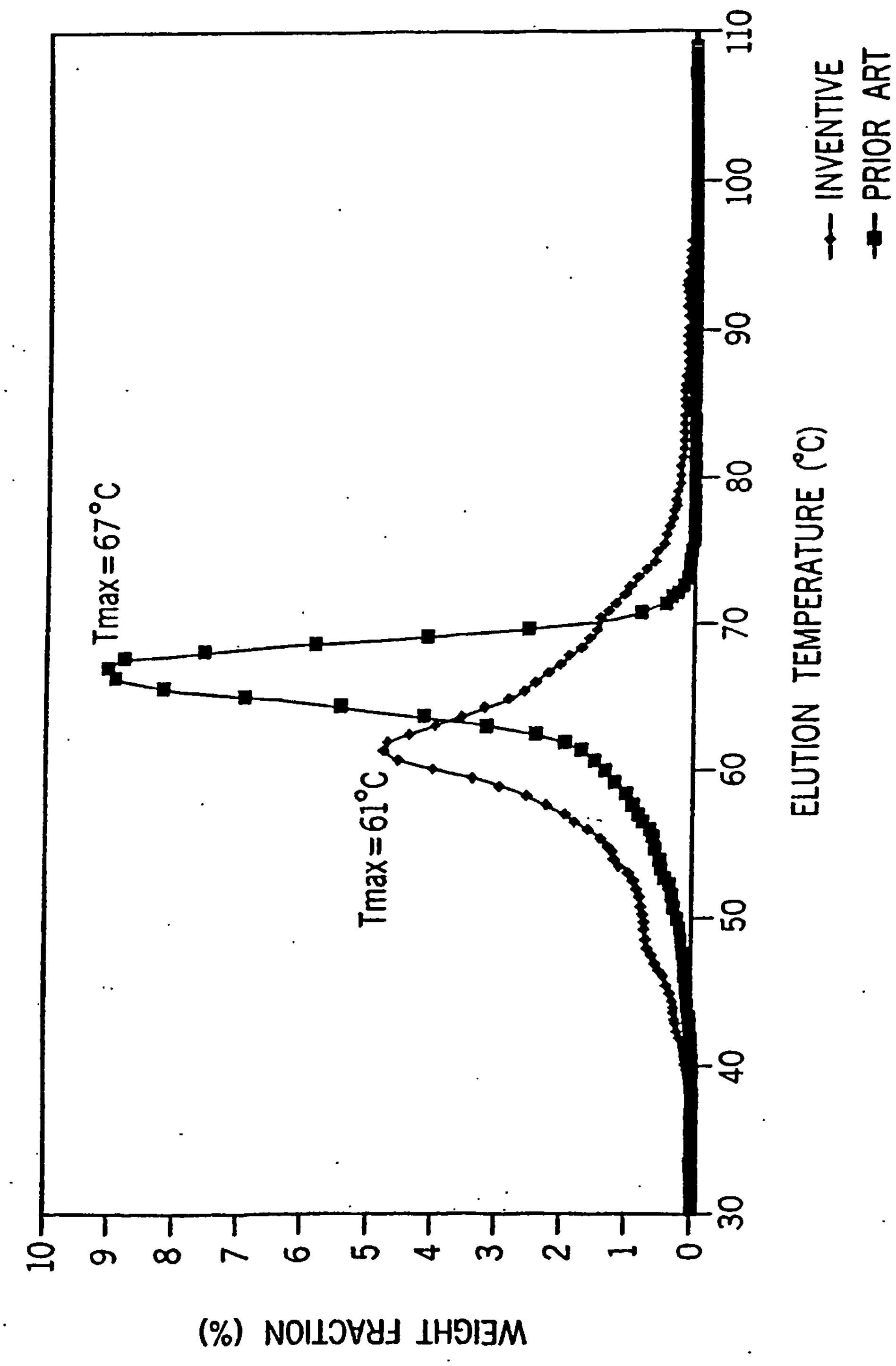
Tmax=67°C
Tmax=61°C
WEIGHT FRACTION (%)
0
1
2
3
4
5
6
7
8
9
10
30
40
50
60
70
80
90
100
110
ELUTION TEMPERATURE (°C)
INVENTIVE
PRIOR ART

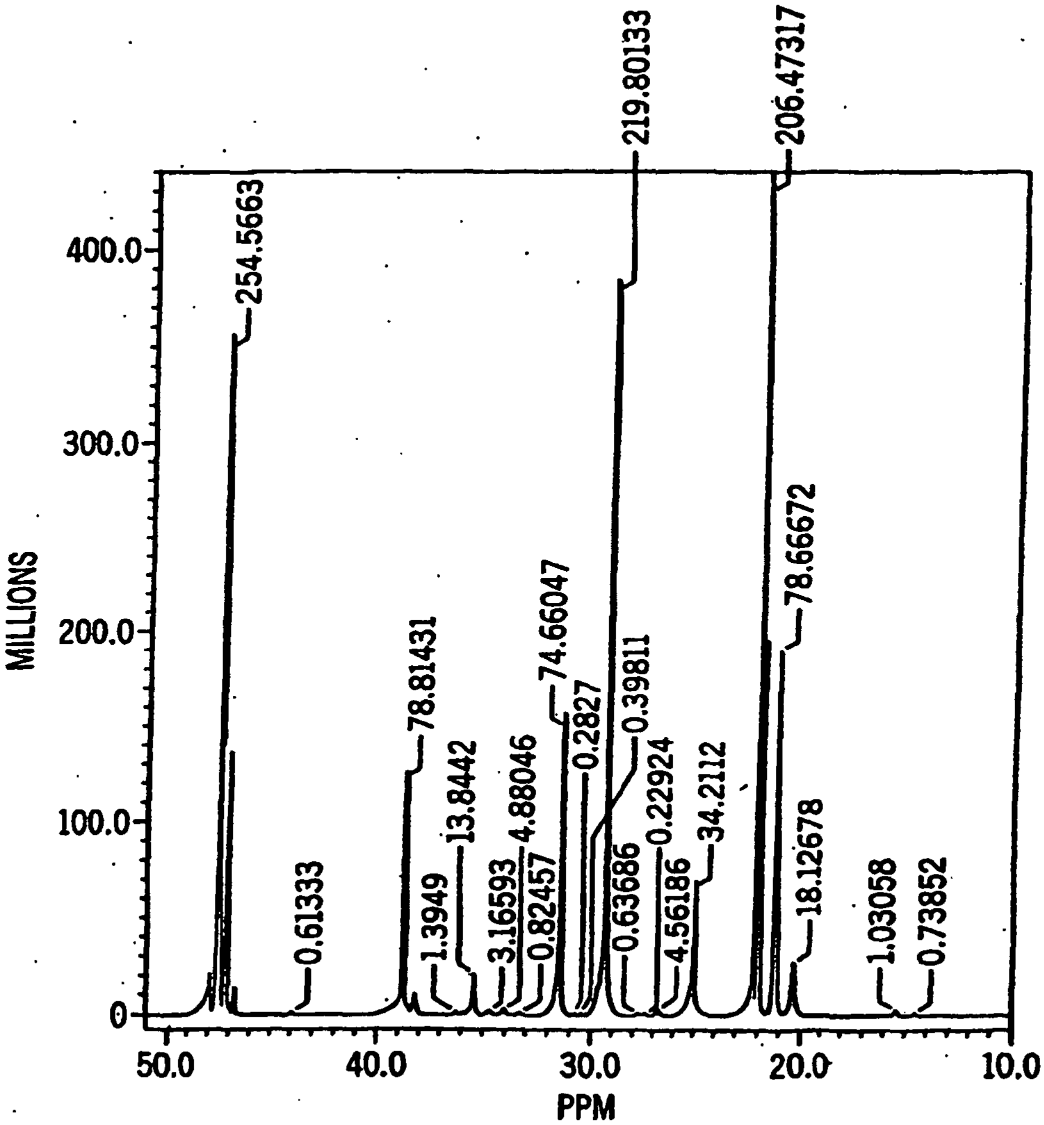

254.5663
0.61333
78.81431
1.3949
13.8442
3.16593
4.88046
0.82457
74.66047
0.2827
219.80133
0.39811
0.63686
0.22924
4.56186
34.2112
206.47317
78.66672
18.12678
1.03058
0.73852
400.0
300.0
200.0
100.0
0
MILLIONS
50.0
40.0
30.0
20.0
10.0
PPM


FIG.6

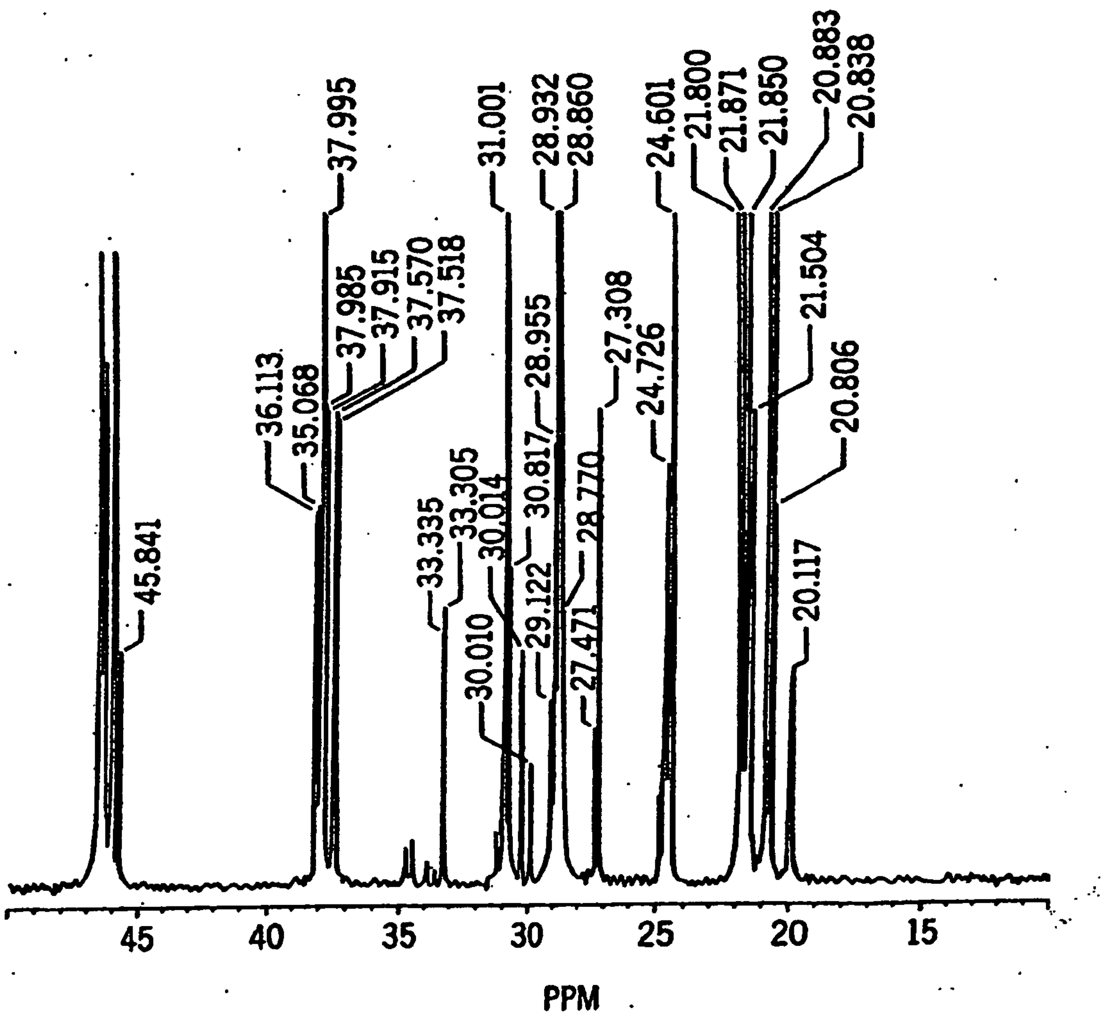
45.841
36.113
35.068
37.995
37.985
37.915
37.570
37.518
33.335
33.305
30.014
30.010
31.001
30.817
29.122
28.932
28.860
28.955
28.770
27.471
27.308
24.726
24.601
21.800
21.871
21.850
21.504
20.883
20.838
20.806
20.117
45
40
35
30
25
20
15
PPM

FIG. 7

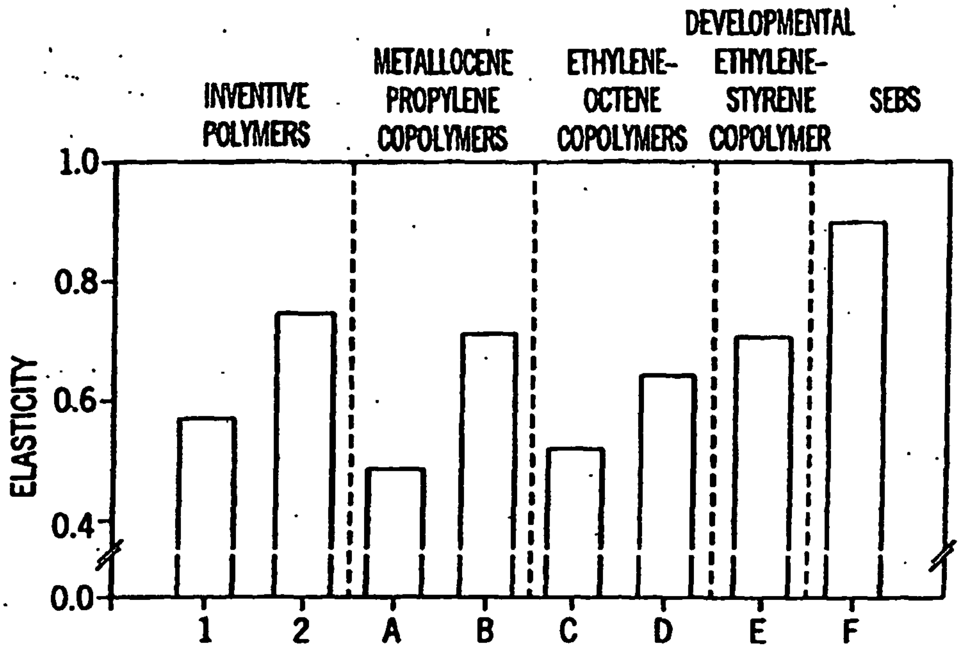
INVENTIVE POLYMERS
METALLOCENE PROPYLENE COPOLYMERS
ETHYLENE-OCTENE COPOLYMERS
DEVELOPMENTAL ETHYLENE-STYRENE COPOLYMER
SEBS
ELASTICITY
1.0
0.8
0.6
0.4
0.0
1
2
A
B
C
D
E
F

FIG. 8

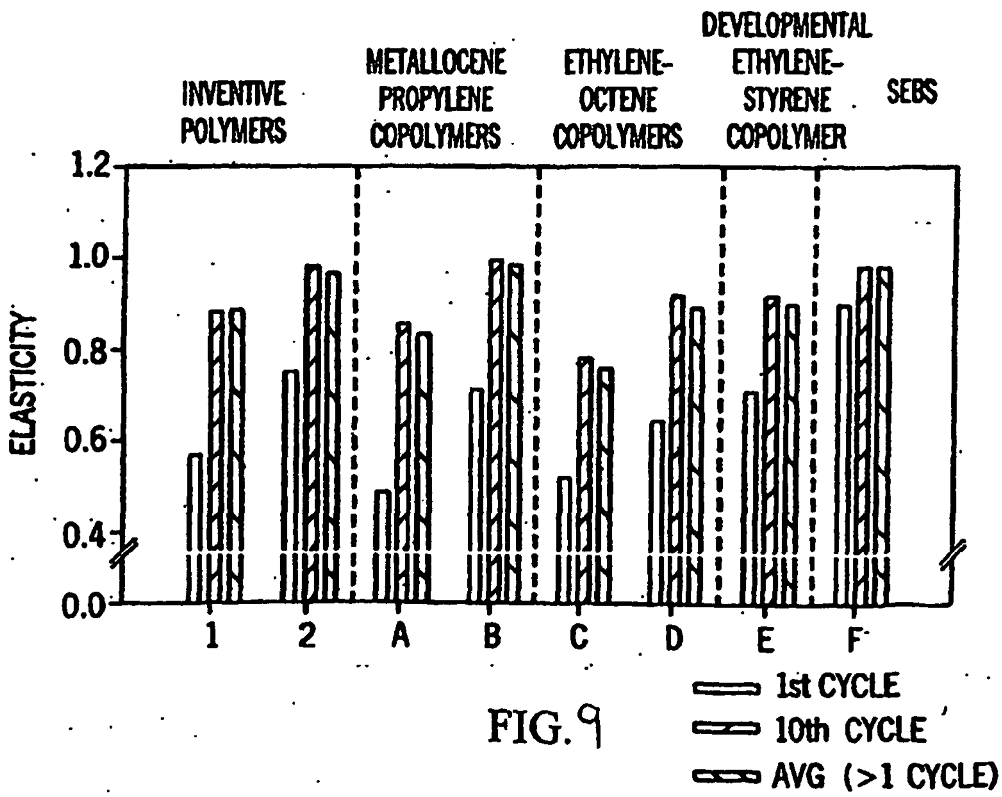
INVENTIVE POLYMERS
METALLOCENE PROPYLENE COPOLYMERS
ETHYLENE-OCTENE COPOLYMERS
DEVELOPMENTAL ETHYLENE-STYRENE COPOLYMER
SEBS
ELASTICITY
1.2
1.0
0.8
0.6
0.4
0.0
1
2
A
B
C
D
E
F
1st CYCLE
10th CYCLE
AVG (>1 CYCLE)

FIG. 9

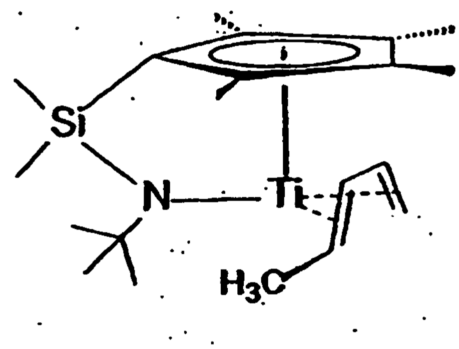

FIG. 10A

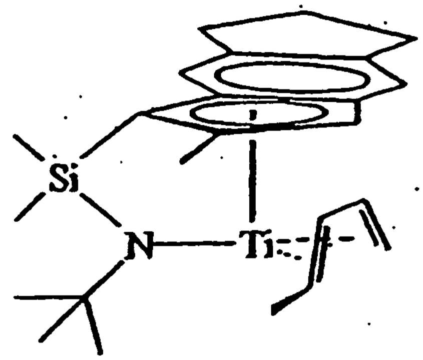

FIG. 10B

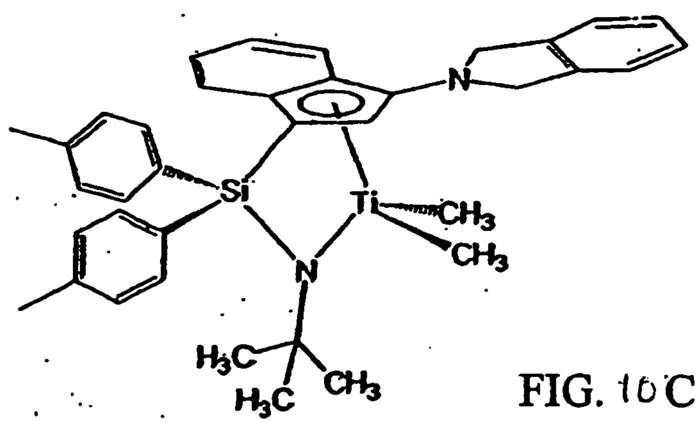

FIG. 10C

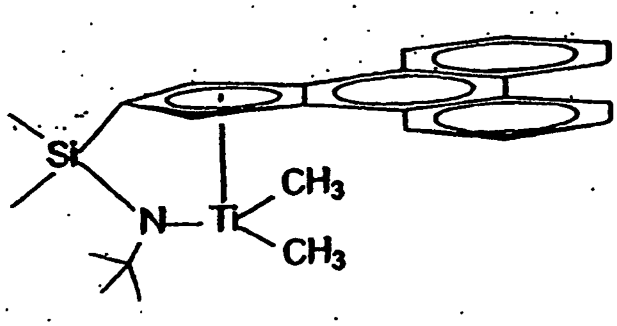

FIG. 10D

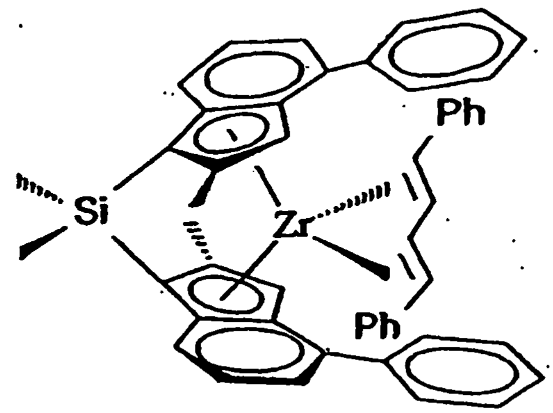

FIG. 10E

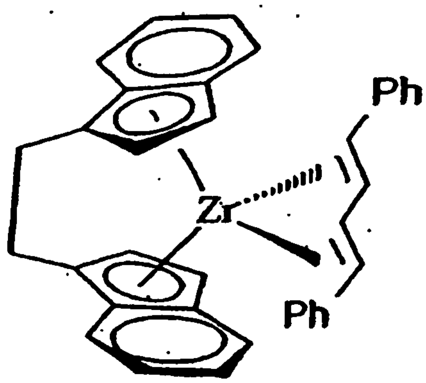

FIG. 10F

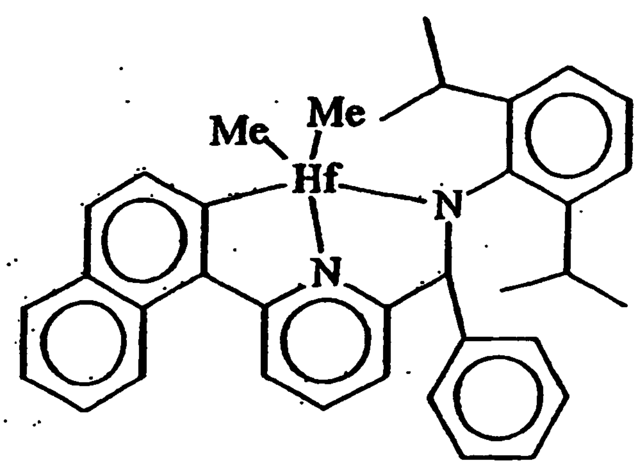

FIG. 10G

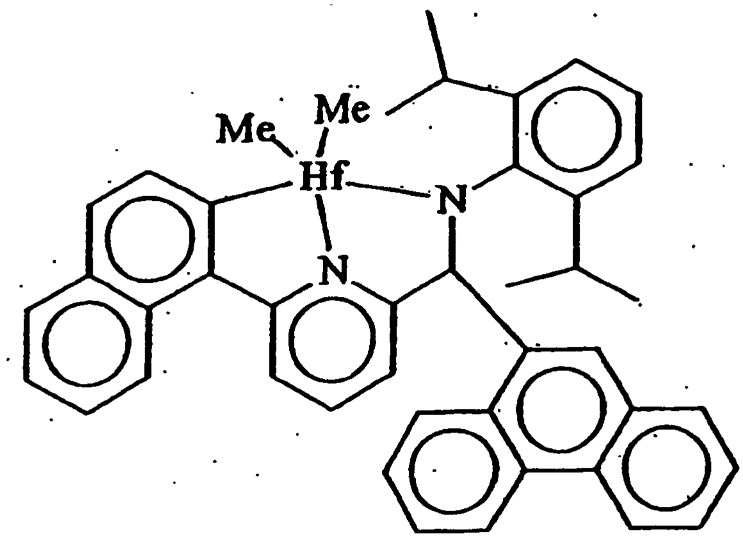

FIG. 10H

FIG. 10I

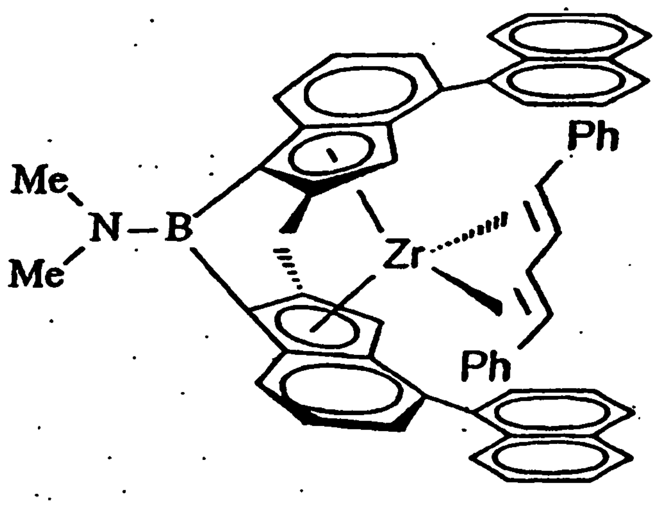

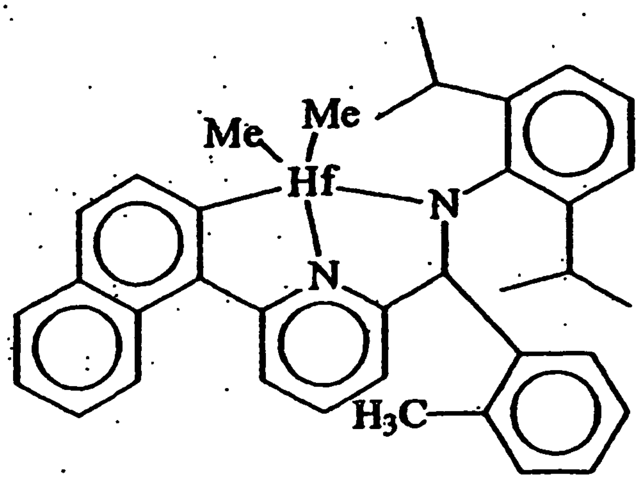

FIG. 10J

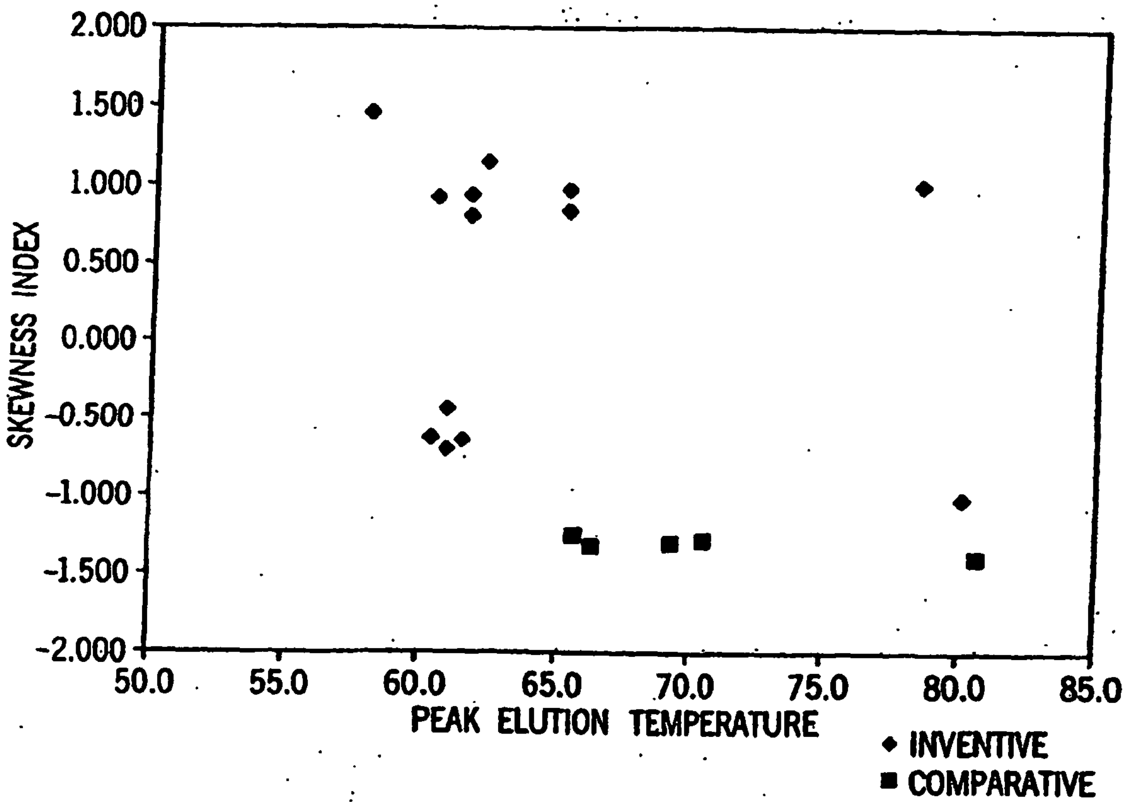
2.000
1.500
1.000
0.500
0.000
-0.500
-1.000
-1.500
-2.000
SKEWNESS INDEX
50.0
55.0
60.0
65.0
70.0
75.0
80.0
85.0
PEAK ELUTION TEMPERATURE
◆ INVENTIVE
■ COMPARATIVE

FIG. 11

FIG. 12

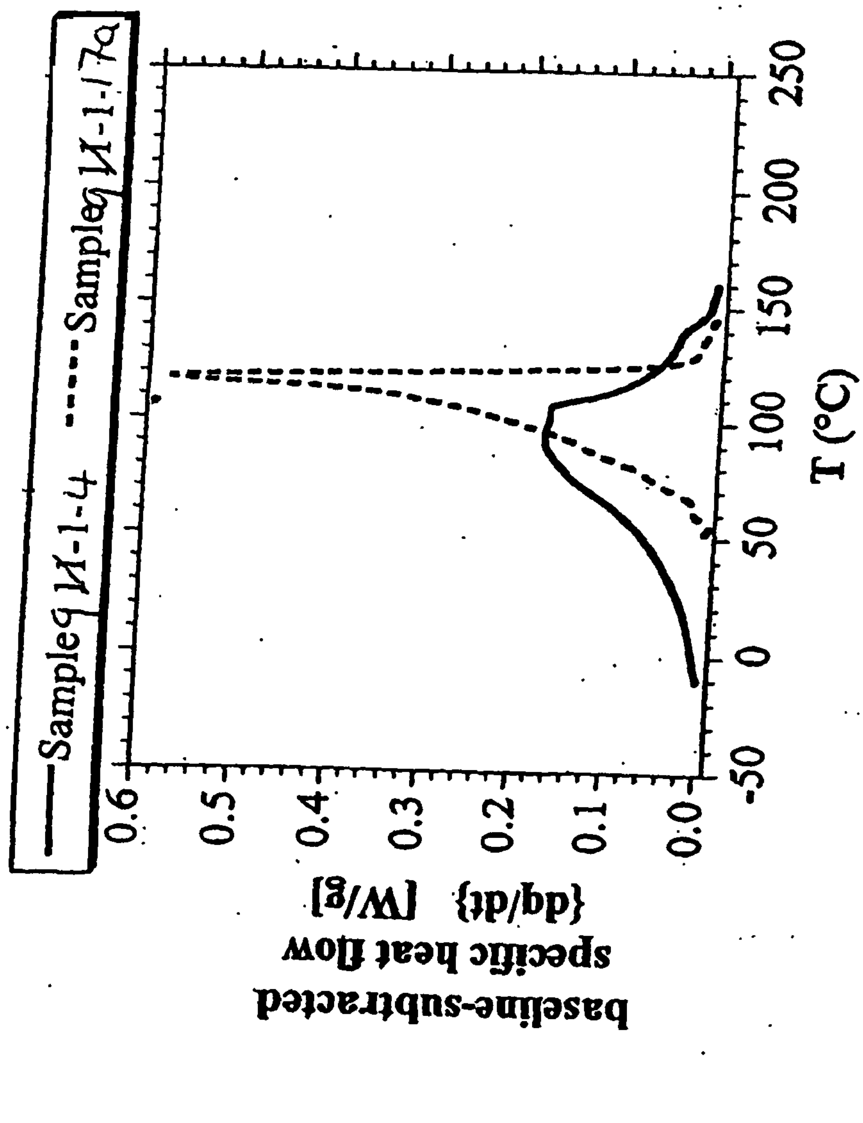
baseline-subtracted specific heat flow {dq/dt} [W/g]
T (°C)
0.6
0.5
0.4
0.3
0.2
0.1
0.0
-50
0
50
100
150
200
250

FIG. 13

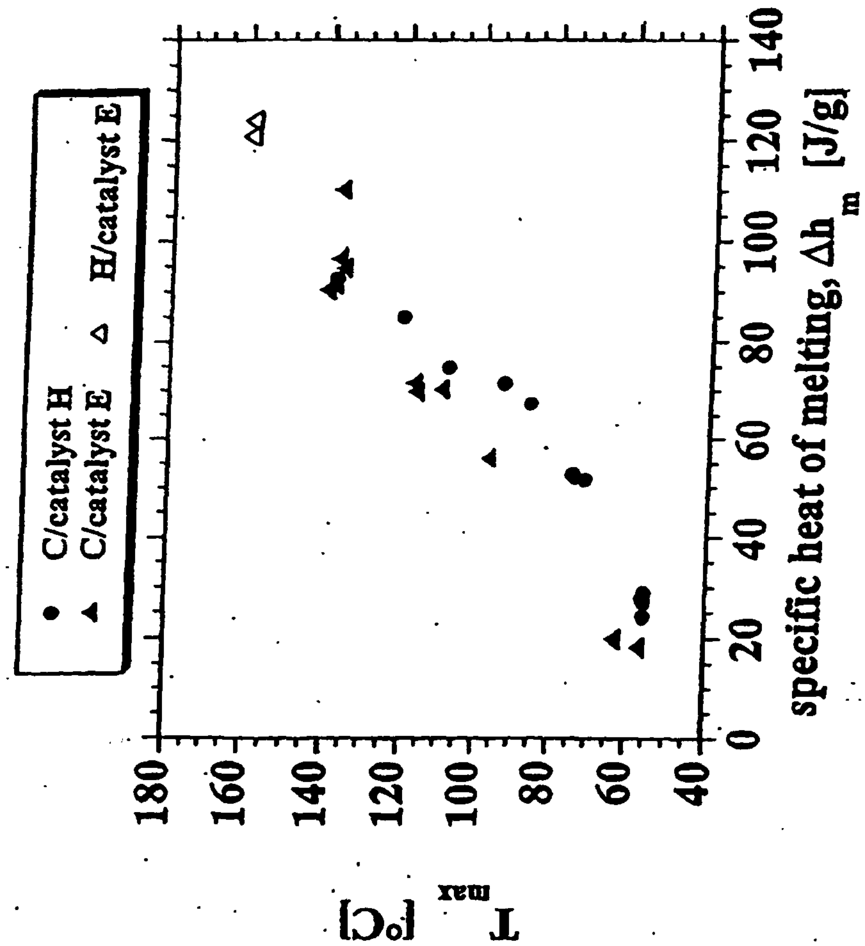
C/catalyst H
C/catalyst E
H/catalyst E
specific heat of melting, Δh_m [J/g]
T_max [°C]

FIG. 14

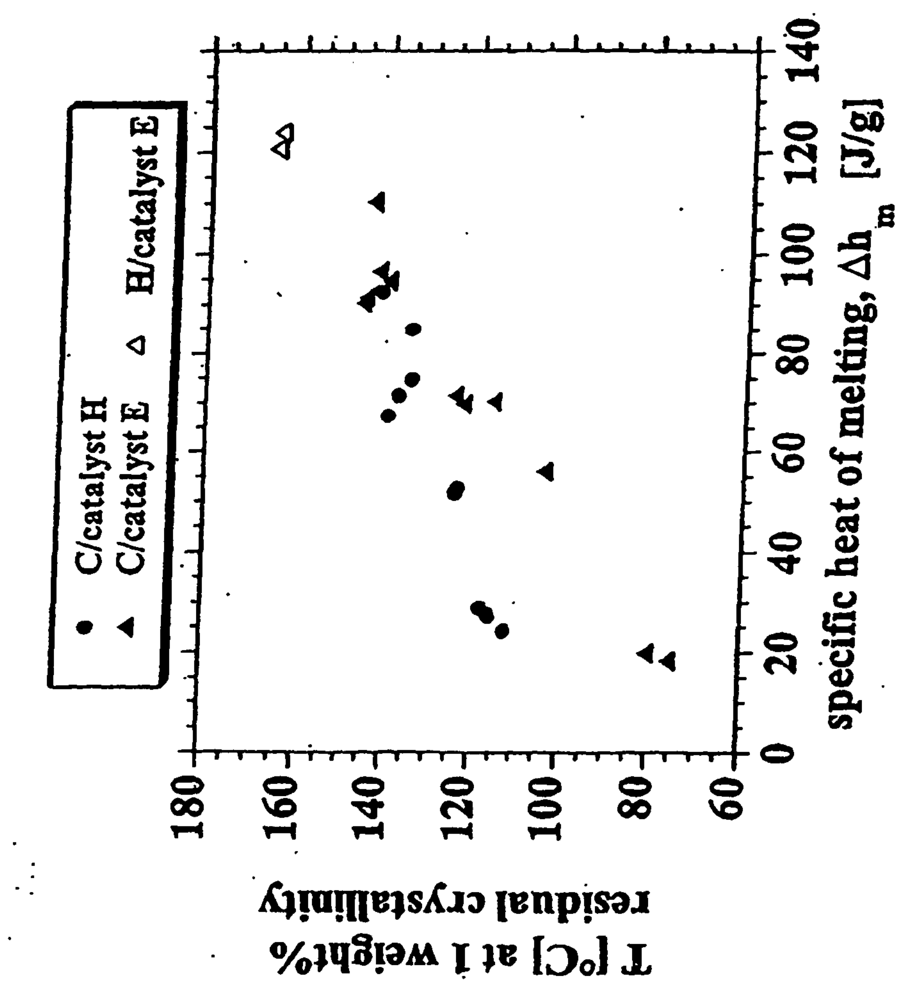
C/catalyst H
C/catalyst E
H/catalyst E
specific heat of melting, Δh_m [J/g]
T [°C] at 1 weight% residual crystallinity
0 20 40 60 80 100 120 140
180 160 140 120 100 80 60

FIG. 15

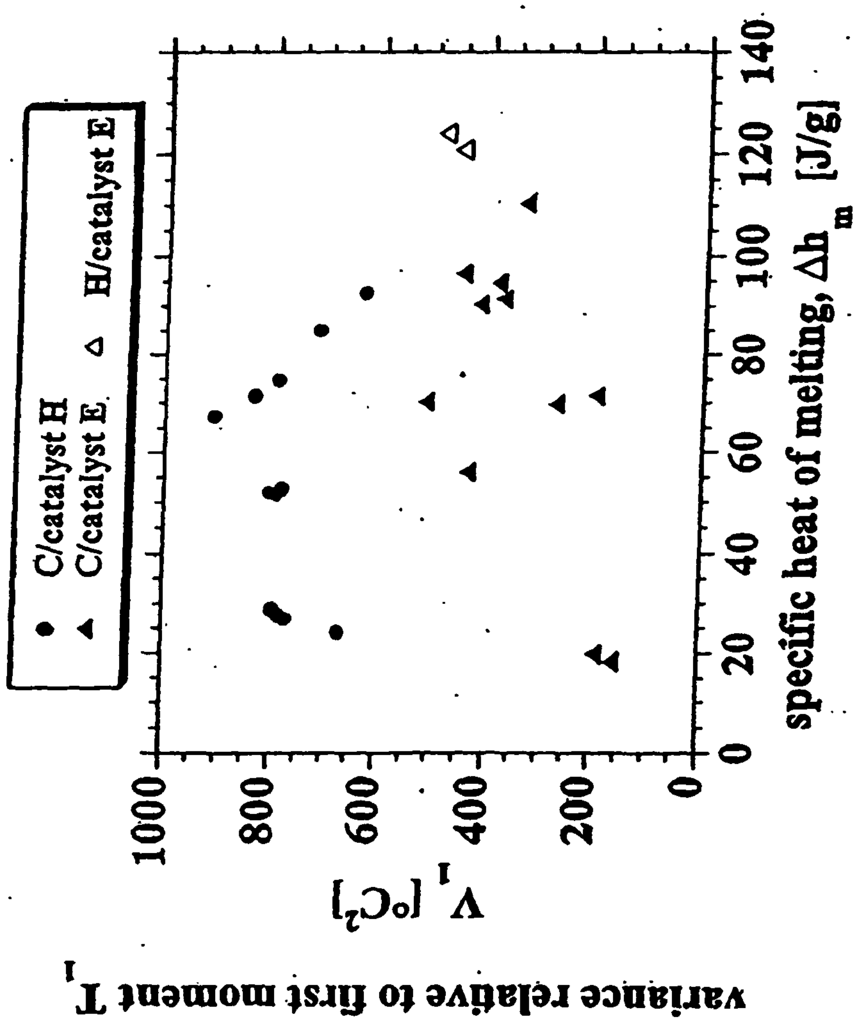
C/catalyst H
C/catalyst E
H/catalyst E
specific heat of melting, Δh_m [J/g]
0
20
40
60
80
100
120
140
variance relative to first moment T_1
V_1 [°C^2]
0
200
400
600
800
1000

FIG. 16

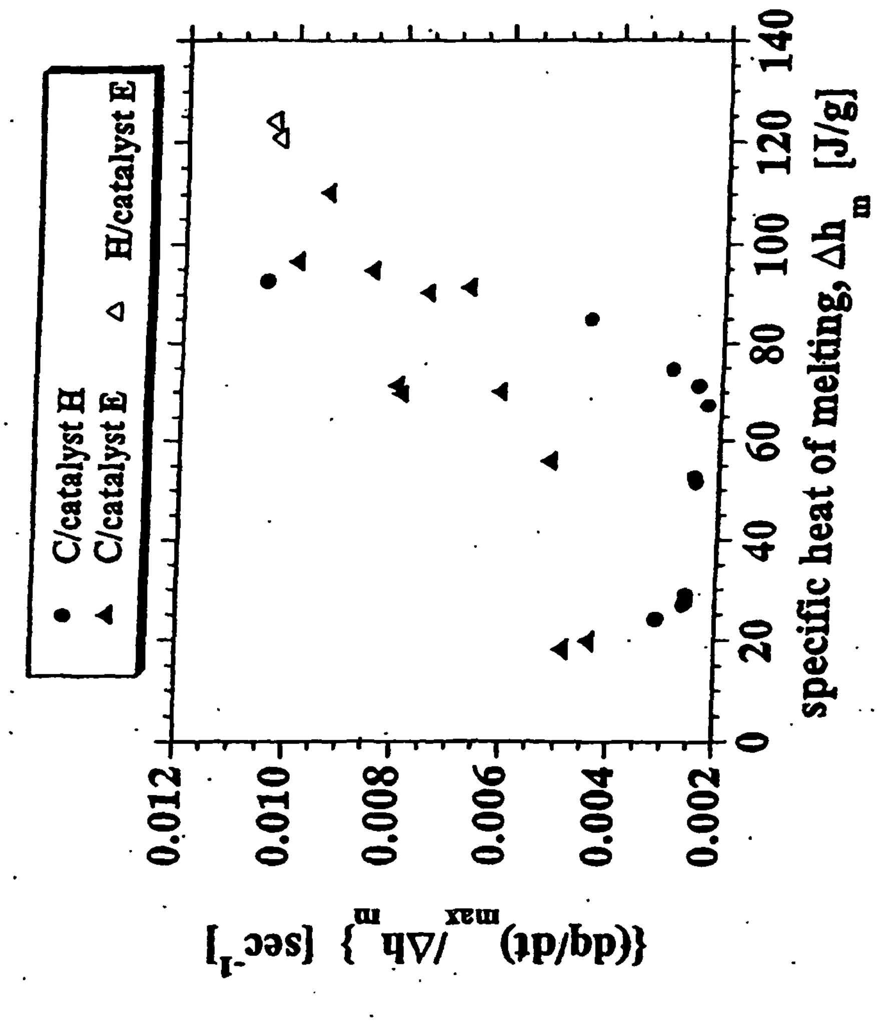

C/catalyst H
C/catalyst E
H/catalyst E
0.012
0.010
0.008
0.006
0.004
0.002
{(dq/dt)max/Δhm} [sec-1]
0
20
40
60
80
100
120
140
specific heat of melting, Δhm [J/g]

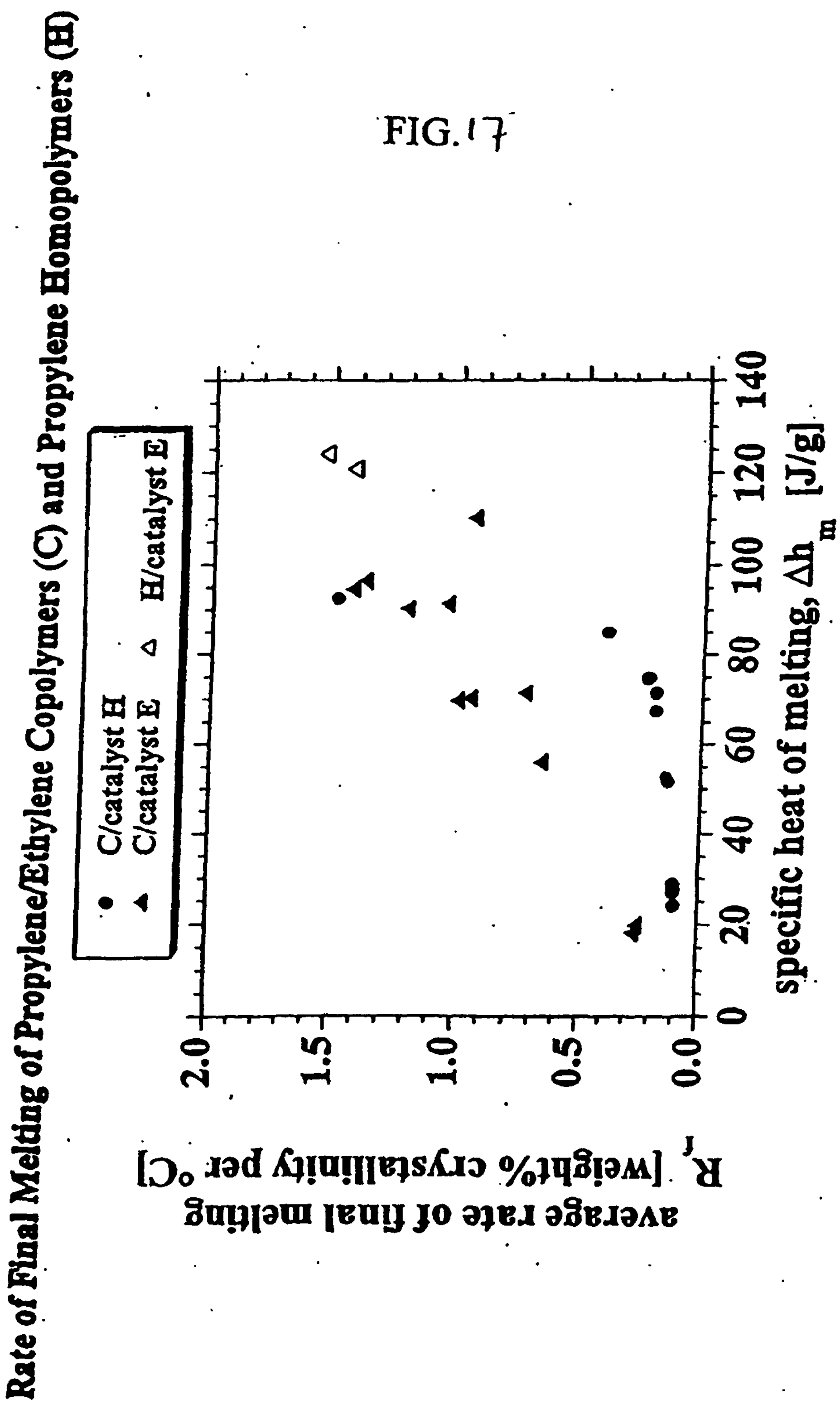
Rate of Final Melting of Propylene/Ethylene Copolymers (C) and Propylene Homopolymers (H)
C/catalyst H
C/catalyst E
H/catalyst E
average rate of final melting
$R_f$ [weight% crystallinity per °C]
2.0
1.5
1.0
0.5
0.0
0
20
40
60
80
100
120
140
specific heat of melting, $\Delta h_m$ [J/g]

FIG. 17

Figure 18

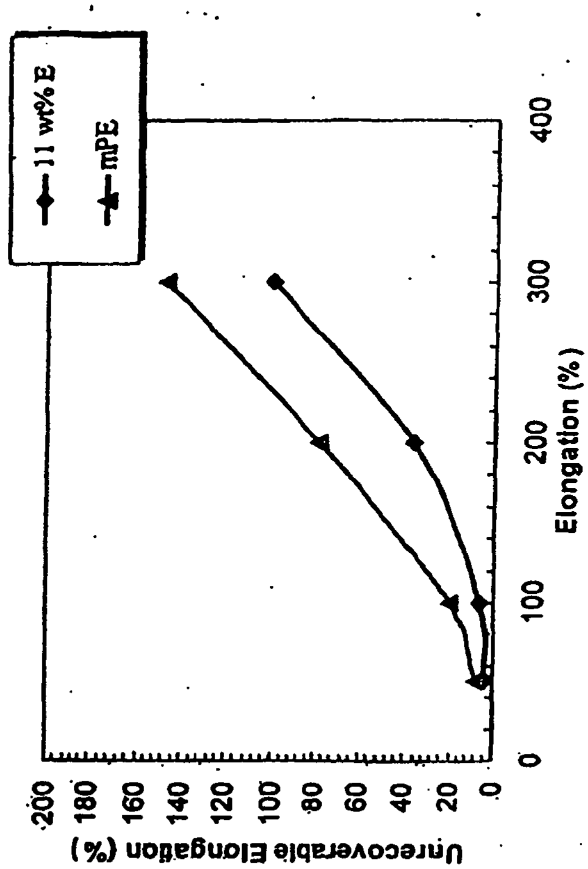
11 wt% E
mPE
Unrecoverable Elongation (%)
0
20
40
60
80
100
120
140
160
180
200
Elongation (%)
0
100
200
300
400

Figure 15

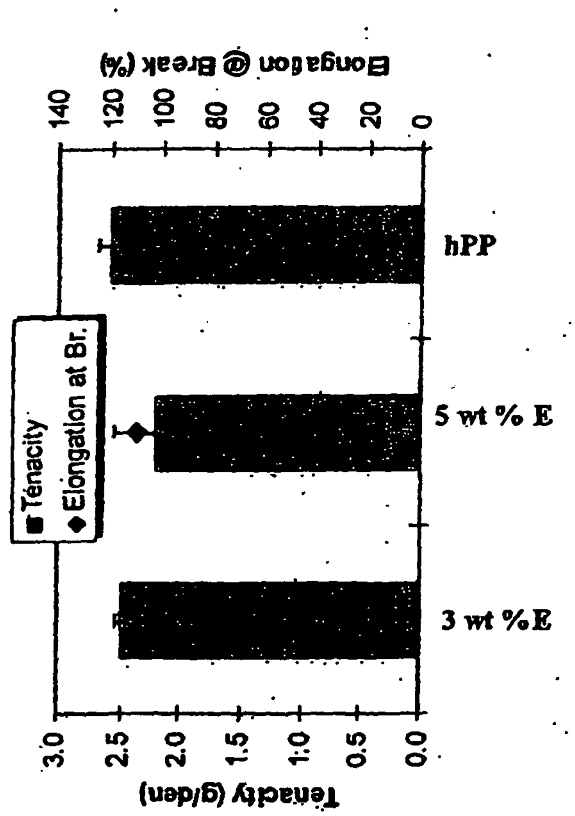
Tenacity
Elongation at Br.
Tenacity (g/den)
Elongation @ Break (%)
3.0
2.5
2.0
1.5
1.0
0.5
0.0
140
120
100
80
60
40
20
0
hPP
5 wt % E
3 wt %E

Figure 20

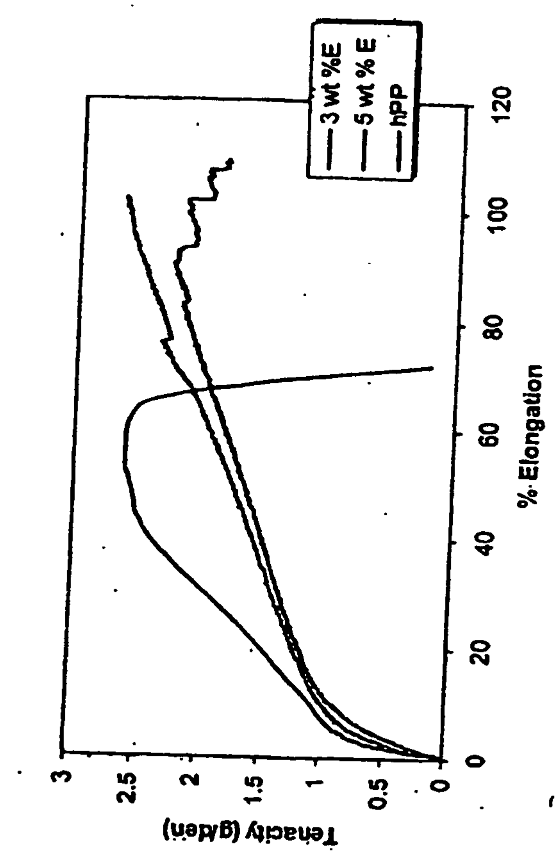

Tenacity (g/den)
3
2.5
2
1.5
1
0.5
0
0
20
40
60
80
100
120
% Elongation
3 wt %E
5 wt % E
hPP

FIG. 21